# EUROPEAN PATENT APPLICATION

(11) **EP 4 539 436 A1**
(43) Date of publication of application: **16.04.2025**
(21) Application number: 23834694.4
(22) Date of filing: 29.06.2023
(51) Int. Cl.: H04L 67/63

(54) **METHOD FOR RENDERING XR OBJECT, AND COMMUNICATION APPARATUS AND SYSTEM**

(30) Priority: 06.07.2022 CN 202210789069; 09.08.2022 CN 202210952860
(71) Applicant: Huawei Technologies Co., Ltd., Shenzhen, Guangdong 518129 (CN)
(72) Inventor: SUN, Zhao, Shenzhen, Guangdong 518129 (CN); LI, Mu, Shenzhen, Guangdong 518129 (CN)
(74) Representative: Gill Jennings & Every LLP
(86) International application number: PCT/CN2023/103528
(87) International publication number: WO 2024/007926

(57) **Abstract**

This application provides a resource selection method and apparatus. The method includes: A first terminal device performs listen before talk LBT; and the first terminal device sends sidelink information in a first time unit. The first time unit includes a time unit in which the first terminal device successfully performs LBT or a next time unit of a time unit in which the first terminal device successfully performs LBT. According to the technical solutions provided in this application, a terminal device determines, based on an LBT result, a resource for transmitting sidelink information. This helps ensure fairness of accessing a channel by various terminal devices.

## Description

This application claims priorities to Chinese Patent Application No. 202210789069.1, filed with the China National Intellectual Property Administration on July 6, 2022 and entitled "XR OBJECT RENDERING METHOD AND COMMUNICATION APPARATUS AND SYSTEM", and to Chinese Patent Application No. 202210952860.X, filed with the China National Intellectual Property Administration on August 9, 2022 and entitled "XR OBJECT RENDERING METHOD AND COMMUNICATION APPARATUS AND SYSTEM", both of which are incorporated herein by reference in their entireties.

### TECHNICAL FIELD

This application relates to the field of computer technologies, and more specifically, to an XR object rendering method and a communication apparatus and system.

### BACKGROUND

Extended reality (extended reality, XR) means that reality and virtuality are combined through computers to create a virtual environment for human-machine interaction, to bring an "immersion sense" of seamless transition between the virtual world and the real world to experiencers.

An XR call is used as an example. In the XR call, an XR technology is integrated into a conventional real-time audio/video call, to provide brand new audio/video call experience, for example, including but not limited to: remote assistance, remote loss assessment, remote shopping, telemedicine, and a remote immersive conference. A complex three-dimensional (three-dimensional, 3D) scene and object related to an XR call service have very high requirements on rendering computing power. Therefore, how to provide a rendering manner to meet requirements of a 3D scene and object as much as possible is a problem worth considering.

### SUMMARY

Embodiments of this application provide an XR object rendering method and a communication apparatus and system, to meet requirements of a 3D scene and object as much as possible by allocating a rendering task.

According to a first aspect, an XR object rendering method is provided. The method may be performed by a terminal device, or may be performed by a component (for example, a chip or a circuit) of a terminal device. This is not limited herein. For ease of description, the following uses an example in which the terminal device performs the method for description.

The method may include: The terminal device determines or accepts a rendering division, where the rendering division means that a portion of to-be-rendered XR objects in an XR call of the terminal device are to be rendered by a network-side rendering device, and the other portion of to-be-rendered XR objects in the XR call of the terminal device are to be rendered by the terminal device; and the terminal device renders the to-be-rendered XR object that is to be rendered by the terminal device in the XR call, and sends, to the network-side rendering device, the to-be-rendered XR object that is to be rendered by the network-side rendering device in the XR call.

Based on the foregoing technical solution, the terminal device may determine or accept the rendering division for a to-be-rendered XR object in the XR call, that is, determine specific to-be-rendered XR objects that the terminal device is responsible for rendering and specific to-be-rendered XR objects that the network-side rendering device is responsible for rendering. In this way, for the to-be-rendered XR object in the XR call, a rendering task can be dynamically allocated between the terminal device and the network-side rendering device, to implement effective collaboration and on-demand rendering task allocation between the terminal device and the network-side rendering device.

With reference to the first aspect, in some implementations of the first aspect, that the terminal device accepts a rendering division includes: The terminal device receives division indication information from a network-side control device, where the division indication information indicates that a portion of to-be-rendered XR objects in the XR call of the terminal device are to be rendered by the network-side rendering device, and/or the other portion of to-be-rendered XR objects in the XR call of the terminal device are to be rendered by the terminal device.

Based on the foregoing technical solution, rendering negotiation may be performed between the network device and the terminal device. To be specific, the network-side control device may determine the rendering division for a to-be-rendered XR object in the XR call, that is, determine specific to-be-rendered XR objects that the terminal device is responsible for rendering and specific to-be-rendered XR objects that the network-side rendering device is responsible for rendering. In this way, for the to-be-rendered XR object in the XR call, a rendering task can be dynamically allocated between the terminal device and the network-side rendering device by using the network-side control device, to implement effective collaboration and on-demand rendering task allocation between the terminal device and the network-side rendering device.

With reference to the first aspect, in some implementations of the first aspect, the method further includes: The terminal device sends processing capability information of the terminal device to the network-side control device.

Based on the foregoing technical solution, the terminal device may provide the processing capability information of the terminal device for the network-side control device, so that the network-side control device determines whether split rendering needs to be performed on the to-be-rendered XR object in the XR call. In this way, the network-side control device can determine, based on an actual processing capability of the terminal device, whether split rendering is to be performed on the to-be-rendered XR object in the XR call. This conforms to the processing capability of the terminal device.

With reference to the first aspect, in some implementations of the first aspect, the terminal device sends a registration message or a session call message to a network-side access device, to trigger the network-side access device to send the processing capability information of the terminal device to the network-side control device, where the registration message or the session call message includes the processing capability information of the terminal device.

Based on the foregoing technical solution, the terminal device may send the processing capability information of the terminal device to the network-side control device in a registration procedure or a session call procedure.

With reference to the first aspect, in some implementations of the first aspect, the processing capability information of the terminal device includes available rendering computing power of the terminal device; or the processing capability information of the terminal device includes available rendering computing power of the terminal device and a rendering division manner supported by the terminal device.

With reference to the first aspect, in some implementations of the first aspect, the rendering division manner supported by the terminal device includes at least one of the following: division by layer and division by type.

With reference to the first aspect, in some implementations of the first aspect, the available rendering computing power of the terminal device is determined by the terminal device based on a configuration of a computing resource of the terminal device, or the available rendering computing power of the terminal device is determined by the terminal device based on a remaining computing resource or an available computing resource of the terminal device.

With reference to the first aspect, in some implementations of the first aspect, the method further includes: The terminal device sends processing requirement information of the XR call to the network-side control device.

Based on the foregoing technical solution, the terminal device may provide the processing requirement information of the XR call for the network-side control device, so that the network-side control device determines the rendering division based on the processing requirement information of the XR call. In this way, the rendering division determined by the network-side control device can meet a processing requirement of the XR call.

With reference to the first aspect, in some implementations of the first aspect, the processing requirement information of the XR call includes at least one of the following: information about a to-be-rendered XR object in the XR call, video resolution of the XR call, and a video frame rate of the XR call.

With reference to the first aspect, in some implementations of the first aspect, the terminal device determines the rendering division based on at least one of the following: processing capability information of the terminal device, processing capability information of the network-side rendering device, and processing requirement information of the XR call.

With reference to the first aspect, in some implementations of the first aspect, the method further includes: The terminal device receives the processing capability information of the network-side rendering device from the network-side control device.

With reference to the first aspect, in some implementations of the first aspect, the processing capability information of the network-side rendering device includes available rendering computing power of the network-side rendering device; or the processing capability information of the network-side rendering device includes available rendering computing power of the network-side rendering device and a rendering division manner supported by the network-side rendering device.

With reference to the first aspect, in some implementations of the first aspect, the available rendering computing power of the network-side rendering device is determined based on a configuration of a computing resource of the network-side rendering device, or the available rendering computing power of the network-side rendering device is determined based on a remaining computing resource or an available computing resource of the network-side rendering device.

With reference to the first aspect, in some implementations of the first aspect, the rendering division manner includes at least one of the following: division by layer and division by type.

With reference to the first aspect, in some implementations of the first aspect, the method further includes: The terminal device sends division acknowledgement request information to the network-side control device, where the division acknowledgement request information is used to request to accept the rendering division, and the division acknowledgement request information includes information used to determine the to-be-rendered XR object that is to be rendered by the network-side rendering device in the to-be-rendered XR objects in the XR call.

Based on the foregoing technical solution, after determining the to-be-rendered XR object that needs to be rendered by the network-side rendering device in the to-be-rendered XR objects in the XR call, the terminal device may perform rendering negotiation with the network device by using the division acknowledgement request information, to implement effective collaboration and on-demand rendering task allocation between the terminal device and the network-side rendering device.

With reference to the first aspect, in some implementations of the first aspect, the method further includes: The terminal device receives division acknowledgement response information from the network-side control device, where the division acknowledgement response information indicates that the rendering division is accepted.

Based on the foregoing technical solution, when determining, based on the division acknowledgement response information, that the network-side rendering device is to render the to-be-rendered XR object that is to be rendered by the network-side rendering device, the terminal device may send the to-be-rendered XR object that is to be rendered by the network-side rendering device to the network-side rendering device for rendering.

With reference to the first aspect, in some implementations of the first aspect, the method further includes: The terminal device obtains network-side service indication information, where the network-side service indication information indicates that the network-side rendering device is capable of providing an XR object rendering service (that is, a capability of rendering the to-be-rendered XR object in the XR call).

With reference to the first aspect, in some implementations of the first aspect, the method further includes: The terminal device sends a rendered XR object to the network-side rendering device, where the rendered XR object is obtained by the terminal device by rendering the to-be-rendered XR object that is to be rendered by the terminal device in the XR call.

Based on the foregoing technical solution, the terminal device may send, to the network-side rendering device, the rendered XR object, that is, media data (for example, a video stream) corresponding to the rendered XR object, so that the network-side rendering device merges the media data corresponding to the XR object rendered by the terminal device and media data corresponding to the XR object rendered by the network-side rendering device, to provide complete media data (for example, a complete video stream) for the terminal device in the XR call.

With reference to the first aspect, in some implementations of the first aspect, the division indication information includes information about the to-be-rendered XR object that is to be rendered by the terminal device in the XR call, and before the terminal device sends, to the network-side rendering device, the to-be-rendered XR object that is to be rendered by the network-side rendering device in the XR call, the method further includes: The terminal device determines, based on the to-be-rendered XR objects in the XR call and the information about the to-be-rendered XR object that is to be rendered by the terminal device in the XR call, the to-be-rendered XR object that is to be rendered by the network-side rendering device in the XR call.

Based on the foregoing technical solution, the terminal device may determine, based on the to-be-rendered XR objects in the XR call and the to-be-rendered XR object that needs to be rendered by the terminal device, the to-be-rendered XR object that needs to be rendered by the network-side rendering device, to send, to the network-side rendering device, related data of the to-be-rendered XR object that the network-side rendering device is responsible for rendering.

With reference to the first aspect, in some implementations of the first aspect, the division indication information includes the information about the to-be-rendered XR object that is to be rendered by the network-side rendering device in the XR call, and before the terminal device renders the to-be-rendered XR object that is to be rendered by the terminal device in the XR call, the method further includes: The terminal device determines, based on the to-be-rendered XR objects in the XR call and the information about the to-be-rendered XR object that is to be rendered by the network-side rendering device in the XR call, the to-be-rendered XR object that is to be rendered by the terminal device in the XR call.

Based on the foregoing technical solution, the terminal device may determine, based on the to-be-rendered XR objects in the XR call and the to-be-rendered XR object that needs to be rendered by the network-side rendering device, the to-be-rendered XR object that needs to be rendered by the terminal device, to render the to-be-rendered XR object that needs to be rendered by the terminal device.

With reference to the first aspect, in some implementations of the first aspect, the division indication information includes information about the to-be-rendered XR object that is to be rendered by the terminal device in the XR call and the information about the to-be-rendered XR object that is to be rendered by the network-side rendering device in the XR call.

With reference to the first aspect, in some implementations of the first aspect, the network-side control device is an XR control plane network element, and the network-side rendering device is an XR media plane network element; or the network-side control device is an application server, and the network-side rendering device is a media resource function network element; or the network-side control device is an internet service signaling server, and the network-side rendering device is an internet service media server.

According to a second aspect, an XR object rendering method is provided. The method may be performed by a network device, or may be performed by a component (for example, a chip or a circuit) of a network device. This is not limited herein. For ease of description, the following uses an example in which a network-side control device performs the method for description.

The method may include: The network-side control device determines or accepts a rendering division, where the rendering division means that a portion of to-be-rendered objects in an XR call of a terminal device are to be rendered by a network-side rendering device, and the other portion of to-be-rendered XR objects in the XR call of the terminal device are to be rendered by the terminal device; and the network-side control device triggers the terminal device to render the XR object that is to be rendered by the terminal device in the XR call, and the network-side rendering device to render the to-be-rendered XR object that is to be rendered by the network-side rendering device in the XR call.

With reference to the second aspect, in some implementations of the second aspect, that the network-side control device triggers the terminal device to render the XR object that is to be rendered by the terminal device in the XR call, and the network-side rendering device to render the to-be-rendered XR object that is to be rendered by the network-side rendering device in the XR call includes: The network-side control device sends division indication information to the terminal device, where the division indication information indicates that a portion of to-be-rendered XR objects in the XR call of the terminal device are to be rendered by the network-side rendering device, and/or the other portion of to-be-rendered XR objects in the XR call of the terminal device are to be rendered by the terminal device.

With reference to the second aspect, in some implementations of the second aspect, the method further includes: In response to determining that a processing capability of the terminal device cannot meet a processing requirement of the XR call, the network-side control device determines that the terminal device and the network-side rendering device each render a portion of to-be-rendered XR objects in the XR call.

Optionally, the network-side control device determines (or decides) that the processing capability of the terminal device cannot meet the processing requirement of the XR call.

With reference to the second aspect, in some implementations of the second aspect, the network-side control device determines the rendering division based on at least one of the following: processing capability information of the terminal device, processing capability information of the network-side rendering device, and processing requirement information of the XR call.

With reference to the second aspect, in some implementations of the second aspect, the method further includes: The network-side control device receives the processing requirement information of the XR call from the terminal device.

With reference to the second aspect, in some implementations of the second aspect, the processing requirement information of the XR call includes at least one of the following: information about a to-be-rendered XR object in the XR call, video resolution of the XR call, and a video frame rate of the XR call.

With reference to the second aspect, in some implementations of the second aspect, the method further includes: The network-side control device receives the processing capability information of the terminal device from the terminal device.

With reference to the second aspect, in some implementations of the second aspect, the processing capability information of the terminal device includes available rendering computing power of the terminal device; or the processing capability information of the terminal device includes available rendering computing power of the terminal device and a rendering division manner supported by the terminal device.

With reference to the second aspect, in some implementations of the second aspect, the available rendering computing power of the terminal device is determined based on a configuration of a computing resource of the terminal device, or the available rendering computing power of the terminal device is determined based on a remaining computing resource or an available computing resource of the terminal device.

With reference to the second aspect, in some implementations of the second aspect, the method further includes: The network-side control device receives the processing capability information of the network-side rendering device from the network-side rendering device.

With reference to the second aspect, in some implementations of the second aspect, that the network-side control device accepts a rendering division includes: The network-side control device receives division acknowledgement request information from the terminal device, where the division acknowledgement request information is used to request to accept the rendering division, and the division acknowledgement request information includes information used to determine the to-be-rendered XR object that is to be rendered by the network-side rendering device in the to-be-rendered XR objects in the XR call; and the network-side control device accepts the rendering division based on the division acknowledgement request information.

With reference to the second aspect, in some implementations of the second aspect, that the network-side control device triggers the terminal device to render the XR object that is to be rendered by the terminal device in the XR call, and the network-side rendering device to render the to-be-rendered XR object that is to be rendered by the network-side rendering device in the XR call includes: The network-side control device sends division acknowledgement response information to the terminal device, where the division acknowledgement response information indicates that the rendering division is accepted.

With reference to the second aspect, in some implementations of the second aspect, the method further includes: The network-side control device sends the processing capability information of the network-side rendering device to the terminal device.

With reference to the second aspect, in some implementations of the second aspect, the processing capability information of the network-side rendering device includes available rendering computing power of the network-side rendering device; or the processing capability information of the network-side rendering device includes available rendering computing power of the network-side rendering device and a rendering division manner supported by the network-side rendering device.

With reference to the second aspect, in some implementations of the second aspect, the available rendering computing power of the network-side rendering device is determined based on a configuration of a computing resource of the network-side rendering device, or the available rendering computing power of the network-side rendering device is determined based on a remaining computing resource or an available computing resource of the network-side rendering device.

With reference to the second aspect, in some implementations of the second aspect, the rendering division manner includes at least one of the following: division by layer and division by type.

With reference to the second aspect, in some implementations of the second aspect, the method further includes: The network-side control device sends network-side service indication information to the terminal device, where the network-side service indication information indicates that the network-side rendering device is capable of providing an XR object rendering service.

With reference to the second aspect, in some implementations of the second aspect, the division indication information includes at least one of the following: information about the to-be-rendered XR object that is to be rendered by the terminal device in the XR call and information about the to-be-rendered XR object that is to be rendered by the network-side rendering device in the XR call.

With reference to the second aspect, in some implementations of the second aspect, the method further includes: The network-side control device sends a request message to the network-side rendering device, where the request message is used to request at least one of the following: address information of the network-side rendering device and rendering resource information of the network-side rendering device, where the address information of the network-side rendering device is used to enable a terminal device related to the XR call to connect to the network-side rendering device through a network-side access device, and the rendering resource information is information about a resource used by the network-side rendering device to render the to-be-rendered XR object that is to be rendered by the network-side rendering device; and the network-side control device receives, from the network-side rendering device, a response to the request message.

With reference to the second aspect, in some implementations of the second aspect, the request message includes computing power required for the XR object to be rendered by the network-side rendering device.

With reference to the second aspect, in some implementations of the second aspect, the network-side control device is an XR control plane network element, and the network-side rendering device is an XR media plane network element; or the network-side control device is an application server, and the network-side rendering device is a media resource function network element; or the network-side control device is an internet service signaling server, and the network-side rendering device is an internet service media server.

For beneficial effects of the second aspect and the possible designs, refer to the related description of the first aspect. Details are not described herein again.

According to a third aspect, an XR object rendering method is provided. The method may be performed by a network device, or may be performed by a component (for example, a chip or a circuit) of a network device. This is not limited herein. For ease of description, the following uses an example in which a network-side rendering device performs the method for description.

The method may include: The network-side rendering device receives a second portion of to-be-rendered XR objects from a terminal device; the network-side rendering device renders the second portion of to-be-rendered XR objects; the network-side rendering device receives a first portion of to-be-rendered XR objects that are rendered from the terminal device; and the network-side rendering device merges the first portion of to-be-rendered XR objects that are rendered and the second portion of to-be-rendered XR objects that are rendered, to obtain merged media data. The first portion of to-be-rendered XR obj ects and the second portion of to-be-rendered XR objects are respectively portions of to-be-rendered XR objects in an XR call of the terminal device.

The first portion of to-be-rendered XR objects are to-be-rendered XR objects that are to be rendered by the terminal device in the XR call, and the second portion of to-be-rendered XR objects are to-be-rendered XR objects that are to be rendered by the network-side rendering device in the XR call.

Based on the foregoing technical solution, for to-be-rendered XR objects in the XR call, the terminal device may render some XR objects, and the network-side rendering device may render some XR objects. In this way, for the XR call, a rendering task can be dynamically allocated between the terminal device and the network-side rendering device by using a network-side control device, to implement effective collaboration and on-demand rendering task allocation between the terminal device and the network-side rendering device. Further, the terminal device may send, to the network-side rendering device, the first portion of to-be-rendered XR objects that are rendered, that is, media data (for example, a video stream) corresponding to the first portion of to-be-rendered XR objects that are rendered, so that the network-side rendering device merges the media data corresponding to the first portion of to-be-rendered XR objects that are rendered and media data corresponding to the second portion of to-be-rendered XR objects that are rendered, to provide complete media data (for example, a video stream) for the terminal device in an XR session.

With reference to the third aspect, in some implementations of the third aspect, the method further includes: The network-side rendering device sends the merged media data to the terminal device corresponding to the XR call.

With reference to the third aspect, in some implementations of the third aspect, the network-side rendering device sends processing capability information of the network-side rendering device to a network-side control device, where the processing capability information of the network-side rendering device is used to determine division indication information, and the division indication information indicates that a portion of to-be-rendered XR objects in the XR call of the terminal device are to be rendered by the network-side rendering device, and/or the other portion of to-be-rendered XR objects in the XR call of the terminal device are to be rendered by the terminal device.

With reference to the third aspect, in some implementations of the third aspect, the processing capability information of the network-side rendering device includes available rendering computing power of the network-side rendering device; or the processing capability information of the network-side rendering device includes available rendering computing power of the network-side rendering device and a rendering division manner supported by the network-side rendering device.

With reference to the third aspect, in some implementations of the third aspect, the available rendering computing power of the network-side rendering device is determined based on a configuration of a computing resource of the network-side rendering device, or the available rendering computing power of the network-side rendering device is determined based on a remaining computing resource or an available computing resource of the network-side rendering device when an XR session is established.

With reference to the third aspect, in some implementations of the third aspect, the method further includes: The network-side rendering device receives a request message from the network-side control device, where the request message is used to request at least one of the following: address information of the network-side rendering device and rendering resource information of the network-side rendering device, where the address information of the network-side rendering device is used to enable a terminal device related to the XR call to connect to the network-side rendering device through a network-side access device, and the rendering resource information is information about a resource used by the network-side rendering device to render the to-be-rendered XR object that is to be rendered by the network-side rendering device; and the network-side rendering device sends a response to the request message to the network-side control device.

With reference to the third aspect, in some implementations of the third aspect, the request message includes computing power required by the network-side rendering device to render the second portion of to-be-rendered XR objects.

With reference to the third aspect, in some implementations of the third aspect, the network-side control device is an XR control plane network element, and the network-side rendering device is an XR media plane network element; or the network-side control device is an application server, and the network-side rendering device is a media resource function network element; or the network-side control device is an internet service signaling server, and the network-side rendering device is an internet service media server.

According to a fourth aspect, an XR object rendering method is provided. The method may be performed by a network device, or may be performed by a component (for example, a chip or a circuit) of a network device. This is not limited herein. For ease of description, the following uses an example in which a network-side control device performs the method for description.

The method may include: The network-side control device sends a request message to a network-side rendering device, where the request message is used to request the network-side rendering device to render a to-be-rendered XR object that is to be rendered by the network-side rendering device in an XR call of a terminal device, and the request message includes computing power required for the to-be-rendered XR object that is to be rendered by the network-side rendering device; and the network-side control device receives, from the network-side rendering device, a response to the request message, where the response to the request message is used to notify the network-side control device whether the network-side rendering device is to render the to-be-rendered XR object that is to be rendered by the network-side rendering device in the XR call.

Optionally, the response of the network-side rendering device to the request message includes address information of the network-side rendering device, and the address information of the network-side rendering device is used to enable a terminal device related to the XR call to connect to the network-side rendering device through a network-side access device. In this case, the address information of the network-side rendering device may implicitly notify the network-side control device whether the network-side rendering device is to render the to-be-rendered XR object that is to be rendered by the network-side rendering device in the XR call.

Based on the foregoing technical solution, the network-side control device may send, to the network-side rendering device, the computing power required for the to-be-rendered XR object that is to be rendered by the network-side rendering device, so that the network-side rendering device can properly allocate a resource based on the computing power required for the to-be-rendered XR object.

With reference to the fourth aspect, in some implementations of the fourth aspect, the request message is used to request the address information of the network-side rendering device.

With reference to the fourth aspect, in some implementations of the fourth aspect, before the network-side control device sends the request message to the network-side rendering device, the method further includes: The network-side control device receives processing capability information of the network-side rendering device from the network-side rendering device.

With reference to the fourth aspect, in some implementations of the fourth aspect, the method further includes: The network-side control device determines, based on the processing capability information of the network-side rendering device, the to-be-rendered XR object that is to be rendered by the network-side rendering device in the XR call.

With reference to the fourth aspect, in some implementations of the fourth aspect, the processing capability information of the network-side rendering device includes available rendering computing power of the network-side rendering device; or the processing capability information of the network-side rendering device includes available rendering computing power of the network-side rendering device and a rendering division manner supported by the network-side rendering device.

With reference to the fourth aspect, in some implementations of the fourth aspect, the available rendering computing power of the network-side rendering device is determined based on a configuration of a computing resource of the network-side rendering device, or the available rendering computing power of the network-side rendering device is determined based on a remaining computing resource or an available computing resource of the network-side rendering device.

With reference to the fourth aspect, in some implementations of the fourth aspect, the network-side control device is an XR control plane network element, and the network-side rendering device is an XR media plane network element; or the network-side control device is an application server, and the network-side rendering device is a media resource function network element; or the network-side control device is an internet service signaling server, and the network-side rendering device is an internet service media server.

According to a fifth aspect, an XR object rendering method is provided. The method may be performed by a network device, or may be performed by a component (for example, a chip or a circuit) of a network device. This is not limited herein. For ease of description, the following uses an example in which a network-side rendering device performs the method for description.

The method may include: The network-side rendering device receives a request message from a network-side control device, where the request message is used to request the network-side rendering device to render a to-be-rendered XR object that is to be rendered by the network-side rendering device in an XR call of a terminal device, and the request message includes computing power required for the to-be-rendered XR object that is to be rendered by the network-side rendering device in the XR call; and the network-side rendering device sends a response to the request message to the network-side control device, where the response to the request message is used to notify the network-side control device whether the network-side rendering device is to render the to-be-rendered XR object that is to be rendered by the network-side rendering device in the XR call.

With reference to the fifth aspect, in some implementations of the fifth aspect, the request message is used to request the address information of the network-side rendering device.

With reference to the fifth aspect, in some implementations of the fifth aspect, the method further includes: The network-side rendering device determines, based on the computing power required for the XR object to be rendered by the network-side rendering device, a resource required by the network-side rendering device to render the to-be-rendered XR object that is to be rendered by the network-side rendering device in the XR call.

With reference to the fifth aspect, in some implementations of the fifth aspect, before the network-side rendering device receives the request message from the network-side control device, the method further includes: The network-side rendering device sends processing capability information of the network-side rendering device to the network-side control device.

With reference to the fifth aspect, in some implementations of the fifth aspect, the processing capability information of the network-side rendering device includes available rendering computing power of the network-side rendering device; or the processing capability information of the network-side rendering device includes available rendering computing power of the network-side rendering device and a rendering division manner supported by the network-side rendering device.

With reference to the fifth aspect, in some implementations of the fifth aspect, the available rendering computing power of the network-side rendering device is determined based on a configuration of a computing resource of the network-side rendering device, or the available rendering computing power of the network-side rendering device is determined based on a remaining computing resource or an available computing resource of the network-side rendering device.

With reference to the fifth aspect, in some implementations of the fifth aspect, the network-side control device is an XR control plane network element, and the network-side rendering device is an XR media plane network element; or the network-side control device is an application server, and the network-side rendering device is a media resource function network element; or the network-side control device is an internet service signaling server, and the network-side rendering device is an internet service media server.

For beneficial effects of the fifth aspect and the possible designs, refer to the related description of the fourth aspect. Details are not described herein again.

According to a sixth aspect, an XR object rendering method is provided. The method may be performed by a communication system (for example, a communication system including a terminal device and a network device), or may be performed by a component (for example, a chip or a circuit) of a communication system. This is not limited herein. For ease of description, the following uses an example in which the terminal device performs the method for description.

The method may include: The network-side control device determines or accepts a rendering division, where the rendering division means that a portion of to-be-rendered XR objects in an XR call of a terminal device are to be rendered by a network-side rendering device, and the other portion of to-be-rendered XR objects in the XR call of the terminal device are to be rendered by the terminal device; and the network-side control device triggers the terminal device to render the XR object that is to be rendered by the terminal device in the XR call, and the network-side rendering device to render the to-be-rendered XR object that is to be rendered by the network-side rendering device in the XR call.

With reference to the sixth aspect, in some implementations of the sixth aspect, the network-side control device sends division indication information to the terminal device, where the division indication information indicates that a portion of to-be-rendered XR objects in the XR call of the terminal device are to be rendered by the network-side rendering device, and/or the other portion of to-be-rendered XR objects in the XR call of the terminal device are to be rendered by the terminal device; the terminal device receives the division indication information, and renders, based on the division indication information, the to-be-rendered XR object that is to be rendered by the terminal device in the XR call; and the terminal device sends, to the network-side rendering device, the to-be-rendered XR object that is to be rendered by the network-side rendering device in the XR call.

With reference to the sixth aspect, in some implementations of the sixth aspect, the method further includes: The terminal device sends processing capability information of the terminal device to the network-side control device.

With reference to the sixth aspect, in some implementations of the sixth aspect, that the terminal device sends the processing capability information of the terminal device to the network-side control device includes: The terminal device sends a registration message or a session call message to a network-side access device, to trigger the network-side access device to send the processing capability information of the terminal device to the network-side control device, where the registration message or the session call message includes the processing capability information of the terminal device.

With reference to the sixth aspect, in some implementations of the sixth aspect, the method further includes: The terminal device sends processing requirement information of the XR call to the network-side control device.

With reference to the sixth aspect, in some implementations of the sixth aspect, the method further includes: The terminal device sends a rendered XR object to the network-side rendering device, where the rendered XR object is obtained by the terminal device by rendering the to-be-rendered XR object that is to be rendered by the terminal device in the XR call.

With reference to the sixth aspect, in some implementations of the sixth aspect, the terminal device determines a rendering division, and sends division acknowledgement request information to the network-side control device, where the division acknowledgement request information is used to request to accept the rendering division; and the network-side control device receives the division acknowledgement request, and accepts the rendering division based on the division acknowledgement request.

With reference to the sixth aspect, in some implementations of the sixth aspect, the method further includes: The network-side control device sends division acknowledgement response information to the terminal device, where the division acknowledgement response information indicates that the rendering division is accepted; and the terminal device receives the division acknowledgement response information, and acknowledges the rendering division.

With reference to the sixth aspect, in some implementations of the sixth aspect, the network-side control device is an XR control plane network element, and the network-side rendering device is an XR media plane network element; or the network-side control device is an application server, and the network-side rendering device is a media resource function network element; or the network-side control device is an internet service signaling server, and the network-side rendering device is an internet service media server.

For the sixth aspect, refer to the description in the first aspect or the second aspect. Details are not described herein.

According to a seventh aspect, an XR object rendering method is provided. The method may be performed by a communication system (for example, a communication system including a terminal device and a network device), or may be performed by a component (for example, a chip or a circuit) of a communication system. This is not limited herein. For ease of description, the following uses an example in which the terminal device performs the method for description.

The method may include: A network-side control device sends a request message to a network-side rendering device, where the request message is used to request the network-side rendering device to render a to-be-rendered XR object that is to be rendered by the network-side rendering device in an XR call of a terminal device, and the request message includes computing power required for the to-be-rendered XR object that is to be rendered by the network-side rendering device; and the network-side rendering device sends a response to the request message to the network-side control device, where the response to the request message is used to notify the network-side control device whether the network-side rendering device is to render the to-be-rendered XR object that is to be rendered by the network-side rendering device in the XR call.

With reference to the seventh aspect, in some implementations of the seventh aspect, before the network-side control device sends the request message to the network-side rendering device, the method further includes: The network-side rendering device sends processing capability information of the network-side rendering device to the network-side control device.

With reference to the seventh aspect, in some implementations of the seventh aspect, the network-side rendering device determines, based on the computing power required for the XR object to be rendered by the network-side rendering device, a resource required by the network-side rendering device to render the to-be-rendered XR object that is to be rendered by the network-side rendering device in the XR call.

With reference to the seventh aspect, in some implementations of the seventh aspect, the network-side control device is an XR control plane network element, and the network-side rendering device is an XR media plane network element; or the network-side control device is an application server, and the network-side rendering device is a media resource function network element; or the network-side control device is an internet service signaling server, and the network-side rendering device is an internet service media server.

For the seventh aspect, refer to the description in the fourth aspect or the fifth aspect. Details are not described herein.

According to an eighth aspect, a communication apparatus is provided. The apparatus is configured to perform the method in any one of the possible implementations of the first aspect to the seventh aspect. Specifically, the apparatus may include units and/or modules configured to perform the method in any one of the possible implementations of the first aspect to the seventh aspect, for example, a processing unit and/or a communication unit.

In an implementation, the apparatus is a communication device (for example, a terminal device or a network device). When the apparatus is a communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device (for example, a terminal device or a network device). When the apparatus is a chip, a chip system, or a circuit used in a communication device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a ninth aspect, a communication apparatus is provided. The apparatus includes at least one processor, configured to execute a computer program or instructions stored in a memory, to perform the method in any one of the possible implementations of the first aspect to the seventh aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a communication device (for example, a terminal device or a network device).

In another implementation, the apparatus is a chip, a chip system, or a circuit used in a communication device (for example, a terminal device or a network device).

According to a tenth aspect, a processor is provided, configured to perform the method provided in the foregoing aspects.

Operations such as sending and obtaining/receiving related to the processor may be understood as operations such as output and input of the processor, or operations such as sending and receiving performed by a radio frequency circuit and an antenna, unless otherwise specified, or provided that the operations do not contradict actual functions or internal logic of the operations in related descriptions. This is not limited in this application.

According to an eleventh aspect, a computer-readable storage medium is provided. The computer-readable medium stores program code to be executed by user equipment, and the program code is used to perform the method in any one of the possible implementations of the first aspect to the seventh aspect.

According to a twelfth aspect, a computer program product including instructions is provided. When the computer program product runs on a computer, the computer is enabled to perform the method in any one of the possible implementations of the first aspect to the seventh aspect.

According to a thirteenth aspect, a communication system is provided, including at least one of the foregoing terminal device, network-side control device, and network-side rendering device.

### BRIEF DESCRIPTION OF DRAWINGS

FIG. 1 is a schematic diagram of a communication system applicable to an embodiment of this application;
FIG. 2 is a schematic diagram of a communication system applicable to another embodiment of this application;
FIG. 3 is a schematic diagram of a communication system applicable to another embodiment of this application;
FIG. 4 is a schematic diagram of an XR object rendering method 400 according to an embodiment of this application;
FIG. 5A and FIG. 5B are a schematic flowchart of an XR object rendering method 500 according to an embodiment of this application;
FIG. 6A and FIG. 6B are a schematic flowchart of an XR object rendering method 600 according to an embodiment of this application;
FIG. 7A to FIG. 7C are a schematic flowchart of an XR object rendering method 700 according to an embodiment of this application;
FIG. 8A and FIG. 8B are a schematic flowchart of an XR object rendering method 800 according to an embodiment of this application;
FIG. 9 is a schematic diagram of an XR object rendering method 900 according to an embodiment of this application;
FIG. 10A and FIG. 10B are a schematic flowchart of an XR object rendering method 1000 according to an embodiment of this application;
FIG. 11A and FIG. 11B are a schematic flowchart of an XR object rendering method 1100 according to an embodiment of this application;
FIG. 12A to FIG. 12C are a schematic flowchart of an XR object rendering method 1200 according to an embodiment of this application;
FIG. 13A and FIG. 13B are a schematic flowchart of an XR object rendering method 1300 according to an embodiment of this application;
FIG. 14 is a schematic diagram of a communication apparatus 1400 according to an embodiment of this application; and
FIG. 15 is a schematic diagram of a communication apparatus 1500 according to an embodiment of this application.

### DESCRIPTION OF EMBODIMENTS

The following describes the technical solutions in embodiments of this application with reference to the accompanying drawings.

The technical solutions provided in this application may be applied to various communication systems, for example, a 5th generation (5th generation, 5G) system or a new radio (new radio, NR) system, a network over the top (over the top, OTT) system (or a system that provides various application services for a user through the Internet), a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (intemet of things, IoT) communication system, or other communication systems.

A terminal device in embodiments of this application may also be referred to as user equipment (user equipment, UE), an access terminal, a mobile device, a user terminal, a terminal, a wireless communication device, a user agent, or a user apparatus.

For example, examples of some terminals are a virtual reality (virtual reality, VR) device, an augmented reality (augmented reality, AR) device, a terminal device in a 5G network, a terminal device in a future evolved public land mobile network (public land mobile network, PLMN), or the like. This is not limited in embodiments of this application.

By way of example and not limitation, in embodiments of this application, the terminal device may alternatively be a wearable device. The wearable device may also be referred to as a wearable intelligent device or the like, and is a general term of wearable devices that are intelligently designed and developed for daily wear by using a wearable technology, for example, glasses, gloves, watches, clothes, and shoes. The wearable device is a portable device that is directly worn on a body or integrated into clothes or an accessory of a user. The wearable device is not only a hardware device, but also implements a powerful function through software support, data exchange, and cloud interaction. Generalized wearable intelligent devices include full-featured and large-sized devices that can implement complete or partial functions without depending on a smartphone, for example, a smartwatch or smart glasses, and devices that focus on only one type of application function and need to work with another device such as a smartphone, for example, various smart bands or smart jewelry for monitoring physical signs.

In embodiments of this application, an apparatus configured to implement a function of a terminal device may be a terminal device, or may be an apparatus that can support a terminal device in implementing the function, for example, a chip system or a chip. The apparatus may be installed in the terminal device. In embodiments of this application, the chip system may include a chip, or may include a chip and another discrete component.

A network device in embodiments of this application may be a device configured to communicate with a terminal device. For example, the network device may be, for example, a device in a communication network configured to provide a service for the terminal device. In embodiments of this application, the communication network may include an operator IP multimedia subsystem (IP multimedia subsystem, IMS) network, or may include an established communication network, or may include another communication network. This is not limited.

For example, the network device may include, for example, at least one of the following: an extended reality (extended reality, XR) control plane function (XR control function, XR-C) network element, an XR media plane function (XR media function, XR-M) network element, an application server (application server, AS), a media resource function network element, and an OTT XR call server. The following briefly describes devices.
1. XR-C network element: is a core network control plane network element of an XR service, and may provide a rendering negotiation function. For example, the XR-C network element may coordinate a rendering operation of an XR call service between a terminal device and a network-side device (for example, an XR-M network element), and determine a division of the rendering operation.
   In an example, the XR-C network element is an AR control plane function (AR control function, AR-C) network element or an AR application server (AR application server, AR-AS).
2. XR-M network element: is a core network media plane network element of an XR service, and may be configured to provide an XR object rendering function.

In an example, the XR-M network element is an AR media plane function (AR media function, AR-M) network element.

It may be understood that the XR-C network element and the XR-M network element may be understood as network elements configured to implement different functions, and may be combined into a network slice as required. The XR-C network element and the XR-M network element may be independent hardware devices, or may be integrated into a same hardware device, or may be network elements in a hardware device, or may be software functions running on dedicated hardware, or may be instantiated virtualization function modules on a platform (for example, a cloud platform). Specific forms of the network elements are not limited in this application. It may be further understood that the foregoing names are defined merely for distinguishing between different functions, and should not constitute any limitation on this application.

It may be further understood that the XR-C network element and the XR-M network element may be provided by an IMS operator, or may be provided by a third party. This is not limited.

3. AS: is a server that provides an application layer service for a terminal device. As shown in the figure, the AS is an AS in an IMS.

4. Media resource function network element: is configured to process media data (for example, media data related to an XR call) (for example, render an XR object), and may participate in rendering negotiation. In an example, the media resource function network element may be a multimedia resource function (multimedia resource function, MRF) network element in a 3GPP standard specification, including a multimedia resource function controller (multimedia resource function controller, MRFC) and a multimedia resource function processor (multimedia resource function processor, MRFP).

5. OTT server: is a server configured to provide an over the top service (that is, an OTT service, also referred to as an internet service) of an operator, and is also referred to as an internet service server.

6. OTT XR call server: is a server configured to provide an over the top XR call service (that is, an OTT XR call service) of an operator, or an OTT server that carries an XR call service, and may provide a rendering negotiation function, for example, coordinate a rendering operation of an XR call service between a terminal device and a network-side device, and determine a division of the rendering operation. In addition, the OTT XR call server may be further configured to implement signaling processing and routing of the OTT XR call service, and media processing of the XR call service. In an example, the OTT XR call server may include an OTT XR call service signaling server (or an internet XR call service signaling server), an OTT XR call service media processing server (or an internet XR call service media processing server), and an OTT XR call service routing server. For example, the OTT XR call service signaling server is, for example, responsible for processing signaling or a message related to the XR call service, the OTT XR call service media processing server is, for example, responsible for processing media data related to the XR call service, and the OTT XR call service routing server is, for example, responsible for routing or forwarding signaling or a message related to the XR call service. A name of the OTT XR call server does not limit the protection scope of embodiments of this application.

Unless otherwise specified, an OTT server in subsequent embodiments of this application is an OTT XR call server, and details are not described again.

The network device and the terminal device may be deployed on land, including an indoor or outdoor device, a handheld device, or a vehicle-mounted device; or may be deployed on a water surface; or may be deployed on a plane, a balloon, or a satellite in the air. A scenario in which the network device and the terminal device are located is not limited in embodiments of this application.

For ease of understanding of embodiments of this application, terms in this application are described briefly.
1. XR: means that reality and virtuality are combined through computers to create a virtual environment for human-machine interaction. XR is a general term for a plurality of technologies such as VR, AR, and mixed reality (mixed reality, MR). The foregoing plurality of technologies are combined, to bring an "immersion sense" of seamless transition between the virtual world and the real world to experiencers. An XR call is used as an example. In the XR call, an XR technology is integrated into a conventional real-time audio/video call, to provide brand new audio/video call experience, for example, including but not limited to: remote assistance, remote loss assessment, remote shopping, telemedicine, and a remote immersive conference.
2. XR object: means a component in an XR scenario (for example, an XR call scenario) (or an object in an XR scenario), and mainly describes a type of components or a component in the XR scenario. For example, the XR object in the XR scenario may include a virtual conference room, a virtual person, a virtual chair, a virtual desk, and the like.
3. Render (render): means a process of converting raw data of an XR object. In this process, the raw data of the XR object that cannot be directly displayed is converted or processed into media data that can be displayed (through a display or XR glasses) as an image having three-dimensional (three-dimensional, 3D) effect. For brevity and ease of description, in embodiments of this application, the raw data of the XR object is referred to as a to-be-rendered XR object for short, and the media data that can be displayed as an image having 3D effect is referred to as a rendered XR object for short.
   For example, the media data corresponding to the rendered XR object may include a video image frame sequence (or a video frame sequence for short) used to display the XR object, and may be transmitted to a peer terminal device (or a local terminal device) in a form of a video stream over a network. After the media data corresponding to the rendered XR object is displayed on a screen (for example, a screen of a terminal device), 3D effect may be achieved, that is, a user may perceive and see a three-dimensional picture based on a size and a distance of the object presented on the screen.
4. Data channel (data channel, DC): The data channel described in embodiments of this application may be, for example, an IMS data channel (IMS data channel), that is, a data channel in an IMS, and may be used to transmit data based on the stream control transmission protocol (stream control transmission protocol, SCTP). In other words, the data channel is a logical channel or a data connection for transmitting data based on SCTP. In embodiments of this application, the DC may be used to transmit signaling or data, for example, rendering division interaction information and/or an XR object.
5. Computing power: In embodiments of this application, the computing power is used to measure a rendering processing capability of a device for an XR object.

The foregoing briefly describes terms used in this application, and details are not described in the following embodiments.

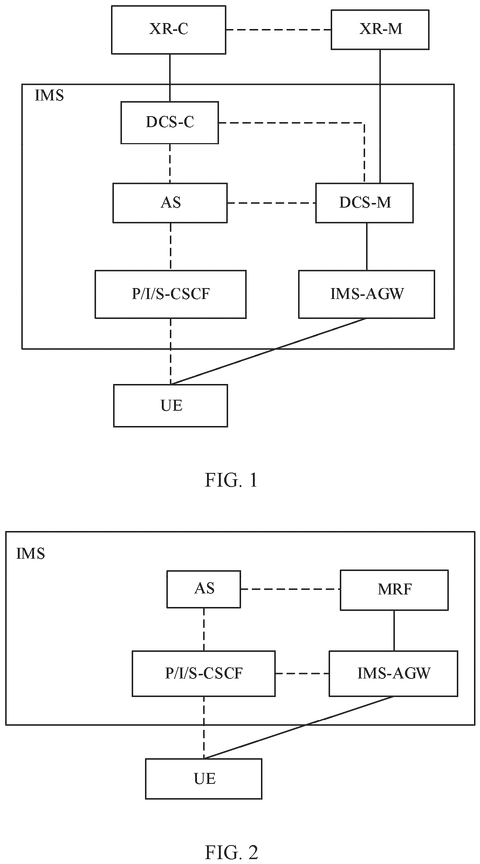

First, a network architecture applicable to this application is briefly described with reference to FIG. 1 to FIG. 3. Details are as follows.

FIG. 1 is a schematic diagram of a communication system applicable to an embodiment of this application. As shown in FIG. 1, the communication system may include UE, a network element in an IMS network, an XR-C network element, and an XR-M network element. The network element in the IMS network may include, for example, a data channel control plane function (data channel server control function, DCS-C) network element, an AS, a data channel media plane function (data channel server media function, DCS-M) network element, an IMS access gateway (IMS access gateway, IMS-AGW), a proxy-call session control function (proxy-call session control function, P-CSCF) network element, an interrogating-call session control function (interrogating-call session control function, I-CSCF) network element, and a serving-call session control function (serving-call session control function, S-CSCF) network element. The following briefly describes the network elements. For network elements that are not described in detail, refer to the foregoing description.
1. IMS-AGW: is mainly responsible for providing a media anchor point for accessing an IMS network ingress.
2. P-CSCF network element: is located in a visited network, is an ingress node for a terminal device to access an IMS network, and is mainly responsible for forwarding session initiation protocol (session initialization protocol, SIP) signaling between the terminal device and a home network.
3. I-CSCF network element: is located in a home network, is a unified ingress point of the home network, and is mainly responsible for allocating or querying an S-CSCF network element that serves a terminal device.
4. S-CSCF network element: is located in a home network, is a central node of an IMS network, and is mainly responsible for registration of a terminal device, authentication, a session, routing, and service triggering.
5. DCS-C network element: is a DC control plane network element, and is mainly responsible for providing a DC management function.
6. DCS-M network element: is a DC media plane network element, and is mainly responsible for providing a DC media processing function.

FIG. 2 is a schematic diagram of a communication system applicable to another embodiment of this application. As shown in FIG. 2, the communication system may include UE and a network element in an IMS network. The network element in the IMS network may include, for example, an AS, an MRF network element, an IMS-AGW, a P-CSCF network element, an I-CSCF network element, and an S-CSCF network element. For description about the network elements, refer to the foregoing description.

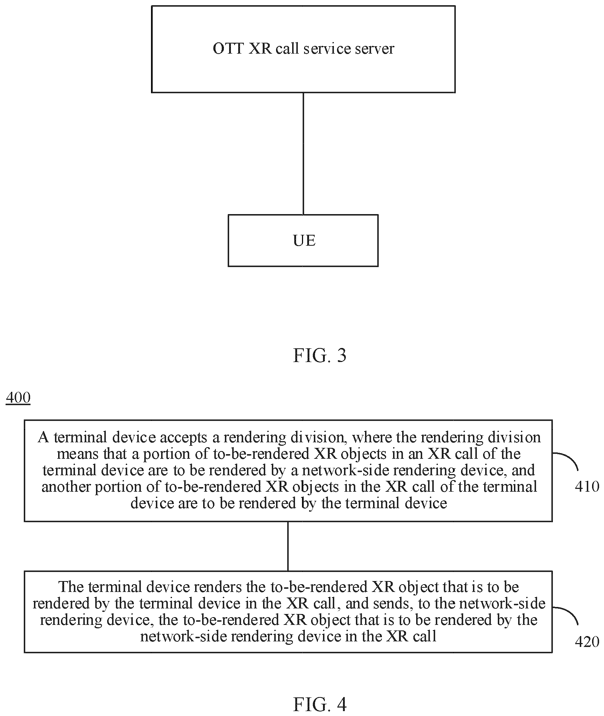

FIG. 3 is a schematic diagram of a communication system applicable to another embodiment of this application. As shown in FIG. 3, the communication system may include UE and an OTT server. For description about the network elements, refer to the foregoing description.

It may be understood that FIG. 1 to FIG. 3 are merely simplified schematic diagrams of examples for ease of understanding, and this application is not limited thereto. In an example, the communication systems each may further include other UE, or the communication systems each may further include other UE and a communication network to which the other UE belongs. FIG. 1 is used as an example. For differentiation, the UE in FIG. 1 is denoted as UE #1, and other UE is denoted as UE #2. The UE #2 may communicate with the IMS network in FIG. 1. Further, optionally, the communication system may further include the UE #2 and an IMS network to which the UE #2 belongs. The UE #2 may communicate, through the IMS network to which the UE #2 belongs, with the IMS network to which the UE #1 belongs. For a network element in the IMS network to which the UE #2 belongs, refer to the network element in the IMS network to which the UE #1 belongs. This is not limited.

It may be further understood that the network elements mentioned in embodiments of this application, for example, function network elements such as a P-CSCF network element, an I-CSCF network element, an MRF network element, and an S-CSCF network element, may be understood as network elements configured to implement different functions, and may be combined into a network slice as required. These network elements may be independent hardware devices, or may be integrated into a same hardware device, or may be network elements in a hardware device, or may be software functions running on dedicated hardware, or may be instantiated virtualization function modules on a platform (for example, a cloud platform). Specific forms of the network elements are not limited in this application. It may be further understood that the foregoing names are defined merely for distinguishing between different functions, and should not constitute any limitation on this application. This application does not exclude a possibility of using other names in a 6G network and other networks in the future.

With continuous development and application of XR technologies, people have increasingly high requirements on image quality and resolution of XR videos, and complex three-dimensional (three-dimensional, 3D) scenes and objects related to XR have very high requirements on rendering computing power.

In one rendering manner, a terminal device performs rendering processing. However, due to limitation of factors such as a software/hardware resource, a volume, a weight, power consumption, and heat dissipation, a rendering processing capability of the terminal device may not meet requirements of a complex 3D scene and object. This limits application and effect of an XR service.

In another rendering manner, a network device performs rendering processing. However, in this processing manner, a terminal device needs to send related data of a to-be-rendered XR object to the network device. After completing rendering, the network device re-encodes a video, and then sends the video to the terminal device. The terminal device performs decoding and display. This manner causes a relatively high delay, and causes a relatively large resource waste to the network device.

This application provides a manner in which rendering negotiation is performed between a network device and a terminal device, and a rendering task is dynamically allocated between the terminal device and the network device based on processing requirements of different XR calls, to implement effective collaboration and on-demand rendering task allocation between the terminal device and the network device.

It may be understood that the term "and/or" in this specification is merely an association relationship of associated objects, and indicates that three relationships may exist. For example, A and/or B may indicate the following three cases: Only A exists, both A and B exist, and only B exists. In addition, the character "/" in this specification usually indicates an "or" relationship between the associated objects.

It may be further understood that, in this application, information indicated by indication information is referred to as to-be-indicated information. In a specific implementation process, the to-be-indicated information is indicated in a plurality of manners. By way of example and not limitation, the to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

The foregoing briefly describes terms used in this application, and details are not described in the following embodiments.

The following describes in detail a method provided in embodiments of this application with reference to the accompanying drawings.

FIG. 4 is a schematic diagram of an XR object rendering method 400 according to an embodiment of this application. The method 400 may include the following steps.

410: A terminal device accepts a rendering division, where the rendering division means that a portion of to-be-rendered XR objects in an XR call of the terminal device are to be rendered by a network-side rendering device, and the other portion of to-be-rendered XR objects in the XR call of the terminal device are to be rendered by the terminal device.

For example, 410 may be: The terminal device receives division indication information from a first network device, where the division indication information indicates that a portion of to-be-rendered XR objects in the XR call of the terminal device are to be rendered by a second network device, and/or the other portion of to-be-rendered XR objects in the XR call of the terminal device are to be rendered by the terminal device.

The first network device represents a network-side device that determines the rendering division, and corresponds to the network-side control device in the summary. The second network device represents a network-side device that renders a portion of to-be-rendered XR objects in the XR call of the terminal device, and corresponds to the network-side rendering device in the summary, 410, and 420. The rendering division means that the terminal device and the second network device respectively render portions of to-be-rendered XR objects in the XR call of the terminal device, that is, the to-be-rendered XR objects in the XR call of the terminal device are rendered by the terminal device and the second network device. After determining the rendering division for the to-be-rendered XR object in the XR call, the first network device may send the division indication information to the terminal device, to indicate that the terminal device and the second network device respectively render portions of to-be-rendered XR objects in the XR call of the terminal device. The terminal device accepts the rendering division based on the division indication information.

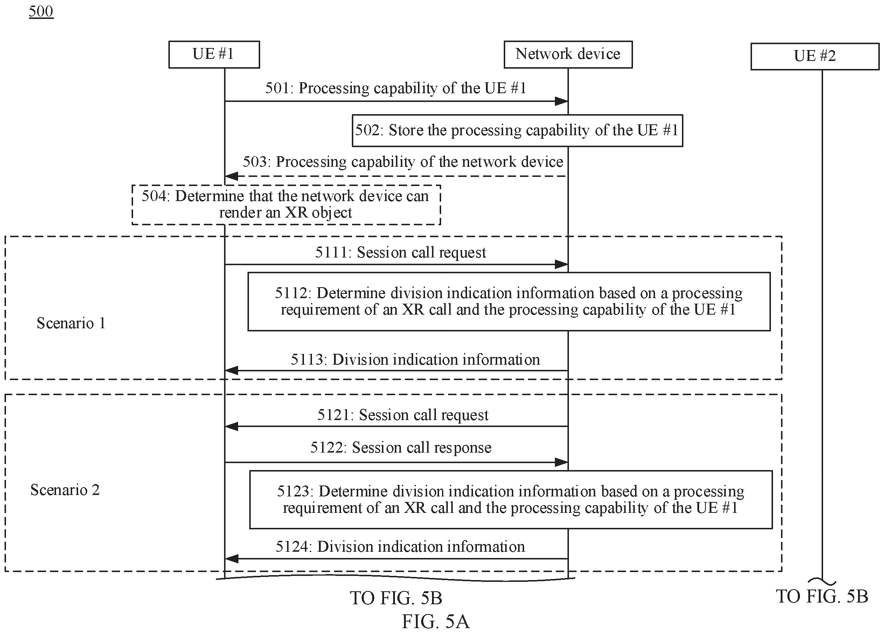

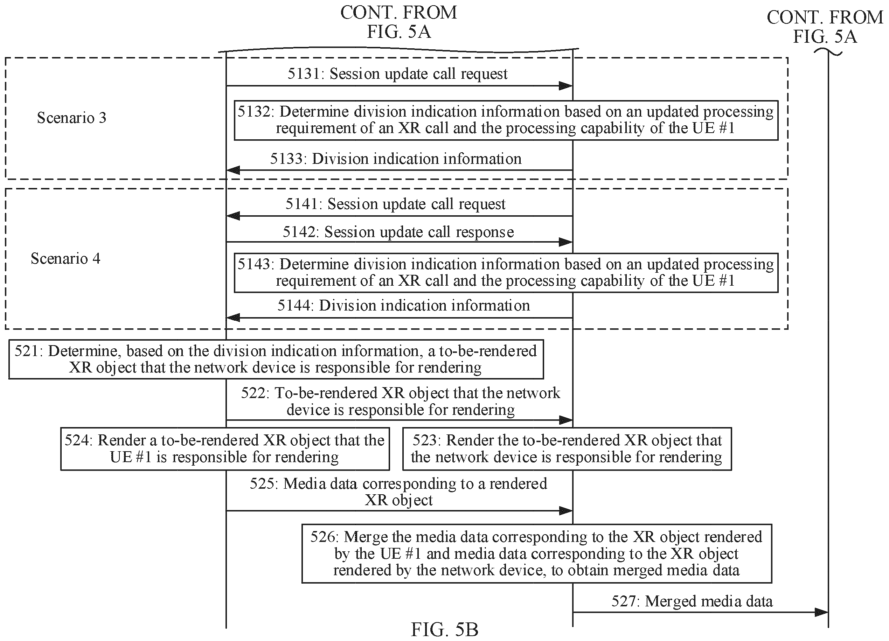

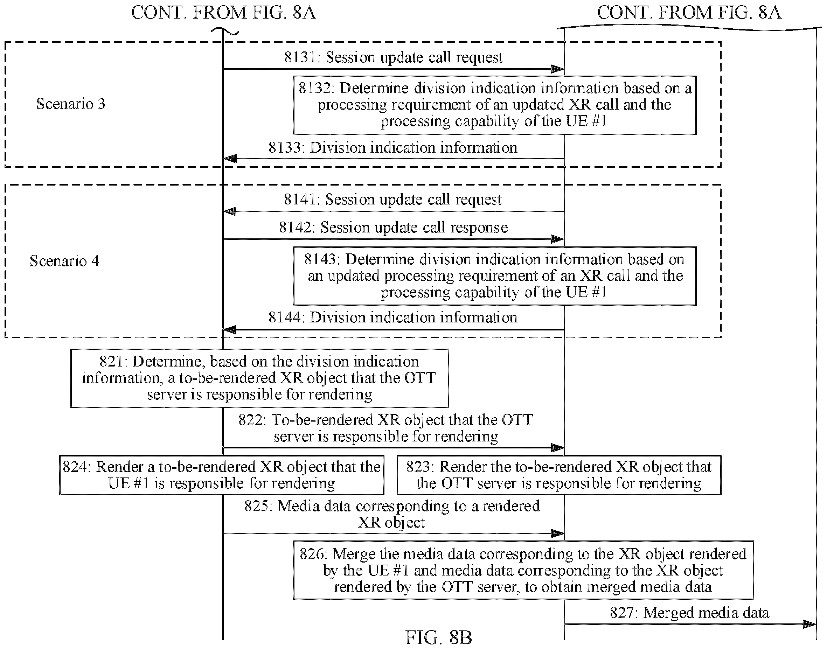

The first network device and the second network device may be logical function devices, and may be deployed on a same physical device, or may be deployed on different physical devices. This is not limited. For example, the first network device is an XR control plane network element (for example, denoted as an XR-C network element), and the second network device is an XR media plane network element (for example, an XR-M network element). For another example, the first network device is an AS, and the second network device is a media resource function network element (for example, an MRF network element). For another example, the first network device is an internet service signaling server (for example, an OTT signaling server), and the second network device is an internet service media server (for example, an OTT media server). The following describes in detail possible procedures in various cases with reference to FIG. 5A and FIG. 5B to FIG. 8A and FIG. 8B.

The XR call (XR call) may also be referred to as XR communication (XR communication), an XR call service, or an XR session. It may be understood that, in embodiments of this application, the XR call is not limited to one-to-one communication (or end-to-end communication). The XR call may be one-to-many communication, or may be many-to-one communication, or may be many-to-many communication. This is not limited. For example, the XR call may be a conference call. The XR call of the terminal device is an XR call in which the terminal device participates, and may be an XR call initiated by the terminal device, or may be an XR call initiated by another terminal device to the terminal device, or may be an XR call initiated by a network-side device (for example, a network-side chatbot) to the terminal device.

For ease of description, in embodiments of this application, to-be-rendered XR objects that the terminal device is responsible for rendering (that is, to-be-rendered XR objects that are to be rendered by the terminal device) are denoted as a first portion of to-be-rendered XR objects, and to-be-rendered XR objects that the second network device is responsible for rendering (that is, to-be-rendered XR objects that are to be rendered by the second network device) are denoted as a second portion of to-be-rendered XR objects. The division indication information indicates that a portion of to-be-rendered XR objects in the XR call of the terminal device are to be rendered by the second network device, and/or the other portion of to-be-rendered XR objects in the XR call of the terminal device are to be rendered by the terminal device. This may be replaced with the following: The division indication information indicates that the terminal device renders the first portion of to-be-rendered XR objects in the XR call of the terminal device and/or the second network device renders the second portion of to-be-rendered XR objects in the XR call of the terminal device. Alternatively, this may be replaced with the following: The terminal device and the second network device respectively render portions of to-be-rendered XR objects in the XR call of the terminal device. In other words, the division indication information indicates that a rendering operation for the to-be-rendered XR objects in the XR call of the terminal device is shared by the terminal device and the second network device, and the terminal device and the second network device each are responsible for a rendering operation on a portion of to-be-rendered XR objects.

The first portion of to-be-rendered XR objects and the second portion of to-be-rendered XR objects belong to to-be-rendered XR objects in the XR call. The first portion of to-be-rendered XR objects and the second portion of to-be-rendered XR objects may be different. For example, the first portion of to-be-rendered XR objects are some to-be-rendered XR objects in the XR call, and the second portion of to-be-rendered XR objects are remaining to-be-rendered XR objects in the XR call. For example, the to-be-rendered XR objects in the XR call include a virtual conference room, a virtual person, a virtual chair, and a virtual desk. For example, the first portion of to-be-rendered XR objects may be the virtual conference room and the virtual person, and the second portion of to-be-rendered XR objects may be the virtual chair and the virtual desk.

420: The terminal device renders the to-be-rendered XR object that is to be rendered by the terminal device in the XR call, and sends, to the network-side rendering device, the to-be-rendered XR object that is to be rendered by the network-side rendering device in the XR call.

For example, 420 may be: Based on the division indication information, the terminal device renders the to-be-rendered XR object that is to be rendered by the terminal device in the XR call, and sends, to the second network device, the to-be-rendered XR object that is to be rendered by the second network device in the XR call.

That is, the terminal device renders the first portion of to-be-rendered XR objects, and sends the second portion of to-be-rendered XR objects to the second network device. That the terminal device sends the second portion of to-be-rendered XR objects to the second network device may be understood as that the terminal device sends, to the second network device, related data corresponding to the second portion of to-be-rendered XR objects. For example, if the second portion of to-be-rendered XR objects are the "virtual chair" and the "virtual desk", the terminal device may send raw data (for example, location coordinates included in a video picture) of the "virtual desk" and the "virtual chair" to the second network device.

In a possible case, the division indication information includes information about the first portion of to-be-rendered XR objects that the terminal device is responsible for rendering, and before the terminal device sends the second portion of to-be-rendered XR objects to the second network device, the method 400 further includes: The terminal device determines the second portion of to-be-rendered XR objects based on the to-be-rendered XR objects in the XR call and the first portion of to-be-rendered XR objects. In this way, the terminal device may send the second portion of to-be-rendered XR objects, that is, data related to the second portion of to-be-rendered XR objects, to the second network device. For example, if the second portion of to-be-rendered XR objects are the "virtual chair" and the "virtual desk", the terminal device may send location coordinates of the "virtual desk" and the "virtual chair" in a video picture to the second network device.

In another possible case, the division indication information includes information about the second portion of to-be-rendered XR objects that the second network device is responsible for rendering, and before the terminal device renders the first portion of to-be-rendered XR objects, the method 400 further includes: The terminal device determines the first portion of to-be-rendered XR objects based on the to-be-rendered XR objects in the XR call and the information about the second portion of to-be-rendered XR objects. In this way, the terminal device may render the first portion of to-be-rendered XR objects.

It may be understood that, if division is performed by type, the information about the first portion of to-be-rendered XR objects or the information about the second portion of to-be-rendered XR objects included in the division indication information may be a type (for example, person, building, or plant) of the to-be-rendered XR objects; or if division is performed by layer, the information about the first portion of to-be-rendered XR objects or the information about the second portion of to-rendered XR objects included in the division indication information may be layer information (for example, foreground or background) of the to-be-rendered XR objects.

It may be further understood that the foregoing two cases are examples for description, and this embodiment of this application is not limited thereto. For example, the division indication information may further include the first portion of to-be-rendered XR objects that the terminal device is responsible for rendering and the second portion of to-be-rendered XR objects that the second network device is responsible for rendering. In this way, the terminal device may directly determine, based on the division indication information, the first portion of to-be-rendered XR objects that the terminal device is responsible for rendering, and the second portion of to-be-rendered XR objects to be sent to the second network device.

Optionally, the method 400 further includes: The second network device merges the first portion of to-be-rendered XR objects that are rendered and the second portion of to-be-rendered XR objects that are rendered, that is, the second network device merges media data corresponding to the first portion of to-be-rendered XR objects that are rendered and media data corresponding to the second portion of to-rendered XR objects that are rendered. In a possible implementation, the terminal device sends, to the second network device, media data corresponding to a rendered XR object. After receiving the media data corresponding to the rendered XR object, the second network device merges media data corresponding to a rendered XR object that the second network device is responsible for rendering and the media data corresponding to the rendered XR object that the terminal device is responsible for rendering. The media data corresponding to the rendered XR object may form, for example, a video stream corresponding to the rendered XR object. For example, the second network device may perform, in a renderer based on video frames with a same timestamp, image synthesis on an XR object video frame rendered by the second network device and an XR object video frame rendered by the terminal device. During synthesis, a relationship about a foreground, a background, a block, a shadow, and the like may be considered, to output a complete video frame image.

Further, optionally, the method 400 further includes: The second network device sends merged media data to a terminal device in the XR call. For example, an XR call service is performed between the terminal device and another terminal device, and the second network device sends a merged video stream to the another terminal device. Optionally, the second network device may further send the merged video stream to the terminal device.

It may be understood that a device for merging the media data corresponding to the first portion of to-be-rendered XR objects that are rendered and the media data corresponding to the second portion of to-rendered XR objects that are rendered is not limited.

In this embodiment of this application, rendering negotiation may be performed between the network device and the terminal device. To be specific, the first network device may determine the rendering division for the XR object in the XR call, that is, determine specific to-be-rendered XR objects that the terminal device is responsible for rendering and specific to-be-rendered XR objects that the second network device is responsible for rendering. In this way, for the XR call, a rendering task can be dynamically allocated between the terminal device and the second network device by using the first network device, to implement effective collaboration and on-demand rendering task allocation between the terminal device and the second network device.

Optionally, the terminal device sends processing capability information (that is, information about a processing capability) of the terminal device to the first network device. The processing capability information of the terminal device may be used to determine the division indication information. For example, the first network device may determine the division indication information based on the processing capability information of the terminal device. In a possible implementation, the terminal device sends the processing capability information of the terminal device to the first network device in a registration process or an XR call establishment process. For example, the terminal device sends a registration message or a session call message to a third network device, to trigger the third network device to send the processing capability information of the terminal device to the first network device, where the registration message or the session request message includes the processing capability information of the terminal device. The session call message may be a session call request message, or may be a session call response message. Specifically, the terminal device sends the registration message or the session call message to the third network device, where the registration message or the session call message includes the processing capability information of the terminal device. After receiving the processing capability information of the terminal device, the third network device sends the processing capability information of the terminal device to the first network device. The third network device may be, for example, a network element in an IMS network, or may be an OTT server. This is not limited. The third network device corresponds to the network-side access device in the summary. A processing capability may also be referred to as an XR media processing capability or an XR object processing capability, and a name of the processing capability does not limit the protection scope of embodiments of this application. The processing capability of the terminal device may be used to determine whether to perform split rendering on the to-be-rendered XR object in the XR call. Split rendering means that a portion of to-be-rendered XR objects in the XR call are to be rendered by the terminal device, and a portion of to-be-rendered XR objects in the XR call are to be rendered by the second network device.

Optionally, the processing capability of the terminal device includes available rendering computing power (available computing power for rendering) of the terminal device; or the processing capability of the terminal device includes available rendering computing power of the terminal device and a rendering division manner supported by the terminal device.
(1) The available rendering computing power of the terminal device indicates available computing power or remaining computing power for rendering an XR object by the terminal device. For example, the available rendering computing power of the terminal device is determined by the terminal device based on a configuration status of a computing resource (for example, software and hardware resources) of the terminal device, or the available rendering computing power of the terminal device is determined by the terminal device based on an available or remaining computing resource of the terminal device. The available or remaining computing resource of the terminal device may be determined by the terminal device based on the available or remaining computing resource of the terminal device during XR call establishment or in an XR call establishment process (including initial XR call establishment and further including updated XR call establishment). For example, the available rendering computing power of the terminal device may be defined based on remaining available power consumption limited by a graphics processing unit (graphics processing unit, GPU), or may be defined based on remaining available computing power of a GPU. This is not limited. Details are described with reference to the method 500 below.
(2) The rendering division manner (also referred to as a rendering separation manner or a rendering splitting manner) supported by the terminal device means a division dimension of a rendering task for the XR object, for example, division by layer or division by type.

Division by layer means that division is performed based on a layer (for example, a foreground or a background) of a to-be-rendered XR object, so that different entities (the terminal device or the network device) render to-be-rendered XR objects at different layers. For example, a foreground to-be-rendered XR object is rendered by the terminal device, and a background to-be-rendered XR object is rendered by the network device.

Division by type means that division is performed based on a type (for example, a person type, a building type, or a plant type) of a to-be-rendered XR object, so that different entities (the terminal device or the network device) render different types of to-be-rendered XR objects. For example, a to-be-rendered XR object of the person type is rendered by the terminal device, and to-be-rendered XR objects of the building type and the plant type are rendered by the network device.

It may be understood that a type division manner for the to-be-rendered XR object is not limited in embodiments of this application. It may be further understood that the foregoing two division manners are not limited in embodiments of this application, and another division manner may be used. For example, division may be performed based on a motion status. A to-be-rendered XR object that needs to be moved is rendered by the terminal device, and a static to-be-rendered XR object is rendered by the network device.

It may be further understood that the foregoing representation manner of the processing capability of the terminal device is an example rather than a limitation. The processing capability of the terminal device may be represented in another form. For example, the processing capability of the terminal device includes available rendering computing power of the terminal device and a rendering division manner that is forbidden (or not supported or not allowed) by the terminal device.

It may be further understood that the foregoing uses an example in which the terminal device sends the information about the processing capability of the terminal device to the first network device for description. This is not limited. For example, the terminal device may alternatively send, to the first network device, information used to determine the processing capability of the terminal device.

Optionally, the terminal device sends processing requirement information of the XR call to the first network device. Further, optionally, when determining that the second network device can render an XR object, the terminal device sends the processing requirement information of the XR call to the first network device. For example, the terminal device considers by default that the second network device can render an XR object. For another example, the terminal device obtains service indication information, where the service indication information indicates that the second network device can render an XR object, or can provide a service for rendering an XR object to be rendered. The service indication information may include, for example, processing capability information of the second network device. The terminal device determines, based on the processing capability information of the second network device, that the second network device can render an XR object. That the terminal device obtains the service indication information may include: The terminal device receives the service indication information from the first network device.

In a possible implementation, the terminal device sends the processing requirement information of the XR call to the first network device in an XR call establishment process. For example, the terminal device sends a session call message to the third network device, where the session call message includes the processing requirement information of the XR call; and after receiving the processing requirement information of the XR call, the third network device sends the processing requirement information of the XR call to the first network device. The third network device may be, for example, a network element in an IMS network, or may be an OTT server. This is not limited. The processing requirement information of the XR call and the processing capability information of the terminal device may be carried in same signaling, or may be carried in different signaling. This is not limited.

A processing requirement of the XR call, or referred to as an XR media processing requirement or an XR object processing requirement, is not named to limit the protection scope of embodiments of this application. The processing requirement of the XR call may be used to determine whether to perform split rendering, and may be further used to determine a specific rendering division. For example, the processing requirement information of the XR call includes at least one of the following: information about a to-be-rendered XR object in the XR call, video resolution of the XR call, and a video frame rate of the XR call.
(1) The information about the to-be-rendered XR object in the XR call is raw data of the XR object in an XR call service. For example, the to-be-rendered XR object in the XR call includes raw data of a virtual conference room, a virtual person, and a virtual chair.
(2) The video resolution of the XR call refers to a length and a width of a video picture of the XR call service, for example, 1920 and 1080.
(3) The video frame rate of the XR call refers to a quantity of video frames in a unit time (for example, 1 second) in the XR call service, for example, 30 frames/second.

It may be understood that the foregoing is an example for description, and is not limited.

The following describes a related solution in which the first network device determines the rendering division.

Optionally, if the processing capability of the terminal device cannot meet the processing requirement of the XR call, the first network device determines that split rendering is to be performed on the to-be-rendered XR object in the XR call. It may be understood that, because split rendering is performed, the processing capability of the terminal device can ensure that the terminal device renders a portion of to-be-rendered XR objects in the XR call. Further, optionally, if the processing capability of the terminal device meets the processing requirement of the XR call, the first network device may determine that split rendering is to be performed on the to-be-rendered XR object in the XR call, or may determine that the terminal device renders the to-be-rendered XR object in the XR call. This is not limited. Embodiments of this application mainly focus on a case of split rendering.

For example, the processing capability information of the terminal device includes the available rendering computing power of the terminal device. If the available rendering computing power of the terminal device cannot meet the processing requirement of the XR call, the first network device determines that split rendering is to be performed on the to-be-rendered XR object in the XR call. For another example, the processing capability information of the terminal device includes the available rendering computing power of the terminal device and the rendering division manner supported by the terminal device. If the available rendering computing power of the terminal device cannot meet the processing requirement of the XR call, and the terminal device supports split rendering, the first network device determines that split rendering is to be performed on the to-be-rendered XR object in the XR call.

Optionally, the first network device determines the rendering division for the XR object in the XR call based on at least one of the following: the processing capability information of the terminal device, the processing capability information of the second network device, and the processing requirement information of the XR call. For the processing capability information of the second network device, refer to the processing capability information of the terminal device. Details are not described herein again (it should be noted that available rendering computing power of the second network device may be determined by the second network device based on a configuration of a computing resource of the second network device, or available rendering computing power of the second network device is determined by the second network device based on a remaining computing resource or an available computing resource of the second network device, or available rendering computing power of the second network device may be determined by the first network device based on a configuration of a computing resource of the second network device, or available rendering computing power of the second network device is determined by the first network device based on a remaining computing resource or an available computing resource of the second network device, and this is not limited in this application). A manner for obtaining the processing requirement information of the XR call is not limited. For example, the terminal device sends the processing requirement information of the XR call to the first network device. For another example, the first network device generates the processing requirement information of the XR call.

Example 1: The first network device determines, based on the processing capability information of the terminal device, the rendering division for the to-be-rendered XR object in the XR call, that is, determines the division indication information.

For example, the processing capability information of the terminal device includes the available rendering computing power of the terminal device, the first network device determines, based on the available rendering computing power of the terminal device, the first portion of to-be-rendered XR objects that the terminal device is responsible for rendering, and the second network device is responsible for rendering remaining to-be-rendered XR objects.

For another example, the processing capability information of the terminal device includes the rendering division manner supported by the terminal device, and the first network device may determine the rendering division based on the rendering division manner supported by the terminal device. For example, if the rendering division manner supported by the terminal device is division by layer, the rendering division determined by the first network device may be that the terminal device renders the foreground, and the second network device renders the background. In this case, it may be assumed that the available rendering computing power of the terminal device is sufficient to render the foreground, and the available rendering computing power of the second network device is sufficient to render the background.

Example 2: The first network device determines, based on the processing capability information of the second network device, the rendering division for the XR object in the XR call, that is, determines the division indication information.

For example, the processing capability information of the second network device includes the available rendering computing power of the second network device, the first network device determines, based on the available rendering computing power of the second network device, the first portion of to-be-rendered XR objects that the second network device is responsible for rendering, and the terminal device is responsible for rendering remaining to-be-rendered XR objects.

For another example, the processing capability information of the second network device includes the rendering division manner supported by the second network device, and the first network device may determine the rendering division based on the rendering division manner supported by the second network device. For example, if the rendering division manner supported by the second network device is division by type, the rendering division determined by the first network device may be that the terminal device renders a portion of to-be-rendered XR objects (for example, a virtual desk and chair), and the second network device renders remaining to-be-rendered XR objects (for example, a virtual conference room and person). In this case, it may be assumed that available rendering computing power of the terminal device and the second network device is sufficient to render the to-be-rendered XR objects for which the terminal device and the second network device are respectively responsible.

Example 3: The first network device determines the rendering division for the XR object in the XR call based on the processing requirement information of the XR call, that is, determines the division indication information.

For example, the processing requirement information of the XR call includes the to-be-rendered XR object in the XR call, and the first network device determines the rendering division based on the to-be-rendered XR object in the XR call. For example, a portion of to-be-rendered XR objects are rendered by the terminal device, and remaining to-be-rendered XR objects are rendered by the second network device. In this case, it may be assumed that available rendering computing power of the terminal device and the second network device is sufficient to render the to-be-rendered XR objects for which the terminal device and the second network device are respectively responsible.

Example 4: The first network device determines, based on the processing capability information of the terminal device and the processing capability information of the second network device, the rendering division for the XR object in the XR call, that is, determines the division indication information.

For example, the processing capability information of the terminal device includes the available rendering computing power of the terminal device, and the processing capability information of the second network device includes the available rendering computing power of the second network device. The first network device determines, based on the available rendering computing power of the terminal device and the available rendering computing power of the second network device, the first portion of to-be-rendered XR objects that the terminal device is responsible for rendering and the second portion of to-be-rendered XR objects that the second network device is responsible for rendering. The available rendering computing power of the terminal device can meet a requirement that the terminal device renders the first portion of to-be-rendered XR objects, and the available rendering computing power of the second network device can meet a requirement that the second network device renders the second portion of to-be-rendered XR objects.

Example 5: The first network device determines, based on the processing capability information of the terminal device and the processing requirement information of the XR call, the rendering division for the XR object in the XR call, that is, determines the division indication information.

For example, the processing capability information of the terminal device includes the available rendering computing power of the terminal device. The first network device estimates, based on the processing requirement information of the XR call, computing power required for rendering the to-be-rendered XR object in the XR call, and determines, based on the computing power required for rendering the to-be-rendered XR object in the XR call and the available rendering computing power of the terminal device, the first portion of to-be-rendered XR objects that the terminal device is responsible for rendering. The second network device is responsible for rendering remaining to-be-rendered XR objects (that is, the second portion of to-be-rendered XR objects).

Example 6: The first network device determines, based on the processing capability information of the second network device and the processing requirement information of the XR call, the rendering division for the XR object in the XR call, that is, determines the division indication information.

For example, the processing capability information of the second network device includes the available rendering computing power of the second network device. The first network device estimates, based on the processing requirement information of the XR call, computing power required for rendering the to-be-rendered XR object in the XR call, and determines, based on the computing power required for rendering the to-be-rendered XR object in the XR call and the available rendering computing power of the second network device, the second portion of to-be-rendered XR objects that the second network device is responsible for rendering. The terminal device is responsible for rendering remaining to-be-rendered XR objects (that is, the first portion of to-be-rendered XR objects).

Example 7: The first network device determines, based on the processing capability information of the terminal device, the processing capability information of the second network device, and the processing requirement information of the XR call, the rendering division for the XR object in the XR call, that is, determines the division indication information.

For example, the processing capability information of the second network device includes the available rendering computing power of the second network device, and the processing capability information of the terminal device includes the available rendering computing power of the terminal device. The first network device estimates, based on the processing requirement information of the XR call, computing power required for rendering the to-be-rendered XR object in the XR call, and determines, based on the computing power required for rendering the to-be-rendered XR object in the XR call, the available rendering computing power of the second network device, and the available rendering computing power of the terminal device, the first portion of to-be-rendered XR objects that the terminal device is responsible for rendering and the second portion of to-be-rendered XR objects that the second network device is responsible for rendering.

The foregoing examples are examples for description, and this embodiment of this application is not limited thereto.

It may be understood that, in the foregoing example, if the terminal device and the second network device support different rendering division manners, for example, the terminal device may render the to-be-rendered XR object in the XR call.

Optionally, if the first network device and the second network device are different devices, the first network device sends a request message to the second network device, where the request message is used to request at least one of the following: address information of the second network device and rendering resource information of the second network device; and the first network device receives, from the second network device, a response to the request message. For example, if the request message is used to request the address information of the second network device, the response to the request message carries the address information of the second network device. Further, the first network device may send the address information to the terminal device. For another example, if the request message is used to request the rendering resource information used by the second network device to render the second portion of to-be-rendered XR objects, the response to the request message is used to notify a resource application result, that is, whether the second network device is to perform rendering. In a possible implementation, the request message is used to request the rendering resource information used by the second network device to render the second portion of to-be-rendered XR objects, and if the response to the request message includes the address information of the second network device, it means that the second network device agrees to perform rendering. In another possible implementation, the request message is used to request the rendering resource information used by the second network device to render the second portion of to-be-rendered XR objects, and the response to the request message may include information directly indicating whether the second network device is to perform rendering.

For example, the request message includes computing power required by the second network device to render the second portion of to-be-rendered XR objects. The computing power required by the second network device to render the second portion of to-be-rendered XR objects is used by the second network device to allocate a resource used to render the second portion of to-be-rendered XR objects.

The address information of the second network device is used to enable a terminal device related to the XR call to connect to the second network device through the third network device. For example, it is assumed that an XR call is performed between the terminal device and another terminal device, the address information of the second network device includes a local connection address of a first resource endpoint and a local connection address of a second resource endpoint, and the local connection address of the first resource endpoint and the local connection address of the second resource endpoint are respectively used by a local terminal device (for example, UE #1 in FIG. 5A and FIG. 5B to FIG. 8A and FIG. 8B) and a peer terminal device (for example, UE #2 in FIG. 5A and FIG. 5B to FIG. 8A and FIG. 8B) to connect to the second network device through the third network device. For example, the local terminal device is connected to the second network device through the third network device, and the peer terminal device is connected to the second network device through the third network device. For example, the first network device sends a request message to the second network device, where the request message is used to request the address information of the second network device, that is, it indicates that the request message is used to request to create or allocate an endpoint resource. Correspondingly, the second network device may create or allocate a corresponding resource endpoint (also referred to as a media endpoint), and may further return information about the corresponding resource endpoint to the first network device. The resource endpoint is the first resource endpoint and the second resource endpoint, and the information about the resource endpoint includes the local connection address of the first resource endpoint and the local connection address of the second resource endpoint.

The rendering resource information is information about a resource used by the second network device to render the to-be-rendered XR object that is to be rendered by the second network device. For example, the first network device sends a request message to the second network device. The request message is used to request the rendering resource information of the second network device, that is, it indicates that the request message is used to request the second network device to reserve or allocate a computing power resource. Correspondingly, the second network device may reserve or allocate a corresponding computing power resource.

For ease of understanding, the following describes possible procedures applicable to embodiments of this application. It may be understood that the following mainly uses an example in which rendering negotiation is performed in a session call for description. Therefore, the XR call below may also be replaced with a session (or referred to as an XR session).

FIG. 5A and FIG. 5B are a schematic flowchart of an XR object rendering method 500 according to an embodiment of this application. The method 500 may be used to implement the solution of the foregoing method 400. In the method 500, it is assumed that the first network device and the second network device are the same, that is, are a network device in FIG. 5A and FIG. 5B. Alternatively, the network device in FIG. 5A and FIG. 5B is a system including the first network device and the second network device. The method 500 may include the following steps.

501: UE #1 sends a processing capability of UE #1 to the network device.

The UE #1 reports the processing capability of the UE #1 to the network device, that is, processing capability information of the UE #1, so that in a subsequent session establishment process, the network device can perform rendering negotiation between the UE #1 and the network device based on the processing capability of the UE #1.

Optionally, the processing capability includes a parameter A and a parameter B.

The parameter A indicates a supported rendering division manner. For example, rendering division manners supported by the UE #1 include division by layer and division by type. Division by layer indicates that rendering can be performed by layer. For example, rendering is performed with differentiation between the foreground and the background.

For example, "0" represents division by layer, and "1" represents division by type. If a value of the parameter A is 0, it indicates that the supported rendering division manner is division by layer. If a value of the parameter A is 1, it indicates that the supported rendering division manner is division by type. If a value of the parameter A includes 0 and 1, it indicates that the supported rendering division manner includes division by layer and division by type.

The parameter B represents available rendering computing power, that is, available computing power for rendering an XR object by the terminal device. A value of the parameter B may be a static value determined by the terminal device based on a configuration (for example, a CPU model or a quantity of memory modules) of a computing resource of the terminal device, or may be dynamically obtained through calculation based on a current hardware resource idleness degree (that is, a remaining computing resource or an available computing resource of the terminal device) and the like of the terminal device during session establishment. This is not limited. The following describes two possible manners that can reflect the available rendering computing power.

Manner 1: A definition is based on remaining available power consumption limited by a GPU, and a value may be in a unit of watt. For example, overall power consumption of AR glasses is about 0.5 watts to 2 watts, and overall power consumption of a VR all-in-one machine is about 3 watts to 7 watts. The UE #1 may determine the value of the parameter B based on a configuration of the UE #1.

Manner 2: A definition is based on remaining available computing power of a GPU, and a value may be a quantity of floating point operations per second (floating point operations per second, TFLOPS).

It may be understood that, when rendering negotiation is performed between the UE #1 and the network device, a same computing power expression manner is used, for example, the foregoing manner 1 or the foregoing manner 2 is used, to ensure consistency.

The foregoing parameters are examples for description, and this embodiment of this application is not limited thereto. For example, the processing capability includes the parameter B and a parameter indicating a forbidden rendering division manner.

502: The network device stores the processing capability of the UE #1.

Optionally, the method 500 further includes step 503 and step 504.

503: The network device sends a processing capability of the network device to the UE #1.

For the processing capability of the network device, refer to the processing capability of the UE #1 in step 501. Details are not described herein again.

504: The UE #1 determines that the network device can render an XR object.

The UE #1 may learn, based on the processing capability of the network device, whether the network device can render an XR object, that is, whether the network device supports XR object rendering. Step 503 and step 504 are optional steps, that is, the network device may not need to provide the processing capability of the network device for the UE #1, and the UE #1 may consider by default that the network device can render an XR object.

The following describes a rendering negotiation process with reference to four scenarios.

Scenario 1: The UE #1 initiates an initial session call.

5111: The UE #1 sends a session call request to the network device.

It may be understood that the processing capability of the UE #1 reported by the UE #1 in step 501 may alternatively be sent in step 5111. In other words, the method 500 may not include 501, and in step 5111, the session call request includes the processing capability of the UE #1.

Optionally, the session call request includes a processing requirement of an XR call.

In a possible case, the UE #1 considers by default that the network device supports XR object rendering. Therefore, the UE #1 includes the processing requirement of the XR call in the session call request, to request to perform rendering negotiation with the network device.

In another possible case, the UE #1 determines, based on the processing capability of the network device received in step 503, whether the network device supports XR object rendering. If the UE #1 determines that the network device supports XR object rendering, the UE #1 includes the processing requirement of the XR call in the session call request, to request to perform rendering negotiation with the network device. If the UE #1 determines that the network device does not support media rendering, the UE #1 does not include the processing requirement of the XR call in the session call request. For a case in which the network device does not support XR object rendering, for example, the UE #1 may perform rendering processing. This embodiment of this application mainly describes a case in which the network device supports XR object rendering.

Optionally, the processing requirement of the XR call includes one or more of a parameter C, a parameter D, and a parameter E.

The parameter C represents a to-be-rendered XR object, that is, an XR object to be rendered. For example, "0" represents a virtual conference room, "1" represents a virtual person, "2" represents a virtual chair, and "3" represents a virtual desk. If a value of the parameter C includes 0, 1, and 2, it indicates that to-be-rendered XR objects include a virtual conference room, a virtual person, and a virtual chair.

The parameter D represents video resolution, and may define a length and a width of a video picture. For example, a value of the parameter D is 1920,1080, which indicates that the video resolution is 1920,1080.

The parameter E represents a video frame rate. For example, a value of the parameter E is 30, which indicates that the video frame rate is 30 frames/second.

5112: The network device determines division indication information based on the processing requirement of the XR call and the processing capability of the UE #1.

A manner for obtaining the processing requirement of the XR call is as follows:
In a possible implementation, the session call request in step 5111 includes the processing requirement of the XR call.

In another possible implementation, the network device generates the processing requirement of the XR call. In an example, the network device generates the processing requirement of the XR call based on XR application service logic and a session parameter. In this manner, the session call request in step 5111 may not carry the processing requirement of the XR call.

A manner for determining the division indication information is as follows:
In a possible implementation, the network device determines the division indication information based on the processing requirement of the XR call and the processing capability of the UE #1. For example, the network device may determine, based on the processing requirement of the XR call and the processing capability of the UE #1, whether a rendering computing power requirement of all to-be-rendered XR objects in the current XR call exceeds available rendering computing power of the UE #1, that is, whether the available rendering computing power of the UE #1 meets the computing power requirement of the to-be-rendered XR objects in the current XR call. If rendering computing power required for the to-be-rendered XR objects in the current XR call exceeds the available rendering computing power of the UE #1, the network device may determine to perform split rendering on the to-be-rendered XR objects in the current XR call. That is, for the to-be-rendered XR objects, the network device renders a portion of XR objects, and the UE #1 renders a portion of XR objects. For example, the portion of XR objects rendered by the network device may be XR objects corresponding to a case that the rendering computing power required for the to-be-rendered XR objects in the current XR call exceeds the available rendering computing power of the UE #1. It may be understood that, because split rendering is performed, the available rendering computing power of the UE #1 is greater than or equal to a preset value, that is, the UE #1 can render a portion of XR objects.

In another possible implementation, the network device determines the division indication information based on the processing requirement of the XR call, the processing capability of the UE #1, and the processing capability of the network device. For example, the network device may obtain an XR call rendering computing power requirement through calculation based on the processing requirement of the XR call, determine whether the XR call rendering computing power requirement exceeds the processing capability (for example, available rendering computing power) of the terminal device, and determine the division indication information with reference to the processing capability of the network device. If rendering computing power required for the to-be-rendered XR objects in the current XR call exceeds the available rendering computing power of the UE #1, the network device may determine to perform split rendering on the to-be-rendered XR objects in the current XR call. That is, for the to-be-rendered XR objects, the network device renders a portion of XR objects, and the UE #1 renders a portion of XR objects. The network device may divide a rendering task based on available rendering computing power of the network device and the available rendering computing power of the UE #1. For example, the portion of XR objects rendered by the network device may be XR objects corresponding to a case that the rendering computing power required for the to-be-rendered XR objects in the current XR call exceeds the available rendering computing power of the UE #1. It may be understood that, because split rendering is performed, the available rendering computing power of the UE #1 is greater than or equal to a preset value, that is, the UE #1 can render a portion of XR objects.

It may be understood that the foregoing two implementations are examples for description, and this embodiment of this application is not limited thereto. For example, refer to other implementations in the method 400.

The following describes an implementation in which the network device determines whether the rendering computing power required in the current XR call exceeds the available rendering computing power of the UE #1.

In a possible implementation, the network device may perform matching on baseline data based on video resolution, an object volume, a video frame rate, and the like of a to-be-rendered XR object, to estimate power consumption or equivalent TFLOPS required for rendering the to-be-rendered XR object, and then determine whether rendering computing power required for the to-be-rendered XR object in the current XR call exceeds the available rendering computing power of the UE #1. For example, a benchmark test may be performed by using a GPU test tool to determine power consumption or equivalent TFLOPS required for rendering the to-be-rendered XR object. First, in a test process, a unified input may be used, for example, including but not limited to a render shader, light, and a shadow, and a plurality of 3D models with a series of different video resolution and different sizes are prepared. Rendering of different 3D models in the GPU test tool is tested, to obtain required power consumption or equivalent TFLOPS as reference data. Then, corresponding power consumption or equivalent TFLOPS is calculated based on an XR object in an actual XR call with reference to video resolution and a video frame rate that are corresponding to a same 3D model in the reference data, to obtain power consumption or equivalent TFLOPS required for rendering the to-be-rendered XR object.

If rendering computing power required for the to-be-rendered XR objects in the current XR call exceeds the available rendering computing power of the UE #1, the network device may determine to perform split rendering on the to-be-rendered XR objects in the current XR call. That is, for the to-be-rendered XR objects, the network device renders a portion of XR objects, and the UE #1 renders a portion of XR objects. The following provides a specific example with reference to Table 1. Table 1 shows power consumption and equivalent TFLOPS consumed by several 3D models for rendering at different video resolution or volumes and different video frame rates.

**Table 1**

| 3D model | Resolution/Volume | Frame rate | Power consumption (W) | Equivalent TFLOPS |
|---|---|---|---|---|
| Virtual conference room | 1920*1080 | 15 | 2 | 0.4 |
| | 1920*1080 | 30 | 4 | 0.8 |
| | 4K | 15 | 10 | 1.6 |
| | 4K | 30 | 20 | 3.2 |
| Virtual chair | 1 cubic meter | 15 | 0.5 | 0.1 |
| | 1 cubic meter | 30 | 1 | 0.2 |
| Virtual desk | 10 cubic meters | 15 | 3 | 0.6 |
| | 10 cubic meters | 30 | 6 | 1.2 |

Table 1 is used as an example. For example, it is assumed that the value of the parameter B in the processing capability of the UE #1 is 4 watts, the parameter C in the processing requirement of the XR call indicates that to-be-rendered XR objects include a virtual conference room, a virtual chair, and a virtual desk, video resolution in the parameter D is 1920*1080, and a video frame rate in the parameter E is 30. The network device may learn, according to Table 1, that a power consumption requirement for XR object rendering is as follows: Power consumption of the virtual conference room is 4 watts, power consumption of the virtual chair is 1 watt, and power consumption of the virtual desk is 6 watts. Therefore, the network device learns, through calculation, that the power consumption requirement for rendering the to-be-rendered XR object is 11 watts, which exceed the processing capability (that is, 4 watts) of the UE #1. Therefore, for the to-be-rendered XR object, the network device renders a portion of XR objects, and the UE #1 renders a portion of XR objects. For example, the portion of XR objects rendered by the network device may be XR objects corresponding to a case that the rendering computing power required for the to-be-rendered XR objects in the current XR call exceeds the available rendering computing power of the UE #1. For example, the network device may determine that the to-be-rendered XR object that the UE #1 is responsible for rendering is a virtual conference room, and the to-be-rendered XR objects that the network device is responsible for rendering are a virtual chair and a virtual desk.

5113: The network device sends the division indication information to the UE #1.

In other words, the network device sends the division indication information to the UE #1. For example, the network device sends a session call response to the UE #1, and the session call response carries a rendering negotiation result of the current XR call, that is, the division indication information.

In an example, the division indication information includes a parameter F and a parameter G.

The parameter F represents a rendering division manner in the XR call, that is, a manner of split rendering on the to-be-rendered XR object in the XR call. A definition of a value of the parameter F is the same as that of the value of the parameter A in step 501. For example, it is assumed that if the value of the parameter A in step 501 is 0, it indicates that the supported rendering division manner includes division by layer, or if the value of the parameter A is 1, it indicates that the supported rendering division manner includes division by type. In this case, in step 5113, if the value of the parameter F is 0, it indicates that the rendering division manner that is for the XR call and that is determined by the network device is division by layer; or if the value of the parameter F is 1, it indicates that the rendering division manner that is for the XR call and that is determined by the network device is division by type.

The parameter G represents a to-be-rendered XR object that the network device is responsible for rendering. The UE #1 may learn, based on the parameter G and all to-be-rendered XR objects, a to-be-rendered XR object that the UE #1 is responsible for rendering. A definition of a value of the parameter G is the same as that of the value of the parameter C in step 5111. For example, it is assumed that values of the parameter C in step 5111 include 0, 1, 2, and 3, and meanings are as follows: "0" represents a virtual conference room, "1" represents a virtual person, "2" represents a virtual chair, and "3" represents a virtual desk. In the foregoing example, if the to-be-rendered XR object that the network device is responsible for rendering includes the virtual chair and the virtual desk, the value of the parameter G may include 2 and 3. In addition, if all the to-be-rendered XR objects include the virtual conference room, the virtual chair, and the virtual desk, the UE #1 learns, based on all the to-be-rendered XR objects and the to-be-rendered XR objects that the network device is responsible for rendering, that the UE #1 is responsible for rendering the "virtual conference room".

It may be understood that the foregoing is an example for description, and this embodiment of this application is not limited thereto. For example, the division indication information includes parameters F and H, where the parameter H represents the to-be-rendered XR object that the UE #1 is responsible for rendering. To be specific, the UE #1 may learn, based on all the to-be-rendered XR objects and the to-be-rendered XR object that the UE #1 is responsible for rendering, the to-be-rendered XR object that the network device is responsible for rendering. For another example, the division indication information includes a parameter G and a parameter H. For another example, the division indication information includes a parameter F, a parameter G, and a parameter H.

Scenario 2: The UE #1 receives an initial session call.

5121: The network device sends a session call request to the UE #1.

Optionally, the session call request is used to request a processing requirement of an XR call of the UE #1.

5122: The UE #1 sends a session call response to the network device.

If the session call request in step 5121 is used to request the processing requirement of the XR call of the UE #1, the session call response in step 5122 carries the processing requirement of the XR call of the UE #1.

It may be understood that the processing capability of the UE #1 reported by the UE #1 in step 501 may alternatively be sent in step 5122. In other words, the method 500 may not include 501, and in step 5122, the session call response includes the processing capability of the UE #1.

5123: The network device determines division indication information based on the processing requirement of the XR call and the processing capability of the UE #1.

A manner for obtaining the processing requirement of the XR call is as follows:
In a possible implementation, the session call response in step 5122 includes the processing requirement of the XR call.

In another possible implementation, the network device generates the processing requirement of the XR call. In an example, the network device generates the processing requirement of the XR call based on XR application service logic and a session parameter. In this manner, the session call response in step 5122 may not carry the processing requirement of the XR call.

For an implementation in which the network device determines the division indication information, refer to the related description in step 5112. Details are not described herein again.

5124: The network device sends the division indication information to the UE #1.

For example, the network device sends a session call response acknowledgement message to the UE #1, and the session call response acknowledgement message carries a rendering negotiation result of the current XR call, that is, the division indication information.

For the division indication information, refer to the related description in step 5113. Details are not described herein again.

Scenario 3: The UE #1 initiates a session update call.

5131: The UE #1 sends a session update call request to the network device.

5132: The network device determines division indication information based on an updated processing requirement of the XR call and the processing capability of the UE #1.

In this embodiment of this application, it is assumed that the processing requirement of the XR call changes, and consequently, a rendering task needs to be redivided. Therefore, in step 5132, the network device may determine new division indication information based on the updated processing requirement of the XR call and the processing capability of the UE #1.

5133: The network device sends the division indication information to the UE #1.

Step 5131 to step 5133 are similar to step 5111 to step 5113, and details are not described herein again.

Scenario 4: The UE #1 receives a session update call.

5141: The network device sends a session update call request to the UE #1.

5142: The UE #1 sends a session update call response to the network device.

5143: The network device determines division indication information based on an updated processing requirement of the XR call and the processing capability of the UE #1.

In this embodiment of this application, it is assumed that the processing requirement of the XR call changes, and consequently, a rendering task needs to be redivided. Therefore, in step 5143, the network device may determine new division indication information based on the updated processing requirement of the XR call and the processing capability of the UE #1.

5144: The network device sends the division indication information to the UE #1.

Step 5141 to step 5144 are similar to step 5121 to step 5124, and details are not described herein again.

The foregoing provides example descriptions with reference to four scenarios. Regardless of the foregoing scenario, after the division indication information is determined, the following steps may be included.

521: The UE #1 determines, based on the division indication information, a to-be-rendered XR object that the network device is responsible for rendering.

In a possible implementation, if the division indication information includes the parameter G, that is, the division indication information includes the to-be-rendered XR object that the network device is responsible for rendering, the UE #1 may directly determine, based on the parameter G, the to-be-rendered XR object that the network device is responsible for rendering.

In another possible implementation, if the division indication information includes the parameter H, that is, the division indication information includes the to-be-rendered XR object that the UE #1 is responsible for rendering, the UE #1 may learn, based on all the to-be-rendered XR objects and the to-be-rendered XR object that the UE #1 is responsible for rendering, the to-be-rendered XR object that the network device is responsible for rendering.

522: The UE #1 sends, to the network device, the to-be-rendered XR object that the network device is responsible for rendering.

The UE #1 may send, to the network device, related data of the XR object that needs to be rendered by the network device. For example, if the network device is responsible for rendering the "virtual chair" and the "virtual desk", the UE #1 may send location coordinates of the "virtual desk" and the "virtual chair" in a video picture to the network device.

523: The network device renders the to-be-rendered XR object that the network device is responsible for rendering.

If the network device is responsible for rendering the "virtual chair" and the "virtual desk", and the network device receives the location coordinates of the "virtual desk" and the "virtual chair" in the video picture from the UE #1, the network device may render the "virtual desk" and the "virtual chair" based on the location coordinates of the "virtual desk" and the "virtual chair" in the video picture.

524: The UE #1 renders the to-be-rendered XR object that the UE #1 is responsible for rendering.

525: The UE #1 sends media data corresponding to a rendered XR object to the network device.

After completing rendering, the UE #1 sends the media data of the rendered XR object (for example, the rendered "virtual conference room" in the foregoing example) to the network device.

526: The network device merges the media data corresponding to the XR object rendered by the UE #1 and media data corresponding to the XR object rendered by the network device, to obtain merged media data.

After receiving the media data corresponding to the XR object (for example, the rendered "virtual conference room" in the foregoing example) rendered by the UE #1, the network device may merge the media data corresponding to the XR object rendered by the UE #1 and the media data corresponding to the XR object (for example, the rendered "virtual desk" and "virtual chair" in the foregoing example) rendered by the network device.

For example, the network device may perform, in a renderer based on video frames with a same timestamp, image synthesis on an XR object video stream rendered by the network side and an XR object video stream rendered by the UE #1. During synthesis, a relationship about a foreground, a background, a block, a shadow, and the like may be considered, to output a complete video frame image, to form a video image sequence. The video image sequence may be sent to the terminal device in a form of a video stream. The following mainly uses sending in a form of a video stream as an example for description.

527: The network device sends the merged media data to UE #2.

For example, the network device sends a merged video stream to the UE #2.

The UE #2 represents UE related to a call service, and is peer UE of the UE #1. For example, an XR call service is performed between the UE #1 and the UE #2, and the network device sends the merged video stream to the UE #2. In this way, the UE #2 may display a rendered XR object based on the received video image sequence, so that a user of the UE #2 sees an XR object with 3D effect. It may be understood that the network device may directly send the merged video stream to the UE #2, or may send the merged video stream through another device (for example, a network device to which the UE #2 belongs). This is not limited. It may be understood that the UE #1 may perform an XR call (that is, a conference) with a plurality of UEs, and the network device separately sends the merged video stream to the plurality of UEs.

Optionally, the network device may also send the merged media data to the UE #1. In this way, the UE #1 may also display the rendered XR object, so that a user of the UE #1 sees the XR object with 3D effect.

Based on the foregoing technical solution, the terminal device reports the processing capability of the terminal device to the network device, and the network device may also notify the terminal device of the processing capability of the terminal device. In other words, the terminal device and the network device may exchange respective processing capabilities. When the terminal device determines that the network device supports XR object rendering, the terminal device may include the processing requirement of the XR call in the session call request, and request to perform rendering negotiation with the network device. The network device may obtain required XR object rendering computing power through calculation based on the processing requirement of the XR call, and determine whether the required XR object rendering computing power exceeds available rendering computing power of the terminal device. If the required XR object rendering computing power exceeds the available rendering computing power of the terminal device, a rendering division for the current session may be further determined with reference to the processing capability of the network device, and a rendering negotiation result is notified to the terminal device. The terminal device may determine, based on the rendering negotiation result, which XR objects are to be rendered on the terminal device, and which XR objects are to be rendered on the network device. For an XR object that needs to be rendered by the network device, the terminal device may send data to be rendered by the network device to the network device. Finally, the network device may merge the media data corresponding to the XR object rendered by the network device and the media data corresponding to the XR object rendered by the terminal device, and send the merged media data to the terminal device in the current session. In addition, if a media rendering task may need to be redivided due to some cases in a session process, for example, a change in the processing requirement of the XR call, the terminal device or the network device may initiate a session update request, and re-perform rendering negotiation based on an updated processing requirement of the XR call.

It may be understood that, in the solution shown in FIG. 5A and FIG. 5B, a specific division is determined by the network device (for example, steps 5112 and 5123). This is not limited. In a possible solution, a specific division may alternatively be determined by the terminal device.

For example, the UE #1 may determine division indication information based on the processing requirement of the XR call and the processing capability information of the UE #1 (for details, refer to the description in step 5112), and then step 521 to step 527 are performed. Optionally, before step 521 is performed, the UE #1 may further send the division indication information to the network device.

For another example, the UE #1 sends an XR object rendering request to the network device, and the network device returns an XR object rendering response, where the response includes indication information, and the indication information indicates that the network device is to render an XR object for the UE #1. After determining that the network device is to assist in rendering the XR object, the UE #1 determines a to-be-rendered XR object that the network device is responsible for rendering, and then performs step 522. In this example, optionally, the XR object rendering response returned by the network device may further include processing capability information of the network device (similar to the processing capability information of the UE #1 in step 5112). In this way, the UE #1 may determine the specific division based on information such as the processing capability information of the network device (for details, refer to the description in step 5112), that is, determine which portion of to-be-rendered XR objects are to be rendered by the network device, and then perform step 522. It may be understood that the network device may decide to reserve all current remaining processing capabilities for rendering of the XR object of the UE #1, or may decide to reserve some of all current remaining processing capabilities for rendering of the XR object of the UE #1. That is, the processing capability information returned by the network device through the XR object rendering response may represent all current remaining processing capabilities of the network device, or may represent some of all current remaining processing capabilities. For example, the network device reserves 5% of all the current remaining processing capabilities for rendering the XR object of the UE #1, that is, the returned processing capability information represents the 5% of the processing capabilities, so that the UE #1 allocates a to-be-rendered XR object to the network device based on the 5% of the processing capabilities. This can avoid that the UE #1 allocates a rendering task for excessive XR objects to the network device, or avoid that a resource of the network device is exclusively occupied by one UE.

It may be further understood that, in the solution shown in FIG. 5A and FIG. 5B, an example in which the network device merges the media data corresponding to the XR object rendered by the UE #1 and the media data corresponding to the XR object rendered by the network device is used for description. This is not limited. For example, the UE #2 may alternatively perform merging processing. For example, the UE #1 sends the media data corresponding to the rendered XR object to the UE #2, and the network device sends the media data corresponding to the rendered XR object to the UE #2. The UE #2 performs merging processing. For another example, another device may alternatively perform merging processing, and details are not described again.

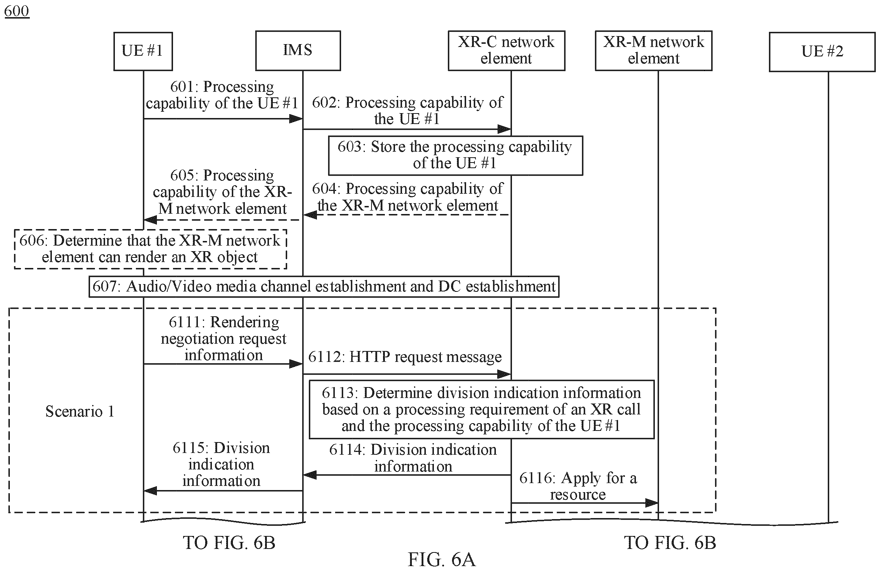

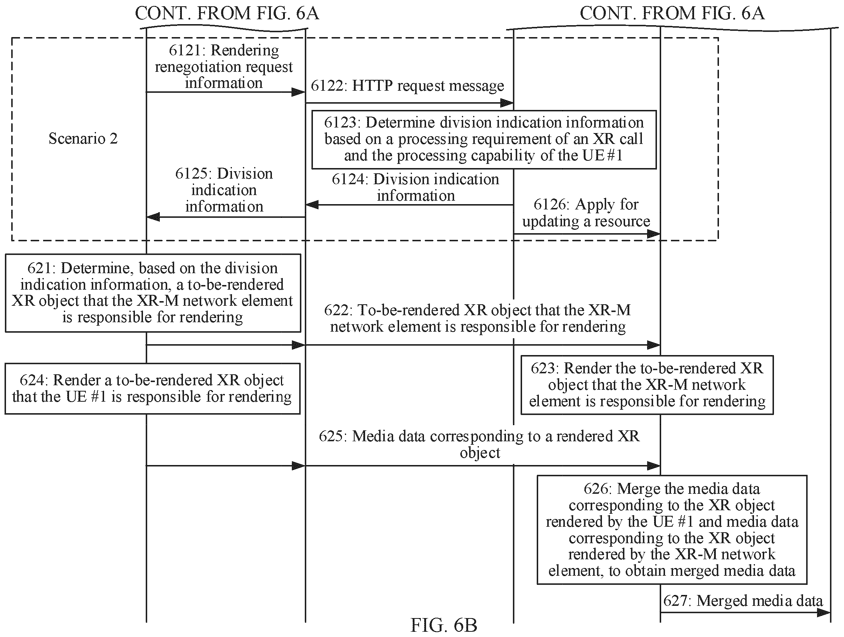

FIG. 6A and FIG. 6B are a schematic flowchart of an XR object rendering method 600 according to an embodiment of this application. The method 600 may be used to implement the solution of the foregoing method 400. The method 600 may be used in a DC-based rendering negotiation scenario, and rendering negotiation may be performed, for example, after a DC is established. In the method 600, the first network device is an XR-C network element, the second network device is an XR-M network element, and an IMS includes one or more network elements. For example, refer to the architecture shown in FIG. 1. "IMS" is used for unified representation below. In an example, the method 600 shown in FIG. 6A and FIG. 6B may be used in the architecture in FIG. 1. The method 600 may include the following steps.

601: UE #1 sends a processing capability of the UE #1 to the IMS.

In a possible implementation, in a process of registering with the IMS, the UE #1 sends the processing capability of the UE #1 to the IMS. For example, the UE #1 sends a SIP registration (REGISTER) message to the IMS, and the SIP REGISTER message carries the processing capability of the UE #1. For example, the processing capability of the UE #1 may be carried in a header field of SIP signaling (for example, a SIP REGISTER message).

For example, a form of the processing capability of the UE #1 is as follows:
XR-Capability: split_rendering_method=0,1;rendering_capability=0/1/2

Herein, "split_rendering_method" represents a parameter A, that is, a rendering division manner supported by the UE #1. "rendering_capability" represents a parameter B, that is, available rendering computing power of the UE #1. In an example, a value of "split_rendering_method" includes 0 and 1, indicating that supported rendering division manners include division by layer and division by type. For the parameter A and the parameter B, refer to the foregoing related descriptions. Details are not described herein again.

602: The IMS sends the processing capability of the UE #1 to the XR-C network element.

For example, after successfully authenticating the UE #1 for registration, the IMS forwards the processing capability of the UE #1 to the XR-C network element. For example, the IMS sends an HTTP message to the XR-C network element, and the HTTP message carries the processing capability of the UE #1.

603: The XR-C network element stores the processing capability of the UE #1.

Optionally, the method 500 further includes step 604 to step 606.

604: The XR-C network element sends a processing capability of the XR-M network element to the IMS.

In a possible implementation, the XR-C network element sends an HTTP response message (for example, a 200 message) to the IMS, and the HTTP response message includes the processing capability of the XR-M network element.

605: The IMS sends the processing capability of the XR-M network element to the UE #1.

606: The UE #1 determines that the XR-M network element can render an XR object.

The UE #1 may learn, based on the processing capability of the XR-M network element, whether the XR-M network element can render an XR object, that is, whether the XR-M network element supports XR object rendering. Step 604 to step 606 are optional steps, that is, the XR-C network element may not need to provide the processing capability of the XR-M network element for the UE #1, and the UE #1 may consider by default that the XR-M network element can render an XR object.

607: Perform audio/video media channel establishment and DC establishment.

When initiating an XR call or receiving an XR call, the UE #1 may first establish an audio/video media channel with the IMS, and establish a DC between the UE #1 and the IMS. The DC between the UE #1 and the IMS may be used to transmit signaling or data between the UE #1 and the IMS, for example, related information of rendering division interaction and/or related data of an XR object. It may be understood that signaling exchanged between the UE #1 and the IMS below may be transmitted through the DC.

The following describes a rendering negotiation process with reference to two scenarios.

Scenario 1: The UE #1 initiates rendering negotiation.

6111: The UE #1 sends rendering negotiation request information to the IMS.

It may be understood that the processing capability of the UE #1 reported by the UE #1 in step 601 may alternatively be sent in step 6111. In other words, the method 600 may not include 601, and in step 6111, the rendering negotiation request information includes the processing capability of the UE #1.

Optionally, the rendering negotiation request information includes a processing requirement of an XR call.

In a possible case, the UE #1 considers by default that the XR-M network element supports XR object rendering. Therefore, the UE #1 includes the processing requirement of the XR call in the rendering negotiation request information.

In another possible case, the UE #1 determines, based on the processing capability of the XR-M network element received in step 605, whether the XR-M network element supports media rendering. If the UE #1 determines that the XR-M network element supports XR object rendering, the UE #1 includes the processing requirement of the XR call in the rendering negotiation request information. If the UE #1 determines that the XR-M network element does not support XR object rendering, the UE #1 does not include the processing requirement of the XR call in the rendering negotiation request information. For a case in which the XR-M network element does not support XR object rendering, for example, the UE #1 may perform rendering processing. This embodiment of this application mainly describes a case in which the XR-M network element supports XR object rendering.

Optionally, the processing requirement of the XR call includes a parameter C, a parameter D, and a parameter E. For details, refer to the related description in 5111. Details are not described herein again.

In an example, a form of the processing requirement of the XR call is as follows:
XR-Session-Attribute:
rendering_content=0,1,2,3;video_resolution=1920,1080;video_frame_rate=30

Herein, "rendering_content" represents the parameter C, that is, a to-be-rendered XR object. "video_resolution" represents the parameter D, that is, a video resolution. "video_frame_rate" represents the parameter E, that is, a video frame rate.

6112: The IMS sends an HTTP request message to the XR-C network element.

Optionally, if the rendering negotiation request information in step 6111 includes the processing requirement of the XR call, the HTTP request message in step 6112 also includes the processing requirement of the XR call.

6113: The XR-C network element determines division indication information based on the processing requirement of the XR call and the processing capability of the UE #1.

A manner for obtaining the processing requirement of the XR call is as follows:

In a possible implementation, the HTTP message in step 6112 includes the processing requirement of the XR call.

In another possible implementation, the XR-C network element generates the processing requirement of the XR call. In an example, the XR-C network element generates the processing requirement of the XR call based on XR application service logic and a session parameter.

Optionally, when determining the division indication information, the XR-C network element may further comprehensively consider the processing capability of the XR-M network element, the processing capability of the UE #1, and the processing requirement of the XR call. Further, optionally, the XR-M network element sends the processing capability of the XR-M network element to the XR-C network element. For an implementation of determining the division indication information, refer to the related description in step 5112. Details are not described herein again.

6114: The XR-C network element sends the division indication information to the IMS.

In a possible implementation, the XR-C network element sends an HTTP response message to the IMS, and the HTTP response message carries a rendering negotiation result of the current XR call, that is, the division indication information.

Optionally, the division indication information includes at least one of the following: a parameter F, a parameter G, and a parameter H. For details, refer to the related description in step 5113. Details are not described herein again.

In an example, a form of the division indication information is as follows:
XR-Session-Negotiation:split_rendering_method=0/1;network_rendering_content=0,1,2

Herein, "split_rendering_method" represents the parameter F, that is, a rendering division manner for the XR call. A definition of a value of the parameter F is the same as that of the value of the parameter A in step 601. "network_rendering_content" represents the parameter G, that is, a to-be-rendered XR object that the XR-M network element is responsible for rendering. A definition of a value of the parameter G is the same as that of the value of the parameter C in step 6111. For details, refer to the related description in step 5113. Details are not described herein again.

6115: The IMS sends the division indication information to the UE #1.

After receiving the division indication information sent by the XR-C network element, the IMS forwards the division indication information to the UE #1.

In a possible implementation, the IMS sends a rendering negotiation response to the UE #1, and the rendering negotiation response carries the division indication information.

6116: The XR-C network element applies to the XR-M network element for a resource.

When determining, based on the division indication information, that the XR-M network element needs to render an XR object, the XR-C network element may apply to the XR-M network element for a resource, that is, request the XR-M network element to render a to-be-rendered XR object that the XR-M network element is responsible for rendering. In a possible implementation, the XR-C network element sends an HTTP request message to the XR-M network element, where the HTTP request message is used to apply to the XR-M network element for a resource related to XR object rendering.

For example, that the XR-C network element applies to the XR-M for a resource includes: The XR-C network element requests the XR-M network element to create or allocate an endpoint resource. Correspondingly, the XR-M network element creates or allocates a corresponding resource endpoint (also referred to as a media endpoint), and returns information about the corresponding resource endpoint (corresponding to the address information of the network-side rendering device in the summary) to the XR-C network element. For example, after receiving the HTTP request, the XR-M network element creates or allocates two resource endpoints, which are respectively a first resource endpoint and a second resource endpoint. An attribute of the first resource endpoint includes a local connection address of the first resource endpoint, and an attribute of the second resource endpoint includes a local connection address of the second resource endpoint. The local connection address of the first resource endpoint and the local connection address of the second resource endpoint are respectively used to enable the UE #1 to establish a communication connection with the XR-M network element through an IMS (an IMS accessed by the UE #1) and enable the UE #2 to establish a communication connection with the XR-M network element through an IMS (an IMS accessed by the UE #2).

For example, that the XR-C network element applies to the XR-M for a resource may alternatively include: The XR-C network element requests the XR-M network element to reserve or allocate a computing power resource. Correspondingly, the XR-M network element reserves or allocates a corresponding computing power resource, for example, memory, a CPU slot, or a GPU resource. Optionally, the XR-C network element sends information about a to-be-rendered XR object or an XR computing power requirement to the XR-M network element. The XR computing power requirement indicates computing power to be consumed by the to-be-rendered XR object that is to be rendered by the XR-M network element. In this way, the XR-M network element can reserve or allocate the corresponding computing power resource based on the information about the to-be-rendered XR object or the XR computing power requirement.

Optionally, the resource application result returned by the XR-M network element to the XR-C network element includes at least one of the following: result indication information and information about a resource endpoint. The result indication information may be used to notify the XR-C network element whether the XR-M network element is to render the to-be-rendered XR object that the XR-M network element is responsible for rendering. Further, optionally, if the resource application result is used to notify the XR-C network element that the XR-M network element is to render the to-be-rendered XR object that the XR-M network element is responsible for rendering, the XR-C network element may send transmission indication information to the UE #1, to indicate the UE #1 to send, to the XR-M network element, the to-be-rendered XR object that the XR-M network element is responsible for rendering. For example, the information about the resource endpoint includes the local connection address of the first resource endpoint and the local connection address of the second resource endpoint.

In a possible case, if the information about the resource endpoint returned by the XR-M network element to the XR-C network element includes the local connection address of the first resource endpoint, the XR-C network element may send the local connection address of the first resource endpoint to the IMS (for example, a proxy-call session control function (proxy-call session control function, P-CSCF) network element in the IMS), so that the IMS (for example, a multimedia subsystem access gateway (IMS access gateway, IMS-AGW) controlled by the P-CSCF) communicates with the XR-M network element by using the local connection address of the first resource endpoint. For example, the UE #1 sends, to the XR-M network element through the IMS-AGW, the to-be-rendered XR object that the XR-M network element is responsible for rendering. For example, the UE #1 has a connection to the IMS-AGW, for example, a first connection (the connection may also be understood as a channel). The IMS may establish a second connection between the IMS-AGW and the XR-M network element by using the local connection address of the first resource endpoint sent by the XR-C network element, and establish a correspondence between the first connection and the second connection. The correspondence may enable the IMS-AGW to: after the IMS-AGW receives the to-be-rendered XR object that is sent by the UE #1 and that the XR-M network element is responsible for rendering, determine the second connection, and forward, to the XR-M network element through the second connection, the to-be-rendered XR object that the XR-M network element is responsible for rendering. For example, the information about the resource endpoint and the division indication information may be carried in one piece of signaling or one message, or may be carried in different pieces of signaling or different messages. This is not limited. In addition, if the information about the resource endpoint returned by the XR-M network element to the XR-C network element includes the local connection address of the second resource endpoint, the XR-C network element may further send the local connection address of the second resource endpoint to the IMS (for example, a P-CSCF in the IMS accessed by the UE #2), so that the UE #2 communicates with the XR-M network element through the IMS. For example, the UE #2 obtains merged media data from the XR-M network element through the IMS. For example, the XR-C network element may send the local connection address of the second resource endpoint to the P-CSCF in the accessed IMS, so that the UE #2 is connected to the XR-M network element through an IMS-AGW controlled by the P-CSCF. In this way, the UE #2 can obtain the merged media data from the XR-M network element through the IMS-AGW.

It may be understood that an execution sequence of step 6114 and step 6116 is not limited.

For example, step 6114 is performed first, and then step 6116 is performed. That is, after determining the division indication information, the XR-C network element directly sends the division indication information to the UE #1 through the IMS. In this case, the local connection address and the division indication information may be carried in different signaling, that is, the XR-C network element first sends the division indication information to the UE #1 through the IMS, and then sends the local connection address to the IMS after receiving the local connection address from the XR-M network element.

For another example, step 6116 is performed first, and then step 6114 is performed. That is, after determining the division indication information, the XR-C network element may first apply to the XR-M network element for a resource, and then send the division indication information to the UE #1 through the IMS. In this case, after receiving the local connection address from the XR-M network element, the XR-C network element sends the division indication information and the local connection address to the IMS. In an example, the local connection address and the division indication information may be carried in one piece of signaling.

Scenario 2: The UE #1 initiates rendering renegotiation.

6121: The UE #1 sends rendering renegotiation request information to the IMS.

In some cases, for example, when a processing requirement of the XR call is updated in an XR call process, the terminal device may initiate rendering renegotiation. In these cases, the UE #1 may send the rendering renegotiation request information to the IMS, to perform rendering negotiation for the XR call again.

6122: The IMS sends an HTTP message to the XR-C network element.

6123: The XR-C network element determines division indication information based on the processing requirement of the XR call and the processing capability of the UE #1.

In this embodiment of this application, it is assumed that the processing requirement of the XR call changes, and consequently, a rendering task needs to be redivided. Therefore, in step 6123, the XR-C network element determines new division indication information based on the updated processing requirement of the XR call and the processing capability information of the UE #1.

6124: The XR-C network element sends the division indication information to the IMS.

6125: The IMS sends the division indication information to the UE #1.

Step 6121 to step 6125 are similar to step 6111 to step 6115, and details are not described herein again.

6126: The XR-C network element applies to the XR-M network element for updating a rendering resource.

When determining, based on the division indication information, that the XR-M network element needs to update rendering, the XR-C network element may apply to the XR-M network element for updating a rendering resource, that is, request the XR-M network element to render a to-be-rendered XR object that the XR-M network element is responsible for rendering after the division is updated. In a possible implementation, the XR-C network element sends an HTTP message to the XR-M network element, and the HTTP message is used to apply for resource modification. For details, refer to the description in step 6116. Details are not described herein again. It may be understood that, in this step, the XR-M network element may re-create an endpoint resource, or may reuse the endpoint resource created or allocated in step 6116. The XR-M network element may reuse the computing power resource reserved or allocated in step 6116, or may reallocate a computing power resource. The reallocated computing power resource may be different from the computing power resource reserved or allocated in step 6116.

The foregoing provides example descriptions with reference to two scenarios. Regardless of the foregoing scenario, after the division indication information is determined, the following steps may be included.

621: The UE #1 determines, based on the division indication information, a to-be-rendered XR object that the XR-M network element is responsible for rendering.

Step 621 is similar to step 521, and details are not described herein again.

622: The UE #1 sends, to the XR-M network element, the to-be-rendered XR object that the XR-M network element is responsible for rendering.

The UE #1 may send, to the XR-M network element, related data of the XR object that needs to be rendered by the XR-M network element. For example, if the XR-M network element is responsible for rendering a "virtual person", the UE #1 may send, to the XR-M network element, action posture data of the virtual person that needs to be driven.

In a possible implementation, the UE #1 sends, to the IMS (for example, a DCS-M or an IMS-AGW in the IMS) through an application DC, the to-be-rendered XR object that the XR-M network element is responsible for rendering, and the IMS forwards, to the XR-M network element, the to-be-rendered XR object that the XR-M network element is responsible for rendering.

623: The XR-M network element renders the to-be-rendered XR object that the XR-M network element is responsible for rendering.

If the XR-M network element is responsible for rendering the "virtual person", and the XR-M network element receives, from the UE #1, the action posture data of the virtual person that needs to be driven, the XR-M network element may render the "virtual person" based on the data.

624: The UE #1 renders the to-be-rendered XR object that the UE #1 is responsible for rendering.

625: The UE #1 sends media data corresponding to a rendered XR object to the XR-M network element.

After completing rendering, the UE #1 sends, to the XR-M network element, the media data corresponding to the rendered XR object.

626: The XR-M network element merges the media data corresponding to the XR object rendered by the UE #1 and media data corresponding to the XR object rendered by the XR-M network element, to obtain merged media data.

627: The XR-M network element sends the merged media data to the UE #2.

Step 627 is similar to step 527, and details are not described herein again.

It may be understood that an implementation of transmission between the XR-M network element and the UE #1 in step 625 and an implementation of transmission between the XR-M network element and the UE #2 in step 627 are similar to those in step 622, and details are not described again.

Based on the foregoing technical solution, in a process of registering with the IMS, the terminal device may report the processing capability of the terminal device to the XR-C network element, and the XR-C network element may also notify the terminal device of the processing capability of the XR-M network element. When the terminal device determines that the XR-M network element supports XR object rendering, the terminal device may include the processing requirement of the XR call in the DC establishment request, and request to perform rendering negotiation. The XR-C network element may obtain required XR object rendering computing power through calculation based on the processing requirement of the XR call, and determine whether the required XR object rendering computing power exceeds available rendering computing power of the terminal device. If the required XR object rendering computing power exceeds the available rendering computing power of the terminal device, the XR-C network element may further determine a rendering division for the current session with reference to the processing capability of the XR-M network element, and notify the terminal device of a rendering negotiation result. When the XR-M network element needs to participate in media rendering, the XR-C network element applies to the XR-M network element for a media rendering resource. The terminal device may determine, based on the rendering negotiation result, which XR objects are to be rendered on the terminal device, and which XR objects are to be rendered on the XR-M network element. For an XR object that needs to be rendered by the XR-M network element, the terminal device may send, to the XR-M network element, data to be rendered by the XR-M network element. Finally, the XR-M network element may merge the media data corresponding to the XR object rendered by the XR-M network element and the media data corresponding to the XR object rendered by the terminal device, and send the merged media data to the terminal device in the current session. In addition, if a media rendering task may need to be redivided due to some cases in a session process, for example, a change in the processing requirement of the XR call, the terminal device may re-initiate rendering negotiation, and re-perform rendering negotiation based on an updated processing requirement of the XR call.

It may be understood that, in the solution shown in FIG. 6A and FIG. 6B, a specific division is determined by the XR-C network element (for example, steps 6113 and 6123). This is not limited. In a possible solution, a specific division may alternatively be determined by the terminal device.

For example, the UE #1 may determine division indication information based on the processing requirement of the XR call and the processing capability information of the UE #1 (for details, refer to the description in step 6113), and then step 621 to step 627 are performed. Optionally, before step 621 is performed, the UE #1 may further send the division indication information to the XR-C network element.

For another example, the UE #1 sends an XR object rendering request to the XR-C network element, and the XR-C network element returns an XR object rendering response, where the response includes indication information, and the indication information indicates that the XR-C network element is to render an XR object for the UE #1. After determining that the XR-C network element is to assist in rendering the XR object, the UE #1 determines a to-be-rendered XR object that the XR-C network element is responsible for rendering, and then performs step 622. In this example, optionally, the XR object rendering response returned by the XR-C network element may further include processing capability information of the XR-C network element (similar to the processing capability information of the UE #1 in step 6113). In this way, the UE #1 may determine the specific division based on information such as the processing capability information of the XR-C network element (for details, refer to the description in step 6113), that is, determine which portion of to-be-rendered XR objects are to be rendered by the XR-C network element, and then perform step 622. It may be understood that the XR-M network element may reserve all current remaining processing capabilities for rendering of the XR object of the UE #1, or the XR-M network element may reserve some of all current remaining processing capabilities for rendering of the XR object of the UE #1. That is, the processing capability information returned by the XR-C network element through the XR object rendering response may represent all current remaining processing capabilities of the XR-M network element, or may represent some of all current remaining processing capabilities of the XR-M network element. For example, the XR-M network element reserves 5% of all the current remaining processing capabilities for rendering the XR object of the UE #1, that is, the processing capability information returned by the XR-C network element represents the 5% of the processing capabilities, so that the UE #1 allocates a to-be-rendered XR object to the XR-M network element based on the 5% of the processing capabilities. This can avoid that the UE #1 allocates a rendering task for excessive XR objects to the XR-M network element, or avoid that a resource of the XR-M network element is exclusively occupied by one UE.

It may be further understood that, in the solution shown in FIG. 6A and FIG. 6B, an example in which the XR-M network element merges the media data corresponding to the XR object rendered by the UE #1 and the media data corresponding to the XR object rendered by the XR-M network element is used for description. This is not limited. For example, the UE #2 may alternatively perform merging processing. For example, the UE #1 sends the media data corresponding to the rendered XR object to the UE #2, and the XR-M network element sends the media data corresponding to the rendered XR object to the UE #2. The UE #2 performs merging processing. For another example, another device may alternatively perform merging processing, and details are not described again.

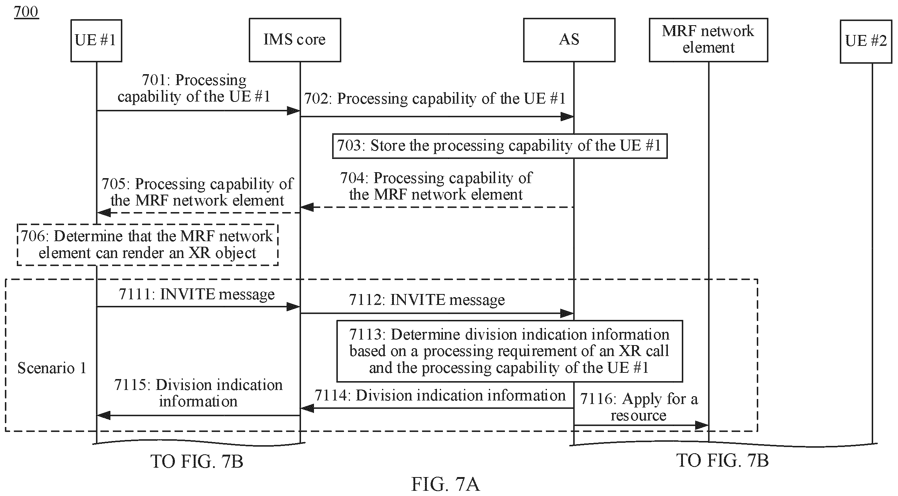

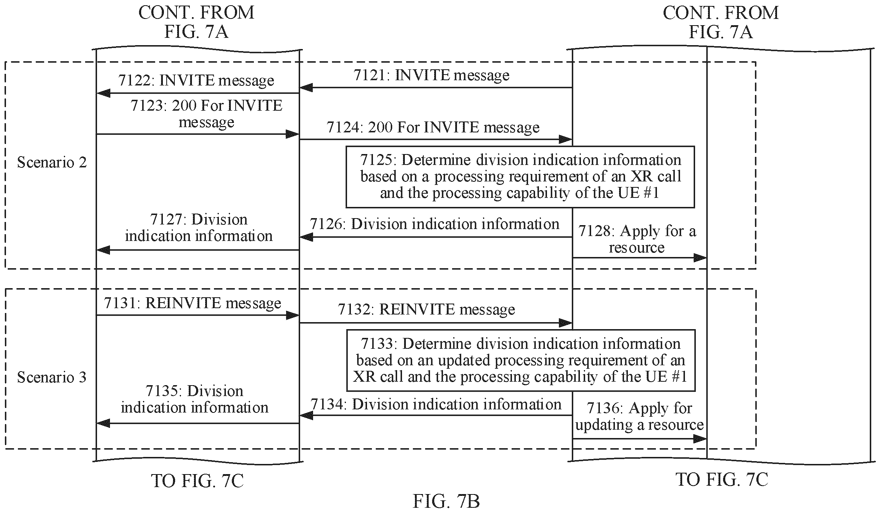

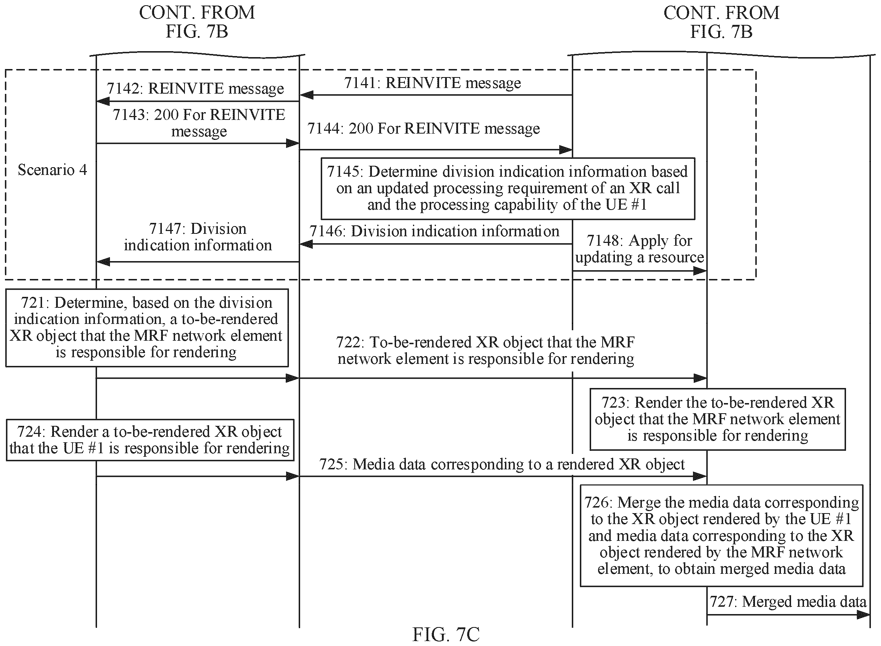

FIG. 7A to FIG. 7C are a schematic flowchart of an XR object rendering method 700 according to an embodiment of this application. The method 700 may be used to implement the solution of the foregoing method 400. The method 700 may be used in a scenario in which rendering negotiation is performed based on IMS SIP signaling, and rendering negotiation may be completed, for example, in a call establishment process. In the method 700, the first network device is an AS, the second network device is an MRF network element, the MRF network element may include, for example, an MRFC and an MRFP, and an IMS includes one or more network elements. For example, refer to the architecture shown in FIG. 2. "IMS core" is used for unified representation below. In an example, the method 700 shown in FIG. 7A to FIG. 7C may be used in the architecture in FIG. 2. The method 700 may include the following steps.

701: UE #1 sends a processing capability of the UE #1 to an IMS core network (IMS core).

Step 701 is similar to step 601, and details are not described herein again.

702: The IMS core sends the processing capability of the UE #1 to the AS.

For example, after successfully authenticating the UE #1 for registration, the IMS core forwards the processing capability of the UE #1 to the AS. In an example, the IMS core sends a SIP REGISTER message to the AS, and the SIP REGISTER message carries the processing capability of the UE #1.

703: The AS stores the processing capability of the UE #1.

Optionally, the method 700 further includes step 704 to step 706.

704: The AS sends a processing capability of the MRF network element to the IMS core.

705: The IMS core sends the processing capability of the MRF network element to the UE #1.

706: The UE #1 determines that the MRF network element can render an XR object.

The UE #1 may learn, based on the processing capability of the MRF network element, whether the MRF network element can render an XR object, that is, whether the MRF network element supports XR object rendering. Step 704 to step 706 are optional steps, that is, the AS may not need to provide the processing capability of the MRF network element for the UE #1, and the UE #1 may consider by default that the MRF network element can render an XR object.

The following describes a rendering negotiation process with reference to four scenarios.

Scenario 1: The UE #1 initiates XR call establishment.

7111: The UE #1 sends an invite (INVITE) message to the IMS core.

It may be understood that the processing capability of the UE #1 reported by the UE #1 in step 701 may alternatively be sent in step 7111. In other words, the method 700 may not include 701, and in step 7111, the INVITE message includes the processing capability of the UE #1.

Optionally, the INVITE message includes a processing requirement of an XR call.

In a possible case, the UE #1 considers by default that the MRF network element supports XR object rendering. Therefore, the UE #1 includes the processing requirement of the XR call in the INVITE message.

In another possible case, the UE #1 determines, based on the processing capability of the MRF network element received in step 705, whether the MRF network element supports media rendering. If the UE #1 determines that the MRF network element supports XR object rendering, the UE #1 includes the processing requirement of the XR call in the INVITE message. If the UE #1 determines that the MRF network element does not support XR object rendering, the UE #1 does not include the processing requirement of the XR call in the INVITE message. For a case in which the MRF network element does not support XR object rendering, for example, the UE #1 may perform rendering processing. This embodiment of this application mainly describes a case in which the MRF network element supports XR object rendering.

Optionally, the processing requirement of the XR call includes a parameter C, a parameter D, and a parameter E. For details, refer to the related description in 5111. Details are not described herein again.

In an example, a form of the processing requirement of the XR call is as follows:
XR-Session-Attribute:
rendering_content=0,1,2,3;video_resolution=1920,1080;video_frame_rate=30

Herein, "rendering_content" represents the parameter C, that is, a to-be-rendered XR object. "video_resolution" represents the parameter D, that is, a video resolution. "video_frame_rate" represents the parameter E, that is, a video frame rate.

7112: The IMS core sends an INVITE message to the AS.

Optionally, if the INVITE message in step 7111 includes the processing requirement of the XR call, the INVITE message in step 7112 also includes the processing requirement of the XR call.

7113: The AS determines division indication information based on the processing requirement of the XR call and the processing capability of the UE #1.

A manner for obtaining the processing requirement of the XR call is as follows:
In a possible implementation, the INVITE message in step 7112 includes the processing requirement of the XR call.

In another possible implementation, the AS generates the processing requirement of the XR call. In an example, the AS generates the processing requirement of the XR call based on XR application service logic and a session parameter.

Optionally, when determining the division indication information, the AS may comprehensively consider the processing capability of the MRF network element, the processing capability of the UE #1, and the processing requirement of the XR call. Further, optionally, the MRF network element sends the processing capability of the MRF network element to the AS. For an implementation of determining the division indication information, refer to the related description in step 5112. Details are not described herein again.

7114: The AS sends the division indication information to the IMS core.

In a possible implementation, the AS sends a 18X For INVITE message or a 200 For INVITE message to the IMS core, and the 18X For INVITE message or the 200 For INVITE message carries a rendering negotiation result of the current XR call, that is, the division indication information.

In another possible implementation, the AS sends a provisional response acknowledgement (provisional response ACKnowledgement, PRACK) For INVITE message or an acknowledgement (ACKnowledgement, ACK) For INVITE message to the IMS core, and the PRACK For INVITE message or the ACK For INVITE message carries a rendering negotiation result of the current XR call, that is, the division indication information.

Optionally, the division indication information includes at least one of the following: a parameter F, a parameter G, and a parameter H. For details, refer to the related description in step 5113. Details are not described herein again.

In an example, a form of the division indication information is as follows:
XR-Session-Negotiation:split_rendering_method=0/1;network_rendering_content=0,1,2

For details, refer to the related description in step 6115. Details are not described herein again.

7115: The IMS core sends the division indication information to the UE #1.

After receiving the division indication information sent by the AS, the IMS core forwards the division indication information to the UE #1.

In a possible implementation, the IMS core sends a 18X For INVITE message or a 200 For INVITE message to the UE #1, and the 18X For INVITE message or the 200 For INVITE message carries the division indication information.

7116: The AS applies to the MRF network element for a resource.

When determining, based on the division indication information, that the MRF network element needs to render an XR object, the AS may apply to the MRF network element for a resource, that is, request the MRF network element to render a to-be-rendered XR object that the MRF network element is responsible for rendering. In a possible implementation, the AS sends an INVITE message to the MRF network element, where the INVITE message is used to apply to the MRF network element for a resource related to XR object rendering.

For example, that the AS applies to the MRF for a resource includes: The AS requests the MRF network element to create or allocate an endpoint resource. Correspondingly, the MRF network element creates or allocates a corresponding resource endpoint (also referred to as a media endpoint), and returns information about the corresponding resource endpoint (corresponding to the address information of the network-side rendering device in the summary) to the AS. For example, after receiving the INVITE message, the MRF network element creates or allocates two resource endpoints, which are respectively a first resource endpoint and a second resource endpoint. An attribute of the first resource endpoint includes a local connection address of the first resource endpoint, and an attribute of the second resource endpoint includes a local connection address of the second resource endpoint. The local connection address of the first resource endpoint and the local connection address of the second resource endpoint are respectively used to enable the UE #1 to establish a communication connection with the MRF network element through an IMS core (an IMS core accessed by the UE #1) and enable the UE #2 to establish a communication connection with the MRF network element through an IMS core (an IMS core accessed by the UE #2).

For example, that the AS applies to the MRF for a resource may alternatively include: The AS requests the MRF network element to reserve or allocate a computing power resource. Correspondingly, the MRF network element reserves or allocates a corresponding computing power resource, for example, memory, a CPU slot, or a GPU resource. Optionally, the AS sends information about a to-be-rendered XR object or an XR computing power requirement to the MRF network element. The XR computing power requirement indicates computing power to be consumed by the to-be-rendered XR object that is to be rendered by the MRF network element. In this way, the MRF network element can reserve or allocate the corresponding computing power resource based on the information about the to-be-rendered XR object or the XR computing power requirement.

Optionally, the resource application result returned by the MRF network element to the AS includes at least one of the following: result indication information and information about a resource endpoint. The result indication information may be used to notify the AS whether the MRF network element is to render the to-be-rendered XR object that the MRF network element is responsible for rendering. Further, optionally, if the resource application result is used to notify the AS that the MRF network element is to render the to-be-rendered XR object that the MRF network element is responsible for rendering, the AS may send transmission indication information to the UE #1, to indicate the UE #1 to send, to the MRF network element, the to-be-rendered XR object that the MRF network element is responsible for rendering. For example, the information about the resource endpoint includes the local connection address of the first resource endpoint and the local connection address of the second resource endpoint.

In a possible case, if the information about the resource endpoint returned by the MRF network element to the AS includes the local connection address of the first resource endpoint, the AS may send the local connection address of the first resource endpoint to the IMS core (for example, a P-CSCF network element in the IMS core), so that the IMS core (for example, an IMS-AGW controlled by the P-CSCF) communicates with the MRF network element by using the local connection address of the first resource endpoint. For example, the UE #1 sends, to the MRF network element through the IMS-AGW, the to-be-rendered XR object that the MRF network element is responsible for rendering. For example, the UE #1 has a connection to the IMS-AGW, for example, a third connection (the connection may also be understood as a channel). The IMS core may establish a fourth connection between the IMS-AGW and the MRF network element by using the local connection address of the first resource endpoint sent by the AS network element, and establish a correspondence between the third connection and the fourth connection. The correspondence may enable the IMS-AGW to: after the IMS-AGW receives the to-be-rendered XR object that is sent by the UE #1 and that the MRF network element is responsible for rendering, determine the fourth connection, and forward, to the MRF network element through the fourth connection, the to-be-rendered XR object that the MRF network element is responsible for rendering. For example, the information about the resource endpoint and the division indication information may be carried in one piece of signaling or one message, or may be carried in different pieces of signaling or different messages. This is not limited. In addition, if the information about the resource endpoint returned by the MRF network element to the AS includes the local connection address of the second resource endpoint, the AS may further send the local connection address of the second resource endpoint to the IMS core (for example, a P-CSCF in the IMS core accessed by the UE #2), so that the UE #2 communicates with the MRF network element through the IMS core. For example, the UE #2 obtains merged media data from the MRF network element through the IMS core. For example, the AS may send the local connection address of the second resource endpoint to the P-CSCF in the IMS core, so that the UE #2 is connected to the MRF network element through an IMS-AGW controlled by the P-CSCF. In this way, the UE #2 can obtain the merged media data from the MRF network element through the IMS-AGW.

It may be understood that an execution sequence of step 7114 and step 7116 is not limited.

For example, step 7114 is performed first, and then step 7116 is performed. That is, after determining the division indication information, the AS directly sends the division indication information to the UE #1 through the IMS core. In this case, the local connection address and the division indication information may be carried in different signaling, that is, the AS first sends the division indication information to the UE #1 through the IMS core, and then sends the local connection address to the IMS core after receiving the local connection address from the MRF network element.

For another example, step 7116 is performed first, and then step 7114 is performed. That is, after determining the division indication information, the AS may first apply to the MRF network element for a resource, and then send the division indication information to the UE #1 through the IMS core. In this case, after receiving the local connection address from the MRF network element, the AS sends the division indication information and the local connection address to the IMS core. In an example, the local connection address and the division indication information may be carried in one piece of signaling.

Scenario 2: The UE #1 receives XR call establishment.

7121: The AS sends an INVITE message to the IMS core.

Optionally, the INVITE message is used to request a processing requirement of an XR call of the UE #1.

7122: The IMS core sends an INVITE message to the UE #1.

If the INVITE message in step 7121 is used to request the processing requirement of the XR call of the UE #1, the INVITE message in step 7122 is used to request the processing requirement of the XR call of the UE #1.

7123: The UE #1 sends a 200 For INVITE message to the IMS core.

If the INVITE message in step 7122 is used to request the processing requirement of the XR call of the UE #1, the 200 For INVITE message in step 7123 carries the processing requirement of the XR call of the UE #1.

It may be understood that the processing capability of the UE #1 reported by the UE #1 in step 701 may alternatively be sent in step 7123. In other words, the method 700 may not include 701, and in step 7123, the 200 For INVITE message includes the processing capability of the UE #1.

The 200 For INVITE message in step 7123 may also be replaced with a 18X For INVITE message, and a specific type of the message is not limited.

7124: The IMS core sends a 200 For INVITE message to the AS.

The 200 For INVITE message in step 7124 may also be replaced with a 18X For INVITE message, and a specific type of the message is not limited.

7125: The AS determines division indication information based on the processing requirement of the XR call and the processing capability of the UE #1.

A manner for obtaining the processing requirement of the XR call is as follows:

In a possible implementation, the 200 For INVITE message in step 7124 includes the processing requirement of the XR call.

In another possible implementation, the AS generates the processing requirement of the XR call. In an example, in another possible implementation, the processing requirement of the XR call is generated based on XR application service logic and a session parameter.

Optionally, when determining the division indication information, the AS may comprehensively consider the processing capability of the MRF network element, the processing capability of the UE #1, and the processing requirement of the XR call. For an implementation of determining the division indication information, refer to the related description in step 5112. Details are not described herein again.

7126: The AS sends the division indication information to the IMS core.

7127: The IMS core sends the division indication information to the UE #1.

7128: The AS applies to the MRF network element for a resource.

Step 7126 to step 7128 are similar to step 7114 to step 7116, and details are not described herein again.

Scenario 3: The UE #1 initiates XR call update.

7131: The UE #1 sends a reinvite (REINVITE) message to the IMS core.

7132: The IMS core sends a REINVITE message to the AS.

7133: The AS determines division indication information based on an updated processing requirement of the XR call and the processing capability of the UE #1.

In this embodiment of this application, it is assumed that the processing requirement of the XR call changes, and consequently, a rendering task needs to be redivided. Therefore, in step 7133, the AS determines new division indication information based on the updated processing requirement of the XR call and the processing capability of the UE #1.

7134: The AS sends the division indication information to the IMS core.

7135: The IMS core sends the division indication information to the UE #1.

Step 7131 to step 7135 are similar to step 7111 to step 7115, and details are not described herein again.

7136: The AS applies to the MRF network element for updating a rendering resource.

When determining, based on the division indication information, that the MRF network element needs to update rendering, the AS may apply to the MRF network element for updating a rendering resource, that is, request the MRF network element to render a to-be-rendered XR object that the MRF network element is responsible for rendering after the division is updated. In a possible implementation, the AS sends a REINVITE message to the MRF network element, and the REINVITE message is used to apply for resource modification. For details, refer to the description in step 7116. Details are not described herein again. It may be understood that, in this step, the MRF network element may re-create an endpoint resource, or may reuse the endpoint resource created or allocated in step 7116. The MRF network element may reuse the computing power resource reserved or allocated in step 7116, or may reallocate a computing power resource. The reallocated computing power resource may be different from the computing power resource reserved or allocated in step 7116.

Scenario 4: The UE #1 receives XR call update.

7141: The AS sends a REINVITE message to the IMS core.

7142: The IMS core sends a REINVITE message to the UE #1.

7143: The UE #1 sends a 200 For REINVITE message to the IMS core.

7144: The IMS core sends a 200 For REINVITE message to the AS.

7145: The AS determines division indication information based on an updated processing requirement of the XR call and the processing capability of the UE #1.

In this embodiment of this application, it is assumed that the processing requirement of the XR call changes, and consequently, a rendering task needs to be redivided. Therefore, in step 7145, the AS determines new division indication information based on the updated processing requirement of the XR call and the processing capability of the UE #1.

7146: The AS sends the division indication information to the IMS core.

In a possible implementation, the AS sends an ACK For REINVITE message to the IMS core, and the ACK For REINVITE message includes the division indication information.

7147: The IMS core sends the division indication information to the UE #1.

In a possible implementation, the IMS core sends an ACK For REINVITE message to the UE #1, and the ACK For REINVITE message includes the division indication information.

Step 7141 to step 7147 are similar to step 7121 to step 7127, and details are not described herein again.

7148: The AS applies to the MRF network element for updating a rendering resource.

When determining, based on the division indication information, that the MRF network element needs to update rendering, the AS may apply to the MRF network element for updating a rendering resource, that is, request the MRF network element to render a to-be-rendered XR object that the MRF network element is responsible for rendering after the division is updated. In a possible implementation, the AS sends a REINVITE message to the MRF network element, and the REINVITE message is used to apply for resource modification. For details, refer to the description in step 7116. Details are not described herein again. It may be understood that, in this step, the MRF network element may re-create an endpoint resource, or may reuse the endpoint resource created or allocated in step 7128. The MRF network element may reuse the computing power resource reserved or allocated in step 7128, or may reallocate a computing power resource. The reallocated computing power resource may be different from the computing power resource reserved or allocated in step 7128.

The foregoing provides example descriptions with reference to four scenarios. Regardless of the foregoing scenario, after the division indication information is determined, the following steps may be included.

721: The UE #1 determines, based on the division indication information, a to-be-rendered XR object that the MRF network element is responsible for rendering.

Step 721 is similar to step 521, and details are not described herein again.

722: The UE #1 sends, to the MRF network element, the to-be-rendered XR object that the MRF network element is responsible for rendering.

The UE #1 may send, to the MRF network element, related data of the XR object that needs to be rendered by the MRF network element. For example, if the MRF network element is responsible for rendering a "virtual person", the UE #1 may send, to the MRF network element, action posture data of the virtual person that needs to be driven.

For example, the UE #1 sends, to the IMS-AGW through the third connection based on the rendering division for the to-be-rendered XR object in the XR call, the to-be-rendered XR object that the MRF network element is responsible for rendering. The IMS-AGW forwards, to the MRF network element through the fourth connection based on the correspondence between the third connection and the fourth connection, the to-be-rendered XR object that the MRF network element is responsible for rendering.

723: The MRF network element renders the to-be-rendered XR object that the MRF network element is responsible for rendering.

If the MRF network element is responsible for rendering the "virtual person", and the MRF network element receives, from the UE #1, the action posture data of the virtual person that needs to be driven, the MRF network element may render the "virtual person" based on the data.

724: The UE #1 renders a to-be-rendered XR object that the UE #1 is responsible for rendering.

725: The UE #1 sends media data corresponding to a rendered XR object to the MRF network element.

After completing rendering, the UE #1 sends, to the MRF network element, the media data corresponding to the rendered XR object.

726: The MRF network element merges the media data corresponding to the XR object rendered by the UE #1 and media data corresponding to the XR object rendered by the MRF network element, to obtain merged media data.

727: The MRF network element sends the merged media data to the UE #2.

Step 727 is similar to step 527, and details are not described herein again.

It may be understood that an implementation of transmission between the MRF network element and the UE #1 in step 725 and an implementation of transmission between the MRF network element and the UE #2 in step 727 are similar to those in step 722, and details are not described again.

Based on the foregoing technical solution, in a process of registering with the IMS, the terminal device may report the processing capability of the terminal device to the AS, and the AS may also notify the terminal device of the processing capability of the MRF network element. When the terminal device determines that the MRF network element supports XR object rendering, the terminal device may include the processing requirement of the XR call in the call request, and request to perform rendering negotiation. The AS may obtain required XR object rendering computing power through calculation based on the processing requirement of the XR call, and determine whether the required XR object rendering computing power exceeds available rendering computing power of the terminal device. If the required XR object rendering computing power exceeds the available rendering computing power of the terminal device, the AS may further determine a rendering division for the current session with reference to the processing capability of the MRF network element, and notify the terminal device of a rendering negotiation result. When the MRF network element needs to participate in media rendering, the AS applies to the MRF network element for a media rendering resource. The terminal device may determine, based on the rendering negotiation result, which XR objects are to be rendered on the terminal device, and which XR objects are to be rendered on the MRF network element. For an XR object that needs to be rendered by the MRF network element, the terminal device may send, to the MRF network element, data to be rendered by the MRF network element. Finally, the MRF network element may merge the media data corresponding to the XR object rendered by the MRF network element and the media data corresponding to the XR object rendered by the terminal device, and send the merged media data to the terminal device in the current session. In addition, if a media rendering task may need to be redivided due to some cases in a session process, for example, a change in the processing requirement of the XR call, the terminal device or the AS may initiate a session update request, and re-perform rendering negotiation based on an updated processing requirement of the XR call.

It may be understood that, in the solution shown in FIG. 7A to FIG. 7C, a specific division is determined by the AS (for example, steps 7113 and 7125). This is not limited. In a possible solution, a specific division may alternatively be determined by the terminal device.

For example, the UE #1 may determine division indication information based on the processing requirement of the XR call and the processing capability information of the UE #1 (for details, refer to the description in step 7113), and then step 721 to step 727 are performed. Optionally, before step 721 is performed, the UE #1 may further send the division indication information to the AS.

For another example, the UE #1 sends an XR object rendering request to the AS, and the AS returns an XR object rendering response, where the response includes indication information, and the indication information indicates that the AS is to render an XR object for the UE #1. After determining that the AS is to assist in rendering the XR object, the UE #1 determines a to-be-rendered XR object that the AS is responsible for rendering, and then performs step 722. In this example, optionally, the XR object rendering response returned by the AS may further include processing capability information of the AS (similar to the processing capability information of the UE #1 in step 7113). In this way, the UE #1 may determine the specific division based on information such as the processing capability information of the AS (for details, refer to the description in step 7113), that is, determine which portion of to-be-rendered XR objects are to be rendered by the AS, and then perform step 722. It may be understood that the MRF network element may reserve all current remaining processing capabilities for rendering of the XR object of the UE #1, or the MRF network element may reserve some of all current remaining processing capabilities for rendering of the XR object of the UE #1. That is, the processing capability information returned by the AS through the XR object rendering response may represent all current remaining processing capabilities of the MRF network element, or may represent some of all current remaining processing capabilities of the MRF network element. For example, the MRF network element reserves 5% of all the current remaining processing capabilities for rendering the XR object of the UE #1, that is, the processing capability information returned by the AS represents the 5% of the processing capabilities, so that the UE #1 allocates a to-be-rendered XR object to the MRF network element based on the 5% of the processing capabilities. This can avoid that the UE #1 allocates a rendering task for excessive XR objects to the MRF network element, or avoid that a resource of the MRF network element is exclusively occupied by one UE.

It may be further understood that, in the solution shown in FIG. 7A to FIG. 7C, an example in which the MRF network element merges the media data corresponding to the XR object rendered by the UE #1 and the media data corresponding to the XR object rendered by the MRF network element is used for description. This is not limited. For example, the UE #2 may alternatively perform merging processing. For example, the UE #1 sends the media data corresponding to the rendered XR object to the UE #2, and the MRF network element sends the media data corresponding to the rendered XR object to the UE #2. The UE #2 performs merging processing. For another example, another device may alternatively perform merging processing, and details are not described again.

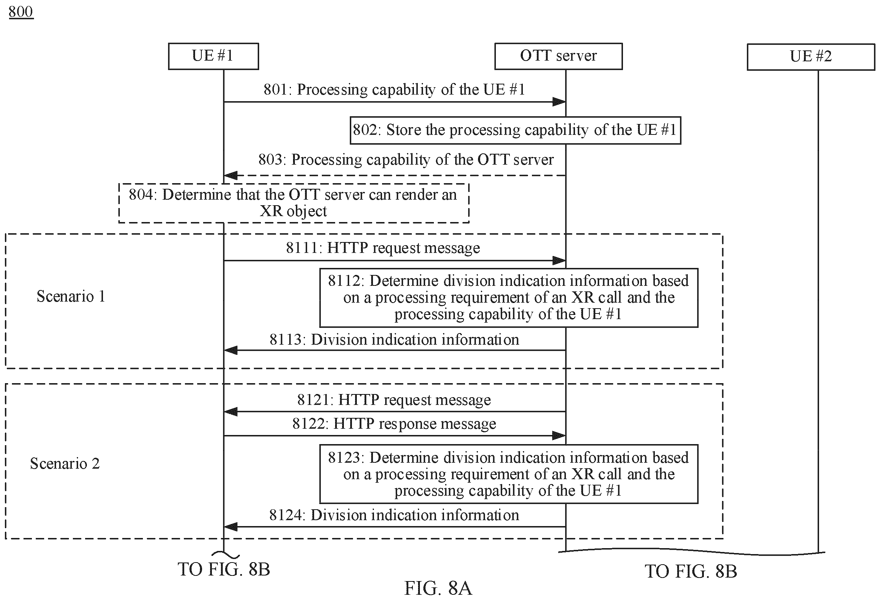

FIG. 8A and FIG. 8B are a schematic flowchart of an XR object rendering method 800 according to an embodiment of this application. The method 800 may be used to implement the solution of the foregoing method 400. The method 800 may be used in a scenario in which rendering negotiation is completed based on an HTTP/HTTPS message, and rendering negotiation may be completed, for example, in a call establishment process. In the method 800, it is assumed that the first network device and the second network device are an OTT server. In an example, the method 800 shown in FIG. 8A and FIG. 8B may be used in the architecture in FIG. 3. The method 800 may include the following steps.

801: UE #1 sends a processing capability of the UE #1 to the OTT server.

In a possible implementation, in a process of registering with the OTT server, the UE #1 sends the processing capability to the OTT server. For example, the UE #1 sends an HTTP request message to the OTT server, and the HTTP request message carries the processing capability of the UE #1.

In an example, a format of the processing capability information of the UE #1 may be a json format as follows:

```
          Content-Type:application/json
          {
          "XR-Capability": {
          "split_rendering_method": "0,1", //indicating that supported division manners are
 division by layer and division by type
          "rendering_capability": "0/1/2"}//indicating available rendering computing power of
          the UE #1
          }
 
```

In another example, a format of the processing capability information of the UE #1 may be an XML format as follows:

```
          Content-Type: application/xml
          <XR-Capability>
          <split_rendering_method Value="0,1"> <! --indicating that supported division manners
 are division by layer and division by type-->
          <rendering_capability Value="0/1/2"> <!--indicating available rendering computing
          power of the UE #1-->
          </XR-Capability>
```

In any one of the foregoing examples, "split_rendering_method" represents a parameter A, that is, a rendering division manner supported by the UE #1. "rendering_capability" represents a parameter B, that is, available rendering computing power of the UE #1. In an example, a value of "split_rendering_method" includes 0 and 1, indicating that supported rendering division manners include division by layer and division by type. For the parameter A and the parameter B, refer to the foregoing related descriptions. Details are not described herein again.

802: The OTT server stores the processing capability of the UE #1.

For example, after successfully authenticating the UE #1 for registration, the OTT server may store (or record) the processing capability of the UE #1.

Optionally, the method 800 further includes step 803 and step 804.

803: The OTT server sends a processing capability of the OTT server to the UE #1.

In a possible implementation, the OTT server sends an HTTP response message to the UE #1, and the HTTP response message includes the processing capability of the OTT server.

804: The UE #1 determines that the OTT server can render an XR object.

The UE #1 may learn, based on the processing capability of the OTT server, whether the OTT server can render an XR object, that is, whether the OTT server supports XR object rendering. Step 803 and step 804 are optional steps, that is, the OTT server may not need to provide the processing capability of the OTT server for the UE #1, and the UE #1 may consider by default that the OTT server can render an XR object.

The following describes a rendering negotiation process with reference to four scenarios.

Scenario 1: The UE #1 initiates rendering negotiation.

8111: The UE #1 sends an HTTP request message to the OTT server.

It may be understood that the processing capability of the UE #1 reported by the UE #1 in step 801 may alternatively be sent in step 8111. In other words, the method 800 may not include 801, and in step 8111, the HTTP request message includes the processing capability of the UE #1.

Optionally, the HTTP request message includes a processing requirement of an XR call.

In a possible case, the UE #1 considers by default that the OTT server supports XR object rendering. Therefore, the UE #1 includes the processing requirement of the XR call in the HTTP request message.

In another possible case, the UE #1 determines, based on the processing capability of the OTT server received in step 803, whether the OTT server supports media rendering. If the UE #1 determines that the OTT server supports XR object rendering, the UE #1 includes the processing requirement of the XR call in the HTTP request message. If the UE #1 determines that the OTT server does not support XR object rendering, the UE #1 does not include the processing requirement of the XR call in the HTTP request message. For a case in which the OTT server does not support XR object rendering, for example, the UE #1 may perform rendering processing. This embodiment of this application mainly describes a case in which the OTT server supports XR object rendering.

Optionally, the processing requirement of the XR call includes a parameter C, a parameter D, and a parameter E. For details, refer to the related description in 5111. Details are not described herein again.

In an example, a format of the processing requirement of the XR call may be a json format as follows:

```
          Content-Type: application/json
          {
          "XR-Session-Attribute": {
          "rendering_content": "0,1,2,3", //indicating a to-be-rendered XR object in the XR call
          "video_resolution": "1920,1080", //indicating video resolution of the XR call
          "video_frame_rate": "30"}//indicating a video frame rate of the XR call
          }
```

In another example, a format of the processing requirement of the XR call may be an XML format as follows:

```
          Content-Type: application/xml
          <XR-Session-Attribute>
          <rendering_content Value="0,1,2,3"/> <! --indicating a to-be-rendered XR object in the
          XR call-->
          < video_resolution Value="1920,1080"/> <!--indicating video resolution of the XR
 call-->
          <video_frame_rate Value="30"/> <!--indicating a video frame rate of the XR call-->
          </XR-Session-Attribute>
 
```

In any one of the foregoing examples, "rendering_content" represents the parameter C, that is, a to-be-rendered XR object. "video_resolution" represents the parameter D, that is, a video resolution. "video_frame_rate" represents the parameter E, that is, a video frame rate.

8112: The OTT server determines division indication information based on the processing requirement of the XR call and the processing capability of the UE #1.

A manner for obtaining the processing requirement of the XR call is as follows:
In a possible implementation, the HTTP request message in step 8111 includes the processing requirement of the XR call.

In another possible implementation, the OTT server generates the processing requirement of the XR call. In an example, the OTT server generates the processing requirement of the XR call based on XR application service logic and a session parameter.

Optionally, when determining the division indication information, the OTT server may comprehensively consider the processing capability of the OTT server, the processing capability of the UE #1, and the processing requirement of the XR call. For an implementation of determining the division indication information, refer to the related description in step 5112. Details are not described herein again.

8113: The OTT server sends the division indication information to the UE #1.

In a possible implementation, the OTT server sends an HTTP response message to the UE #1, and the HTTP response message carries a rendering negotiation result of the current XR call, that is, the division indication information.

Optionally, the division indication information includes at least one of the following: a parameter F, a parameter G, and a parameter H. For details, refer to the related description in step 5113. Details are not described herein again.

In an example, a format of the division indication information may be a json format as follows:

```
          Content-Type: application/json
          {
          "XR-Session-Negotiation": {
          "split_rendering_method": "0/1",//indicating a rendering division manner
          "network_rendering_content": "0,1,2"//indicating a to-be-rendered XR object that the
 OTT server is responsible for rendering
          }
          }
```

In another example, a format of the division indication information may be an XML format as follows:

```
          Content-Type: application/xml
          <XR-Session-Negotiation>
          <split_rendering_method Value="0/1"/> <!--indicating a rendering division manner-->
          <network_rendering_content Value="0,1,2"/> <!--indicating a to-be-rendered XR
 object that the OTT server is responsible for rendering-->
          </XR-Session-Attribute>
 
```

In any one of the foregoing examples, "split_rendering_method" represents the parameter F, that is, a rendering division manner. A definition of a value of the parameter F is the same as that of the value of the parameter A in step 801. "network_rendering_content" represents the parameter G, that is, a to-be-rendered XR object that the OTT server is responsible for rendering. A definition of a value of the parameter G is the same as that of the value of the parameter C in step 8111.

Scenario 2: The UE #1 receives rendering negotiation.

8121: The OTT server sends an HTTP request message to the UE #1.

Optionally, the HTTP request message is used to request a processing requirement of an XR call of the UE #1.

8122: The UE #1 sends an HTTP response message to the OTT server.

If the HTTP request message in step 8121 is used to request the processing requirement of the XR call of the UE #1, the HTTP response message in step 8122 carries the processing requirement of the XR call of the UE #1.

It may be understood that the processing capability of the UE #1 reported by the UE #1 in step 801 may alternatively be sent in step 8122. In other words, the method 800 may not include 801, and in step 8122, the HTTP response message includes the processing capability of the UE #1.

8123: The OTT server determines division indication information based on the processing requirement of the XR call and the processing capability of the UE #1.

A manner for obtaining the processing requirement of the XR call is as follows:
In a possible implementation, the HTTP response message in step 8122 includes the processing requirement of the XR call.

In another possible implementation, the OTT server generates the processing requirement of the XR call. In an example, in another possible implementation, the processing requirement of the XR call is generated based on XR application service logic and a session parameter.

Optionally, when determining the division indication information, the OTT server may comprehensively consider the processing capability of the OTT server, the processing capability of the UE #1, and the processing requirement of the XR call. For an implementation of determining the division indication information, refer to the related description in step 5112. Details are not described herein again.

8124: The OTT server sends the division indication information to the UE #1.

In a possible implementation, the OTT server sends an HTTP message to the UE #1, and the HTTP message includes the division indication information.

Step 8124 is similar to step 8113, and details are not described herein again.

Scenario 3: The UE #1 initiates media rendering renegotiation.

8131: The UE #1 sends a session update call request to the OTT server.

In a possible implementation, the UE #1 sends an HTTP message to the OTT server, and the HTTP message includes the session update call request, or the HTTP message is used to request a session update call.

8132: The OTT server determines division indication information based on an updated processing requirement of the XR call and the processing capability of the UE #1.

In this embodiment of this application, it is assumed that the processing requirement of the XR call changes, and consequently, a rendering task needs to be redivided. Therefore, in step 8132, the OTT server determines new division indication information based on the updated processing requirement of the XR call and the processing capability of the UE #1.

8133: The OTT server sends the division indication information to the UE #1.

Step 8131 to step 8133 are similar to step 8111 to step 8113, and details are not described herein again.

Scenario 4: The UE #1 receives media rendering renegotiation.

8141: The OTT server sends a session update call request to the UE #1.

8142: The UE #1 sends a session update call response to the OTT server.

8143: The OTT server determines division indication information based on an updated processing requirement of the XR call and the processing capability of the UE #1.

In this embodiment of this application, it is assumed that the processing requirement of the XR call changes, and consequently, a rendering task needs to be redivided. Therefore, in step 8143, the OTT server determines new division indication information based on the updated processing requirement of the XR call and the processing capability of the UE #1.

8144: The OTT server sends the division indication information to the UE #1.

Step 8141 to step 8144 are similar to step 8121 to step 8124, and details are not described herein again.

The foregoing provides example descriptions with reference to four scenarios. Regardless of the foregoing scenario, after the division indication information is determined, the following steps may be included.

821: The UE #1 determines, based on the division indication information, a to-be-rendered XR object that the OTT server is responsible for rendering.

Step 821 is similar to step 521, and details are not described herein again.

822: The UE #1 sends, to the OTT server, the to-be-rendered XR object that the OTT server is responsible for rendering.

823: The OTT server renders the to-be-rendered XR object that the OTT server is responsible for rendering.

824: The UE #1 renders a to-be-rendered XR object that the UE #1 is responsible for rendering.

825: The UE #1 sends media data corresponding to a rendered XR object to the OTT server.

After completing rendering, the UE #1 sends, to the OTT server, the media data corresponding to the rendered XR object.

826: The OTT server merges the media data corresponding to the XR object rendered by the UE #1 and media data corresponding to the XR object rendered by the OTT server, to obtain merged media data.

827: The OTT server sends the merged media data to the UE #2.

Step 822 to step 827 are similar to step 522 to step 527, and details are not described herein again.

It may be understood that the foregoing method 800 is mainly described by using the OTT server as an example. As described above, the OTT server may include a signaling server (or referred to as an OTT signaling server), a media processing server (or referred to as an OTT media server or an OTT media processing server), and a routing server. Different servers may perform different functions. In an example, the first network device is a signaling server, and the second network device is a media processing server. For details, refer to the description of the method 600 or 700. Details are not described herein again.

Based on the foregoing technical solution, when the terminal device registers with the OTT server, the terminal device and the OTT server may exchange respective processing capabilities. When the terminal device determines that the OTT server supports XR object rendering, the terminal device may include the processing requirement of the XR call in the session call request, and request to perform rendering negotiation with the OTT server. The OTT server may obtain required XR object rendering computing power through calculation based on the processing requirement of the XR call, and determine whether the required XR object rendering computing power exceeds available rendering computing power of the terminal device. If the required XR object rendering computing power exceeds the available rendering computing power of the terminal device, a rendering division for the current session may be further determined with reference to the processing capability of the OTT server, and a rendering negotiation result is notified to the terminal device. The terminal device may determine, based on the rendering negotiation result, which XR objects are to be rendered on the terminal device, and which XR objects are to be rendered on the OTT server. For an XR object that needs to be rendered by the OTT server, the terminal device may send, to the OTT server, data to be rendered by the OTT server. Finally, the OTT server may merge the media data corresponding to the XR object rendered by the OTT server and the media data corresponding to the XR object rendered by the terminal device, and send the merged media data to the terminal device in the current session. In addition, if a media rendering task may need to be redivided due to some cases in a session process, for example, a change in the processing requirement of the XR call, the terminal device or the OTT server may initiate a session update request, and re-perform rendering negotiation based on an updated processing requirement of the XR call.

It may be understood that, in the solution shown in FIG. 8A and FIG. 8B, a specific division is determined by the OTT server (for example, steps 8112 and 8123). This is not limited. In a possible solution, a specific division may alternatively be determined by the terminal device.

For example, the UE #1 may determine division indication information based on the processing requirement of the XR call and the processing capability information of the UE #1 (for details, refer to the description in step 8112), and then step 821 to step 827 are performed. Optionally, before step 821 is performed, the UE #1 may further send the division indication information to the OTT server.

For another example, the UE #1 sends an XR object rendering request to the OTT server, and the OTT server returns an XR object rendering response, where the response includes indication information, and the indication information indicates that the OTT server is to render an XR object for the UE #1. After determining that the OTT server is to assist in rendering the XR object, the UE #1 determines a to-be-rendered XR object that the OTT server is responsible for rendering, and then performs step 822. In this example, optionally, the XR object rendering response returned by the OTT server may further include processing capability information of the OTT server (similar to the processing capability information of the UE #1 in step 8112). In this way, the UE #1 may determine the specific division based on information such as the processing capability information of the OTT server (for details, refer to the description in step 8112), that is, determine which portion of to-be-rendered XR objects are to be rendered by the OTT server, and then perform step 822. It may be understood that the OTT server may decide to reserve all current remaining processing capabilities for rendering of the XR object of the UE #1, or may decide to reserve some of all current remaining processing capabilities for rendering of the XR object of the UE #1. That is, the processing capability information returned by the OTT server through the XR object rendering response may represent all current remaining processing capabilities of the OTT server, or may represent some of all current remaining processing capabilities. For example, the OTT server reserves 5% of all the current remaining processing capabilities for rendering the XR object of the UE #1, that is, the returned processing capability information represents the 5% of the processing capabilities, so that the UE #1 allocates a to-be-rendered XR object to the OTT server based on the 5% of the processing capabilities. This can avoid that the UE #1 allocates a rendering task for excessive XR objects to the OTT server, or avoid that a resource of the OTT server is exclusively occupied by one UE.

It may be further understood that, in the solution shown in FIG. 8A and FIG. 8B, an example in which the OTT server merges the media data corresponding to the XR object rendered by the UE #1 and the media data corresponding to the XR object rendered by the OTT server is used for description. This is not limited. For example, the UE #2 may alternatively perform merging processing. For example, the UE #1 sends the media data corresponding to the rendered XR object to the UE #2, and the OTT server sends the media data corresponding to the rendered XR object to the UE #2. The UE #2 performs merging processing. For another example, another device may alternatively perform merging processing, and details are not described again.

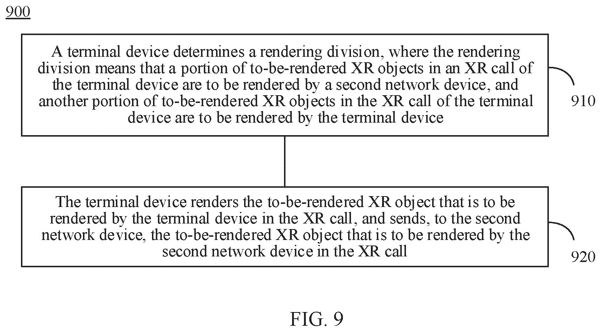

FIG. 9 is a schematic diagram of an XR object rendering method 900 according to an embodiment of this application. The method 900 may include the following steps.

910: A terminal device determines a rendering division, where the rendering division means that a portion of to-be-rendered XR objects in an XR call of the terminal device are to be rendered by a second network device, and the other portion of to-be-rendered XR objects in the XR call of the terminal device are to be rendered by the terminal device.

The second network device represents a network-side device that renders a portion of to-be-rendered XR objects in the XR call of the terminal device, and corresponds to the network-side rendering device in the summary.

In a possible implementation, the terminal device determines the rendering division based on at least one of the following: processing capability information of the terminal device, processing capability information of the second network device, and processing requirement information of the XR call.

Specifically, for the processing capability information and the processing requirement information of the XR call (denoted as first processing requirement information of the XR call below and corresponding to the foregoing processing requirement information of the XR call), refer to the descriptions of the processing capability information and the processing requirement information of the XR call in the method 400. For a method for determining the rendering division by the terminal device, refer to the foregoing method for determining the rendering division by the first network device. Details are not described herein again.

920: The terminal device renders the to-be-rendered XR object that is to be rendered by the terminal device in the XR call, and sends, to the second network device, the to-be-rendered XR object that is to be rendered by the second network device in the XR call.

If to-be-rendered XR objects that the terminal device is responsible for rendering are denoted as a first portion of to-be-rendered XR objects, to-be-rendered XR objects that the second network device is responsible for rendering are denoted as a second portion of to-be-rendered XR objects. That is, the terminal device renders the first portion of to-be-rendered XR objects, and sends the second portion of to-be-rendered XR objects to the second network device.

Optionally, the method 900 further includes: The terminal device sends the first portion of to-be-rendered XR objects that are rendered to the second network device, and the second network device merges the first portion of to-be-rendered XR objects that are rendered and the second portion of to-be-rendered XR objects that are rendered, that is, the second network device merges media data corresponding to the first portion of to-be-rendered XR objects that are rendered and media data corresponding to the second portion of to-rendered XR objects that are rendered. For a possible implementation, refer to the related description in the method 400. Details are not described herein again.

Further, optionally, the method 900 further includes: The second network device sends merged media data to a terminal device in the XR call.

It may be understood that a device for merging the media data corresponding to the first portion of to-be-rendered XR objects that are rendered and the media data corresponding to the second portion of to-rendered XR objects that are rendered is not limited. For details, refer to the related description in the method 400. Details are not described herein again.

In this embodiment of this application, the terminal device calculates, based on an XR object that needs to be rendered in an XR session, computing power to be consumed for rendering, may determine a rendering division when determining that the computing power to be consumed exceeds a processing capability of the terminal device, and may request, by using division acknowledgement request information, a first network device to accept the rendering division. In this way, for the XR call, a rendering task can be dynamically allocated between the terminal device and the second network device by using the terminal device, to implement effective collaboration and on-demand rendering task allocation between the terminal device and the second network device.

Optionally, the first network device sends the processing capability information of the second network device to the terminal device.

The first network device represents a network-side device for determining a rendering division, and corresponds to the network-side control device in the summary.

In a possible implementation, the processing capability information of the second network device may be partial processing capability information of the second network device.

For example, the partial processing capability information of the second network device may be determined by the second network device based on a configuration of a computing resource of the second network device, or may be determined by the second network device based on a remaining computing resource or an available computing resource of the second network device.

Specifically, a proportion of the processing capability information sent by the first network device in all processing capability information of the second network device may be flexibly determined based on load of the second network device. This is not limited in this application. For example, processing capability information sent by a network device represents 10% of all processing capabilities, so that the terminal device allocates a to-be-rendered XR object to the network device based on the 10% of the processing capabilities, to avoid that the terminal device allocates a rendering task for excessive XR objects to the network device, or avoid that a resource of the network device is exclusively occupied by one terminal device.

Optionally, when determining that the second network device can render a to-be-rendered XR object in the XR call, the terminal device sends a session call message to a third network device to trigger the third network device to send division acknowledgement request information to the first network device, to request the first network device to accept the rendering division. The to-be-rendered XR object that is to be rendered by the second network device in the rendering division is determined by the terminal device. The division acknowledgement request information includes processing requirement information of the XR call (denoted as second processing requirement information of the XR call below). The first network device applies to the second network device for a rendering resource based on the second processing requirement information of the XR call. For example, the terminal device considers by default that the second network device can render the to-be-rendered XR object in the XR call. For another example, the terminal device obtains service indication information, where the service indication information indicates that the second network device can render the to-be-rendered XR object in the XR call. The first network device may determine, based on subscription data of the terminal device, whether the terminal device subscribes to a network rendering function. If the terminal device subscribes to the network rendering function, the first network device may send, to the terminal device, the network rendering function that the terminal device subscribes to (that is, the service indication information), to notify the terminal device that the second network device can render the to-be-rendered XR object in the XR call.

The third network device corresponds to the network-side access device in the summary. The third network device may be, for example, a network element in an IMS network, or may be an OTT server. This is not limited.

In a possible implementation, the second processing requirement information of the XR call includes information used to determine the to-be-rendered XR object that is to be rendered by the second network device in the to-be-rendered XR objects in the XR call.

For example, if division is performed by type, the second processing requirement information of the XR call includes information about the second portion of to-be-rendered XR objects, and the information about the second portion of to-be-rendered XR objects may be a type (for example, person, building, or plant) of the to-be-rendered XR objects.

For example, if division is performed by layer, the second processing requirement information of the XR call includes information about the second portion of to-be-rendered XR objects, and the information about the second portion of to-be-rendered XR objects may be layer information (for example, foreground or background) of the to-be-rendered XR objects.

Optionally, the second processing requirement information of the XR call further includes at least one of the following: video resolution of the XR call and a video frame rate of the XR call.

It should be noted that the second processing requirement information of the XR call herein is different from the first processing requirement information of the XR call that is used by the terminal device to determine the rendering division for the to-be-rendered XR object in the XR call of the terminal device in S910. A difference is as follows: The first processing requirement information of the XR call that is used by the terminal device to determine the rendering division for the to-be-rendered XR object in the XR call of the terminal device in S910 includes information about the to-be-rendered XR object in the XR call, that is, information about all to-be-rendered XR objects in the XR call. The second processing requirement information of the XR call herein includes information about the to-be-rendered XR object that is to be rendered by the second network device in the to-be-rendered XR objects in the XR call, that is, information about a portion of to-be-rendered XR objects that need to be rendered by the second network device in the XR call, or information that can enable the second network device to determine the to-be-rendered XR object that is to be rendered by the second network device in the to-be-rendered XR objects in the XR call. This is not limited in this application.

Optionally, if the first network device and the second network device are different devices, the first network device sends a request message to the second network device, where the request message is used to request at least one of the following: address information of the second network device and rendering resource information of the second network device; and the first network device receives, from the second network device, a response to the request message. For detailed content, refer to the related description in the method 400. Details are not described herein again.

It may be understood that some procedures and content in the method 900 are similar to those in the method 400. Therefore, for detailed content in similar parts, refer to the related description in the method 400. Details are not described in the method 900 again.

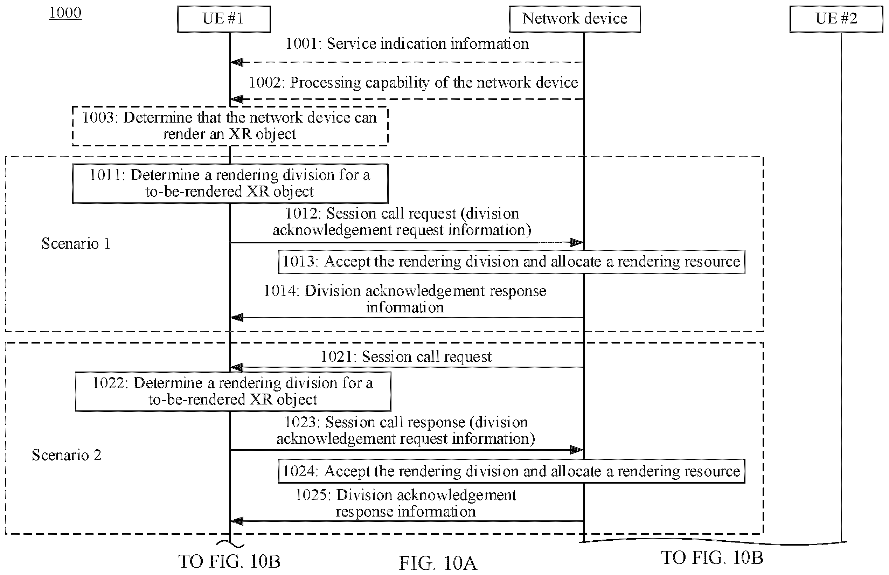

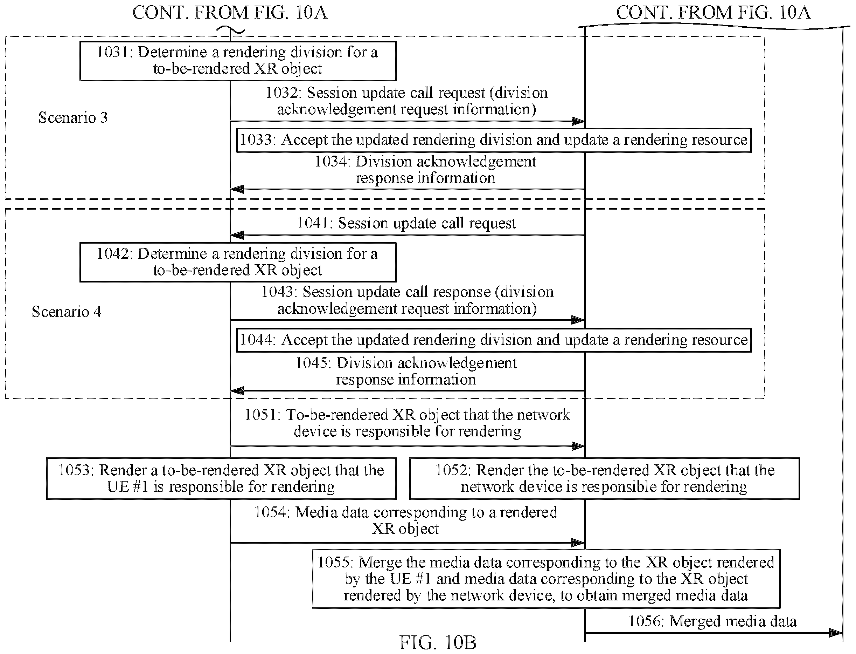

FIG. 10A and FIG. 10B are a schematic flowchart of an XR object rendering method 1000 according to an embodiment of this application. The method 1000 may be used to implement the solution of the foregoing method 900. In the method 1000, it is assumed that the first network device and the second network device are the same, that is, are a network device in FIG. 10A and FIG. 10B. Alternatively, the network device in FIG. 10A and FIG. 10B is a system including the first network device and the second network device. The method 1000 may include the following steps.

1001: The network device sends service indication information to UE #1.

The network device may obtain subscription data of the UE #1, and determine, based on the subscription data, whether the UE #1 subscribes to or purchases a network rendering service. If the UE #1 subscribes to a network rendering function, the network device can assist the UE #1 in rendering an XR object, and sends the service indication information to the UE #1, to notify the UE #1 that the network device can render an XR object, or notify the UE #1 that the network device can provide an XR object rendering service.

A parameter example of the network subscription function is: Network_Function: rendering.

1002: The network device sends a processing capability of the network device to the UE #1.

For the processing capability of the network device, refer to the processing capability of the UE #1 in step 501. Details are not described herein again.

It should be noted that the processing capability of the network device herein may be some processing capabilities in all processing capabilities of the network device. For details about how to determine a percentage of the some processing capabilities in all the processing capabilities, refer to the related description in the method 900. Details are not described again.

It may be understood that the service indication information and the processing capability of the network device may be sent in one message, or may be sent in two messages. This is not limited in this application. If the service indication information and the processing capability of the network device are sent in two messages, a sequence of steps 1001 and 1002 is not limited in this application.

1003: The UE #1 determines that the network device can render an XR object.

For example, the UE #1 stores the processing capability of the network device and/or the service indication information, and may learn, based on the service indication information, whether the network device can render an XR object, that is, whether the network device supports XR object rendering. It may be learned, based on the processing capability of the network device, whether the network device has a sufficient capability to assist the UE #1 in completing XR object rendering. Step 1001/1002/1003 is an optional step. In other words, the network device may not need to provide the service indication information for the UE #1, and the UE #1 may consider by default that the UE #1 subscribes to the network rendering function. Alternatively, the network device may not need to provide the processing capability of the network device for the UE #1, and the UE #1 may consider by default that the network device has a sufficient capability to assist the UE #1 in completing XR object rendering.

The following describes a rendering negotiation process with reference to four scenarios.

Scenario 1: The UE #1 initiates an initial session call.

1011: The UE #1 determines a rendering division for a to-be-rendered XR object in an XR call of the UE #1. To be specific, a portion of to-be-rendered XR objects in the XR call are to be rendered by the network device, and the other portion of to-be-rendered XR objects in the XR call are to be rendered by the UE #1.

When initiating the initial session call, the UE #1 determines, based on first processing requirement information of the XR call, that rendering of an XR object in the XR call cannot be completed by using a processing capability of the UE #1. Therefore, the UE #1 determines that split rendering needs to be performed in this XR call.

In a possible case, the UE #1 subscribes to the network rendering function by default, and considers by default that the network device has a sufficient capability to assist the UE #1 in completing XR object rendering. Then, the UE #1 determines the rendering division for the to-be-rendered XR object in the XR call.

In another possible case, the UE #1 determines, based on the service indication information in 1001, that the UE #1 subscribes to the network rendering function, that is, the network device supports XR object rendering; and considers by default that the network device has a sufficient capability to assist the UE #1 in completing XR object rendering. Then, the UE #1 determines the rendering division for the to-be-rendered XR object in the XR call. If the UE #1 determines that the network device does not support XR object rendering, for example, the UE #1 may perform rendering processing. This embodiment of this application mainly describes a case in which the network device supports XR object rendering.

In another possible case, the UE #1 subscribes to the network rendering function by default, and the UE #1 determines, based on the processing capability of the network device in 1002, that the network device has a sufficient capability to assist the UE #1 in completing XR object rendering. Then, the UE #1 determines the rendering division for the to-be-rendered XR object in the XR call.

In another possible case, the UE #1 determines, based on the service indication information in 1001, that the UE #1 subscribes to the network rendering function, and determines, based on the processing capability of the network device in 1002, that the network device has a sufficient capability to assist the UE #1 in completing XR object rendering (that is, available computing power required by the network device for completing rendering a to-be-rendered XR object does not exceed the processing capability of the network device). Then, the UE #1 determines the rendering division for the to-be-rendered XR object in the XR call, that is, determines XR objects that need to be rendered by the UE #1 and the network device respectively.

1012: The UE #1 sends a session call request to the network device, where the session call request includes division acknowledgement request information, and the division acknowledgement request information is used to request the network device to accept the rendering division.

**In** a possible implementation, the division acknowledgement request information includes second processing requirement information of the XR call. The second processing requirement information of the XR call includes information about a to-be-rendered XR object that needs to be rendered by the network device in the to-be-rendered XR objects in the XR call. For other content (for example, video resolution and a video frame rate of the XR call) included in the second processing requirement information of the XR call, refer to the related description in step 5111. Details are not described again.

For example, the division acknowledgement request information may indicate that all to-be-rendered XR objects in the XR call need to be rendered by the network device, or a portion of to-be-rendered XR objects in the XR call need to be rendered by the network device. This is not limited in this application.

1013: The network device accepts the rendering division and allocates a rendering resource.

**In** a possible implementation, the network device determines, based on the division acknowledgement request information, information about a to-be-rendered XR object for which the terminal device expects the network device to assist in completing rendering, and further determines, based on the processing capability of the network device, whether the network device can assist in completing rendering. For example, if the network device determines that rendering computing power required for the to-be-rendered XR object for which the terminal device expects the network device to assist in completing rendering exceeds available rendering computing power of the network device, it indicates that the network device cannot accept the rendering division. For another example, if the network device determines that rendering computing power required for the to-be-rendered XR object for which the terminal device expects the network device to assist in completing rendering does not exceed available rendering computing power of the network device, it indicates that the network device can accept the rendering division. This embodiment of this application mainly describes a case that the network device can accept the rendering division.

The network device determines that the rendering division can be accepted, and further reserves the rendering resource for the to-be-rendered XR object that needs to be rendered by the network device.

For example, the network device determines, based on information about the to-be-rendered XR object that needs to be rendered by the network device, computing power to be consumed for the to-be-rendered XR object, and reserves or allocates a corresponding computing power resource based on an XR computing power requirement. The computing power resource is, for example, memory, a CPU slot, or a GPU resource.

For a method for determining, by the network device, whether the rendering computing power required for the to-be-rendered XR object exceeds the available rendering computing power of the network device, refer to the related description in 5112. Details are not described again.

1014: The network device sends division acknowledgement response information to the UE #1, where the division acknowledgement response information indicates that the network device accepts the rendering division.

Scenario 2: The UE #1 receives an initial session call.

1021: The network device sends a session call request to the UE #1.

1022: The UE #1 determines a rendering division for a to-be-rendered XR object in an XR call of the UE #1.

When receiving the session call request, the UE #1 determines, based on first processing requirement information of the XR call, that rendering of an XR object in the XR call cannot be completed by using a processing capability of the UE #1. Therefore, the UE #1 determines that split rendering needs to be performed in this XR call.

For specific content of determining the rendering division by the UE #1, refer to the related description in step 1011. Details are not described again.

1023: The UE #1 sends a session call response to the network device, where the session call response includes division acknowledgement request information.

For details, refer to the related description in step 1012. Details are not described again.

1024: The network device accepts the rendering division and allocates a rendering resource.

1025: The network device sends division acknowledgement response information to the UE #1.

Step 1024 and step 1025 are similar to step 1013 and step 1014, and details are not described herein again.

Scenario 3: The UE #1 initiates a session update call.

1031: The UE #1 determines a rendering division for a to-be-rendered XR object in an XR call of the UE #1.

**In** this embodiment of this application, if a processing requirement of the XR call changes, when initiating the session update call, the UE #1 re-determines, based on a processing capability of the UE #1, whether rendering of an XR object in the XR call can be completed. This is similar to step 1011. For details, refer to the related description in step 1011. Details are not described again.

1032: The UE #1 sends a session update call request to the network device, where the session update call request includes division acknowledgement request information, and the division acknowledgement request information is used to request the network device to accept the updated rendering division.

For details, refer to the related description in step 1012. Details are not described again.

1033: The network device accepts the updated rendering division and updates a rendering resource.

For example, the network device re-determines, based on the division acknowledgement request information included in the session update call request, a to-be-rendered XR object that needs to be rendered by the network device, and updates the rendering resource based on the to-be-rendered XR object that needs to be rendered by the network device. It may be understood that in this step, the network device may reuse the computing power resource reserved or allocated in step 1013, or may reallocate a computing power resource. The reallocated computing power resource may be different from the computing power resource reserved or allocated in step 1013.

1034: The network device sends division acknowledgement response information to the UE #1, where the division acknowledgement response information indicates that the network device accepts the updated rendering division.

Step 1033 and step 1034 are similar to step 1013 and step 1014, and details are not described herein again.

Scenario 4: The UE #1 receives a session update call.

1041: The network device sends a session update call request to the UE #1.

1042: The UE #1 determines a rendering division for a to-be-rendered XR object in an XR call of the UE #1.

In this embodiment of this application, if a processing requirement of the XR call changes, when receiving the session update call request, the UE #1 re-determines, based on a processing capability of the UE #1, whether rendering of an XR object in the XR call can be completed. This is similar to step 1011. For details, refer to the related description in step 1011. Details are not described again.

1043: The UE #1 sends a session update call response to the network device, where the session update call response includes division acknowledgement request information, and the division acknowledgement request information is used to request the network device to accept the updated rendering division.

For details, refer to the related description in step 1012. Details are not described again.

1044: The network device accepts the updated rendering division and updates a rendering resource.

For example, the network device re-determines, based on the division acknowledgement request information included in the session update call response, a to-be-rendered XR object that needs to be rendered by the network device, and updates the rendering resource based on the to-be-rendered XR object that needs to be rendered by the network device. It may be understood that in this step, the network device may reuse the computing power resource reserved or allocated in step 1024, or may reallocate a computing power resource. The reallocated computing power resource may be different from the computing power resource reserved or allocated in step 1024.

1045: The network device sends division acknowledgement response information to the UE #1, where the division acknowledgement response information indicates that the network device accepts the updated rendering division.

Step 1044 and step 1045 are similar to step 1013 and step 1014, and details are not described herein again.

The foregoing provides example descriptions with reference to four scenarios. Regardless of the foregoing scenario, after the UE #1 receives the division acknowledgement response information, the following steps may be included.

1051: The UE #1 sends, to the network device, a to-be-rendered XR object that the network device is responsible for rendering.

For example, the UE #1 sends, to the network device based on the rendering division for the to-be-rendered XR object in the XR call, the to-be-rendered XR object that the network device is responsible for rendering.

1052: The network device renders the to-be-rendered XR object that the network device is responsible for rendering.

1053: The UE #1 renders a to-be-rendered XR object that the UE #1 is responsible for rendering.

1054: The UE #1 sends media data corresponding to a rendered XR object to the network device.

1055: The network device merges the media data corresponding to the XR object rendered by the UE #1 and media data corresponding to the XR object rendered by the network device, to obtain merged media data.

1056: The network device sends the merged media data to UE #2.

Step 1051 to step 1056 are similar to step 522 to step 527, and details are not described herein again.

Based on the foregoing technical solution, the network device may notify the terminal device of the processing capability of the network device and the service indication information. When determining that required XR object rendering computing power exceeds available rendering computing power of the terminal device, and determining that the network device supports XR object rendering, the terminal device determines the rendering division, and sends the division acknowledgement request information to the network device, to request to perform rendering negotiation with the network device. The network device may determine, based on the division acknowledgement request information, to assist the terminal device in completing XR object rendering, and notify the terminal device, and the terminal device sends data to be rendered by the network device to the network device. Finally, the network device or another device may merge the media data corresponding to the XR object rendered by the network device and the media data corresponding to the XR object rendered by the terminal device, and send the merged media data to the terminal device in the current session.

It may be understood that, in the solution shown in FIG. 10A and FIG. 10B, an example in which the network device merges the media data corresponding to the XR object rendered by the UE #1 and the media data corresponding to the XR object rendered by the network device is used for description. This is not limited. For example, the UE #2 may alternatively perform merging processing. For example, the UE #1 sends the media data corresponding to the rendered XR object to the UE #2, and the network device sends the media data corresponding to the rendered XR object to the UE #2. The UE #2 performs merging processing. For another example, another device may alternatively perform merging processing, and details are not described again.

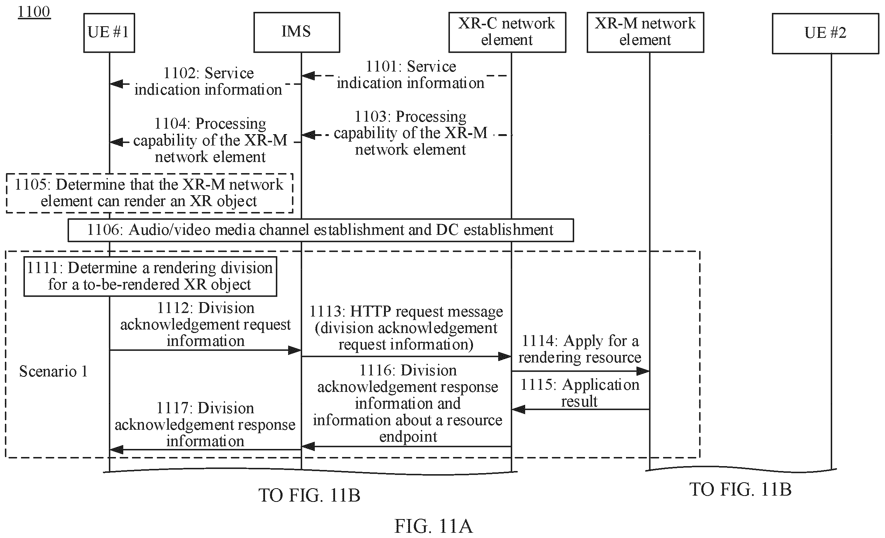

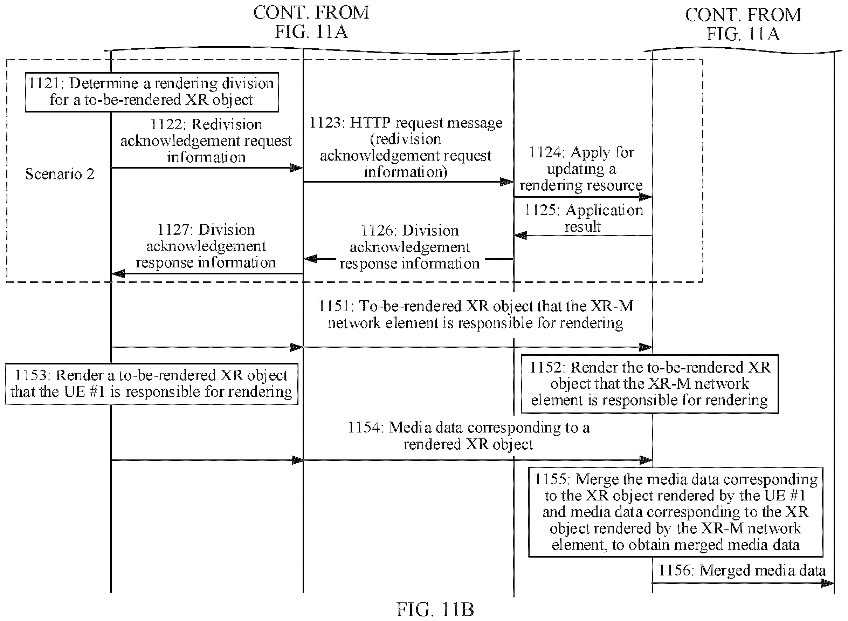

FIG. 11A and FIG. 11B are a schematic flowchart of an XR object rendering method 1100 according to an embodiment of this application. The method 1100 may be used to implement the solution of the foregoing method 900. The method 1100 may be used in a DC-based rendering negotiation scenario, and rendering negotiation may be performed, for example, after a DC is established. In the method 1100, the first network device is an XR-C network element, the second network device is an XR-M network element, and an IMS includes one or more network elements. For example, refer to the architecture shown in FIG. 1. "IMS" is used for unified representation below. In an example, the method 1100 shown in FIG. 11A and FIG. 11B may be used in the architecture in FIG. 1. The method 1100 may include the following steps.

Before step 1101, UE #1 sends a SIP registration (REGISTER) message to the IMS in a process of registering with the IMS, and after successfully authenticating the UE #1 for registration, the IMS sends an HTTP message to the XR-C network element.

1101: The XR-C network element sends service indication information to the IMS.

A method for determining the service indication information by the XR-C network element is similar to that in step 1001, and details are not described again.

In a possible implementation, the XR-C network element sends an HTTP response message (for example, a 200 message) to the IMS, and the HTTP response message includes the service indication information.

1102: The IMS sends the service indication information to the UE #1.

1103: The XR-C network element sends a processing capability of the XR-M network element to the IMS.

The processing capability of the XR-M network element is similar to the processing capability of the network device in step 1002, and details are not described again.

In a possible implementation, the XR-C network element sends an HTTP response message (for example, a 200 message) to the IMS, and the HTTP response message includes the processing capability of the XR-M network element.

1104: The IMS sends the processing capability of the XR-M network element to the UE #1.

It may be understood that the service indication information and the processing capability of the XR-M network element may be sent in one message, or may be sent in two messages. This is not limited in this application. If the service indication information and the processing capability of the XR-M network element are sent in two messages, a sequence of steps 1101 and 1103 and a sequence of steps 1102 and 1104 are not limited in this application.

1105: The UE #1 determines that the XR-M network element can render an XR object.

For example, the UE #1 stores the processing capability of the network device and/or the service indication information, and may learn, based on the service indication information, whether the XR-M network element can render an XR object, that is, whether the XR-M network element supports XR object rendering. It may be learned, based on the processing capability of the XR-M network element, whether the XR-M network element has a sufficient capability to assist the UE #1 in completing XR object rendering. Step 1101 to step 1105 are optional steps. In other words, the XR-C network element may not need to provide the service indication information for the UE #1, and the UE #1 may consider by default that the UE #1 subscribes to the network rendering function. Alternatively, the processing capability of the XR-M network element may not need to be provided for the UE #1, and the UE #1 may consider by default that the XR-M network element has a sufficient capability to assist the UE #1 in completing XR object rendering.

1106: Perform audio/video media channel establishment and DC establishment.

This step is similar to step 607, and details are not described again.

It may be understood that the service indication information and the processing capability of the XR-M network element that are sent in steps 1101 to 1104 may alternatively be sent before the UE #1 initiates a media rendering negotiation procedure. This is not limited in this application. For example, the service indication information and the processing capability of the XR-M network element may be sent on a DC channel.

The following describes a rendering negotiation process with reference to two scenarios.

Scenario 1: The UE #1 initiates rendering negotiation.

1111: The UE #1 determines a rendering division for a to-be-rendered XR object in an XR call of the UE #1. To be specific, a portion of to-be-rendered XR objects in the XR call are to be rendered by the XR-M network element, and the other portion of to-be-rendered XR objects in the XR call are to be rendered by the UE #1.

The UE #1 determines, based on first processing requirement information of the XR call, that rendering of an XR object in the XR call cannot be completed by using a processing capability of the UE #1. Therefore, the UE #1 determines that split rendering needs to be performed in this XR call.

In a possible case, the UE #1 subscribes to the network rendering function by default, and considers by default that the XR-M network element has a sufficient capability to assist the UE #1 in completing XR object rendering. Then, the UE #1 determines the rendering division for the to-be-rendered XR object in the XR call.

In another possible case, the UE #1 determines, based on the service indication information in 1102, that the UE #1 subscribes to the network rendering function, that is, the XR-M network element supports XR object rendering; and considers by default that the XR-M network element has a sufficient capability to assist the UE #1 in completing XR object rendering. Then, the UE #1 determines the rendering division for the to-be-rendered XR object in the XR call. If the UE #1 determines that the XR-M network element does not support XR object rendering, for example, the UE #1 may perform rendering processing. This embodiment of this application mainly describes a case in which the XR-M network element supports XR object rendering.

In another possible case, the UE #1 subscribes to the network rendering function by default, and the UE #1 determines, based on the processing capability of the XR-M network element in 1104, that the XR-M network element has a sufficient capability to assist the UE #1 in completing XR object rendering. Then, the UE #1 determines the rendering division for the to-be-rendered XR object in the XR call.

In another possible case, the UE #1 determines, based on the service indication information in 1102, that the XR-M network element supports XR object rendering, and determines, based on the processing capability of the XR-M network element in 1104, that the XR-M network element has a sufficient capability to assist the UE #1 in completing XR object rendering (that is, available computing power required by the XR-M network element for completing rendering a to-be-rendered XR object does not exceed the processing capability of the XR-M network element). Then, the UE #1 determines the rendering division for the to-be-rendered XR object in the XR call.

1112: The UE #1 sends division acknowledgement request information to the IMS, where the division acknowledgement request information is used to request the XR-C network element to accept the rendering division.

In a possible implementation, the UE #1 sends a media rendering negotiation request to the IMS, where the media rendering negotiation request includes the division acknowledgement request information, the division acknowledgement request information includes second processing requirement information of the XR call, and the second processing requirement information of the XR call includes information about a to-be-rendered XR object that needs to be rendered by a network device in the to-be-rendered XR objects in the XR call. For example, the second processing requirement information of the XR call includes a parameter C1, a parameter C2, a parameter D, and a parameter E. For details, refer to the related description in 1012 and 5111. Details are not described herein again.

In an example, a form of the second processing requirement information of the XR call is as follows:
XR-Session-Attribute:
network_rendering_content=0,1,2,3;rendering_type=0/1;video_resolution=1920,1080 ;video_frame_rate=30

Herein, "network_rendering_content" represents the parameter C1, that is, a to-be-rendered XR object that needs to be rendered by the XR-M network element. rendering_type represents the parameter C2, that is, whether the XR-M network element needs to render some to-be-rendered XR objects or the XR-M network element needs to render all to-be-rendered XR objects. For example, rendering_type=0 indicates that the XR-M network element needs to render some to-be-rendered XR objects, and rendering_type=1 indicates that the XR-M network element needs to render all to-be-rendered XR objects. "video_resolution" represents the parameter D, that is, video resolution. "video_frame_rate" represents the parameter E, that is, a video frame rate.

When rendering some to-be-rendered XR objects, the XR-M network element needs to merge media data corresponding to XR objects rendered by the UE #1 and the XR-M network element, and then send merged media data to UE #2. When rendering all to-be-rendered XR objects, the XR-M network element may directly send media data corresponding to all the XR objects rendered by the XR-M network element to UE #2.

It may be understood that, an example in which the XR-M network element merges the media data corresponding to the XR object rendered by the UE #1 and the media data corresponding to the XR object rendered by the XR-M network element is used for description above. This is not limited. For example, the UE #2 may alternatively perform merging processing. For example, the UE #1 sends the media data corresponding to the rendered XR object to the UE #2, and the XR-M network element sends the media data corresponding to the rendered XR object to the UE #2. The UE #2 performs merging processing. For another example, another device may alternatively perform merging processing, and details are not described again.

1113: The IMS sends an HTTP request message to the XR-C network element, where the HTTP request message also includes the division acknowledgement request information.

1114: The XR-C network element applies to the XR-M network element for a rendering resource.

When determining, based on the division acknowledgement request information, that the XR-M network element needs to render an XR object, the XR-C network element may apply to the XR-M network element for a resource, that is, request the XR-M network element to render a to-be-rendered XR object that the XR-M network element is responsible for rendering. In a possible implementation, the XR-C network element sends an HTTP request message to the XR-M network element, where the HTTP request message is used to apply to the XR-M network element for a rendering resource related to XR object rendering.

For example, that the XR-C network element applies to the XR-M for a rendering resource includes: The XR-C network element requests the XR-M network element to create or allocate an endpoint resource. Correspondingly, the XR-M network element creates or allocates a corresponding resource endpoint (also referred to as a media endpoint), and returns information about the corresponding resource endpoint (corresponding to the address information of the network-side rendering device in the summary) to the XR-C network element. For example, after receiving the HTTP request, the XR-M network element creates or allocates two resource endpoints, which are respectively a first resource endpoint and a second resource endpoint. An attribute of the first resource endpoint includes a local connection address of the first resource endpoint, and an attribute of the second resource endpoint includes a local connection address of the second resource endpoint. The local connection address of the first resource endpoint and the local connection address of the second resource endpoint are respectively used to enable the UE #1 to establish a communication connection with the XR-M network element through an IMS (an IMS accessed by the UE #1) and enable the UE #2 to establish a communication connection with the XR-M network element through an IMS (an IMS accessed by the UE #2).

For example, that the XR-C network element applies to the XR-M for a rendering resource may alternatively include: The XR-C network element requests the XR-M network element to reserve or allocate a computing power resource. Optionally, the XR-C network element sends the information about the to-be-rendered XR object or an XR computing power requirement to the XR-M network element, where the XR computing power requirement indicates computing power to be consumed by the to-be-rendered XR object that is to be rendered by the XR-M network element. Correspondingly, the XR-M network element reserves or allocates a corresponding computing power resource, for example, memory, a CPU slot, or a GPU resource. In this way, the XR-M network element can reserve or allocate the corresponding computing power resource based on the information about the to-be-rendered XR object or the XR computing power requirement.

1115: The XR-M network element sends an application result to the XR-C network element.

In a possible implementation, the resource application result returned by the XR-M network element to the XR-C network element includes at least one of the following: result indication information and information about a resource endpoint. The result indication information may be used to notify the XR-C network element whether the XR-M network element is to render the to-be-rendered XR object that the XR-M network element is responsible for rendering. Further, optionally, if the resource application result is used to notify the XR-C network element that the XR-M network element is to render the to-be-rendered XR object that the XR-M network element is responsible for rendering, the XR-C network element may send transmission indication information to the UE #1, to indicate the UE #1 to send, to the XR-M network element, the to-be-rendered XR object that the XR-M network element is responsible for rendering. For example, the information about the resource endpoint includes the local connection address of the first resource endpoint and the local connection address of the second resource endpoint.

In a possible case, if the information about the resource endpoint returned by the XR-M network element to the XR-C network element includes the local connection address of the first resource endpoint, the XR-C network element may send the local connection address of the first resource endpoint to the IMS (for example, a P-CSCF network element in the IMS), so that the IMS (for example, an IMS-AGW controlled by the P-CSCF) communicates with the XR-M network element by using the local connection address of the first resource endpoint. For example, the UE #1 sends, to the XR-M network element through the IMS-AGW, the to-be-rendered XR object that the XR-M network element is responsible for rendering. For example, the UE #1 has a connection to the IMS-AGW, for example, a first connection (the connection may also be understood as a channel). The IMS may establish a second connection between the IMS-AGW and the XR-M network element by using the local connection address of the first resource endpoint sent by the XR-C network element, and establish a correspondence between the first connection and the second connection. The correspondence may enable the IMS-AGW to: after the IMS-AGW receives the to-be-rendered XR object that is sent by the UE #1 and that the XR-M network element is responsible for rendering, determine the second connection, and forward, to the XR-M network element through the second connection, the to-be-rendered XR object that the XR-M network element is responsible for rendering. In addition, if the information about the resource endpoint returned by the XR-M network element to the XR-C network element includes the local connection address of the second resource endpoint, the XR-C network element may further send the local connection address of the second resource endpoint to the IMS (for example, a P-CSCF in the IMS accessed by the UE #2), so that the UE #2 communicates with the XR-M network element through the IMS. For example, the UE #2 obtains merged media data from the XR-M network element through the IMS. For example, the XR-C network element may send the local connection address of the second resource endpoint to the P-CSCF in the IMS accessed by the UE #2, so that the UE #2 is connected to the XR-M network element through an IMS-AGW controlled by the P-CSCF. In this way, the UE #2 can obtain the merged media data from the XR-M network element through the IMS-AGW.

It may be understood that the application result returned by the XR-M network element to the XR-C network element indicates that the XR-M network element is to render the to-be-rendered XR object that the XR-M network element is responsible for rendering, that is, the XR-C network element successfully applies for the rendering resource from the XR-M network element. Further, the XR-C network element accepts the rendering division.

1116: The XR-C network element sends division acknowledgement response information and the information about the resource endpoint to the IMS.

1117: The IMS sends the division acknowledgement response information to the UE #1, where the division acknowledgement response information indicates that the XR-C network element accepts the rendering division.

Scenario 2: The UE #1 initiates rendering renegotiation.

1121: The UE #1 determines a rendering division for a to-be-rendered XR object in an XR call of the UE #1.

When a processing requirement of the XR call is updated in an XR call process, the UE #1 re-determines a rendering division for the to-be-rendered XR object. Besides, this is similar to step 1111, and details are not described again.

1122: The UE #1 sends redivision acknowledgement request information to the IMS, where the redivision acknowledgement request information includes updated second processing requirement information of the XR call. The updated second processing requirement information of the XR call includes information about a to-be-rendered XR object that needs to be rendered by the XR-M network element in the to-be-rendered XR objects in the XR call.

In some cases, for example, when a processing requirement of the XR call is updated in an XR call process, the terminal device may initiate rendering renegotiation. In these cases, the UE #1 may send the redivision acknowledgement request information to the IMS, to perform rendering negotiation for the XR call again.

1123: The IMS sends an HTTP message to the XR-C network element, where the HTTP message includes the redivision acknowledgement request information, to request the XR-C network element to accept the updated rendering division.

1124: The XR-C network element applies to the XR-M network element for updating a rendering resource.

When determining, based on the redivision acknowledgement request information, that the XR-M network element needs to update rendering, the XR-C network element may apply to the XR-M network element for updating a resource. In a possible implementation, the XR-C network element sends an HTTP message to the XR-M network element, and the HTTP message is used to apply for resource modification. It may be understood that, in this step, the XR-M network element may re-create an endpoint resource, or may reuse the endpoint resource created or allocated in step 1114. The XR-M network element may reuse the computing power resource reserved or allocated in step 1114, or may reallocate a computing power resource. The reallocated computing power resource may be different from the computing power resource reserved or allocated in step 1114.

1125: The XR-M network element sends an application result to the XR-C network element.

In a possible implementation, the resource application result returned by the XR-M network element to the XR-C network element includes at least one of the following: result indication information and information about a resource endpoint. The result indication information may be used to notify the XR-C network element whether the XR-M network element is to render the to-be-rendered XR object that the XR-M network element is responsible for rendering. If the XR-M network element re-creates an endpoint resource, the information about the resource endpoint includes information about the re-created endpoint resource.

1126: The XR-C network element sends division acknowledgement response information to the IMS.

For example, the application result received by the XR-C network element indicates that the XR-M network element is to render the to-be-rendered XR object that the XR-M network element is responsible for rendering, that is, the XR-C network element successfully applies for the rendering resource from the XR-M network element. Further, the XR-C network element accepts the rendering division, and sends the division acknowledgement response information to the IMS. Optionally, if the XR-M network element re-creates an endpoint resource in step 1125, the XR-C network element further needs to send information about a new resource endpoint to the IMS.

1127: The IMS sends the division acknowledgement response information to the UE #1.

The foregoing provides example descriptions with reference to two scenarios. Regardless of the foregoing scenario, after the UE #1 receives the division acknowledgement response information, the following steps may be included.

1151: The UE #1 sends, to the XR-M network element, a to-be-rendered XR object that the XR-M network element is responsible for rendering.

In a possible implementation, the UE #1 sends, to the XR-M network element based on the rendering division for the to-be-rendered XR object in the XR call, the to-be-rendered XR object that the XR-M network element is responsible for rendering.

For example, the UE #1 sends, to the IMS-AGW through the first connection based on the rendering division for the to-be-rendered XR object in the XR call, the to-be-rendered XR object that the XR-M network element is responsible for rendering. The IMS-AGW forwards, to the XR-M network element through the second connection based on the correspondence between the first connection and the second connection, the to-be-rendered XR object that the XR-M network element is responsible for rendering.

1152: The XR-M network element renders the to-be-rendered XR object that the XR-M network element is responsible for rendering.

1153: The UE #1 renders a to-be-rendered XR object that the UE #1 is responsible for rendering.

1154: The UE #1 sends media data corresponding to a rendered XR object to the XR-M network element.

1155: The XR-M network element merges the media data corresponding to the XR object rendered by the UE #1 and media data corresponding to the XR object rendered by the XR-M network element, to obtain merged media data.

1156: The XR-M network element sends the merged media data to the UE #2.

Step 1151 to step 1156 are similar to step 622 to step 627, and details are not described herein again.

Based on the foregoing technical solution, the XR-C network element may notify the terminal device of the processing capability of the XR-M network element and the service indication information. When determining that required XR object rendering computing power exceeds available rendering computing power of the terminal device, and determining that the network device supports XR object rendering, the terminal device determines the rendering division, and may transmit the division acknowledgement request information on the DC channel, to request to perform rendering negotiation. The XR-C network element may determine, based on the division acknowledgement request information, that the XR-M network element is to assist the terminal device in completing XR object rendering, and notify the terminal device, and the terminal device sends data to be rendered by the XR-M network element to the XR-M network element. Finally, the XR-M network element or another device may merge the media data corresponding to the XR object rendered by the XR-M network element and the media data corresponding to the XR object rendered by the terminal device, and send the merged media data to the UE #2 in the current session. In addition, if a media rendering task may need to be redivided due to some cases in a session process, for example, a change in the processing requirement of the XR call, the UE #1 may re-initiate rendering negotiation, and re-perform rendering negotiation based on an updated processing requirement of the XR call.

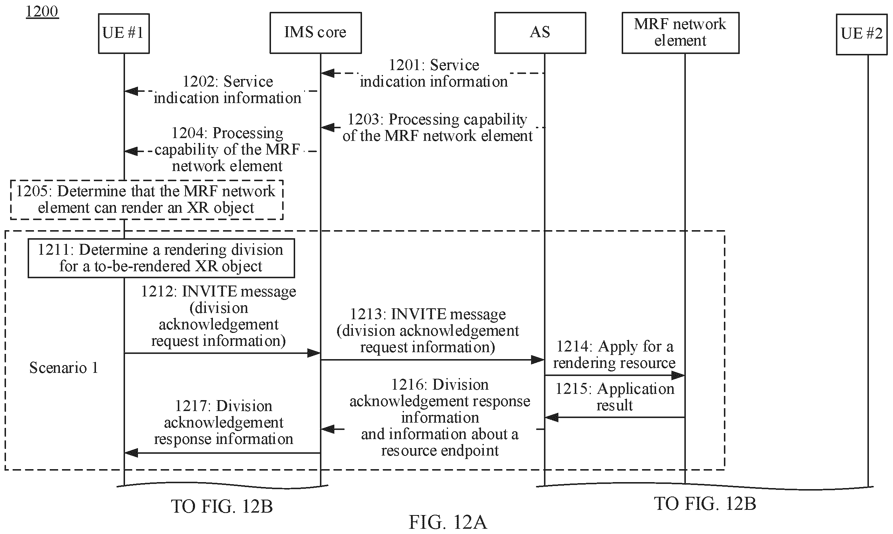

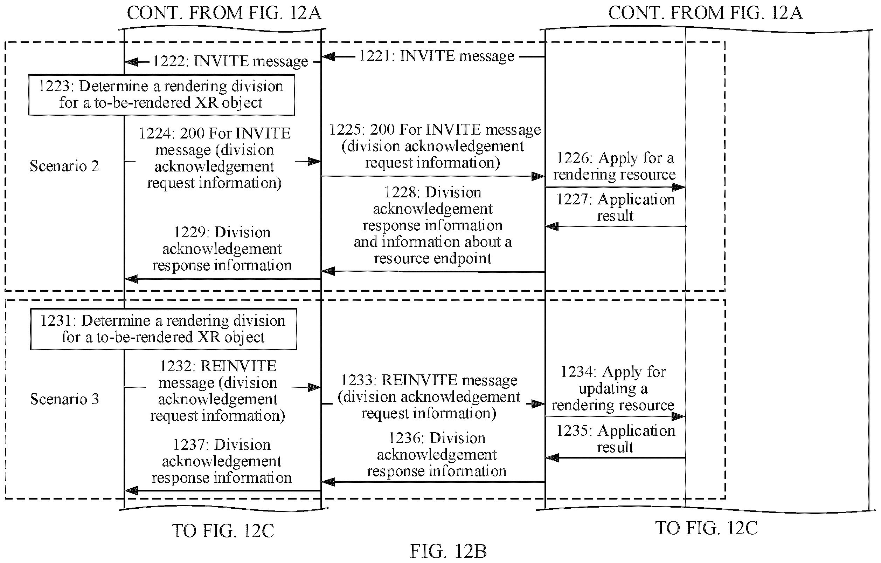

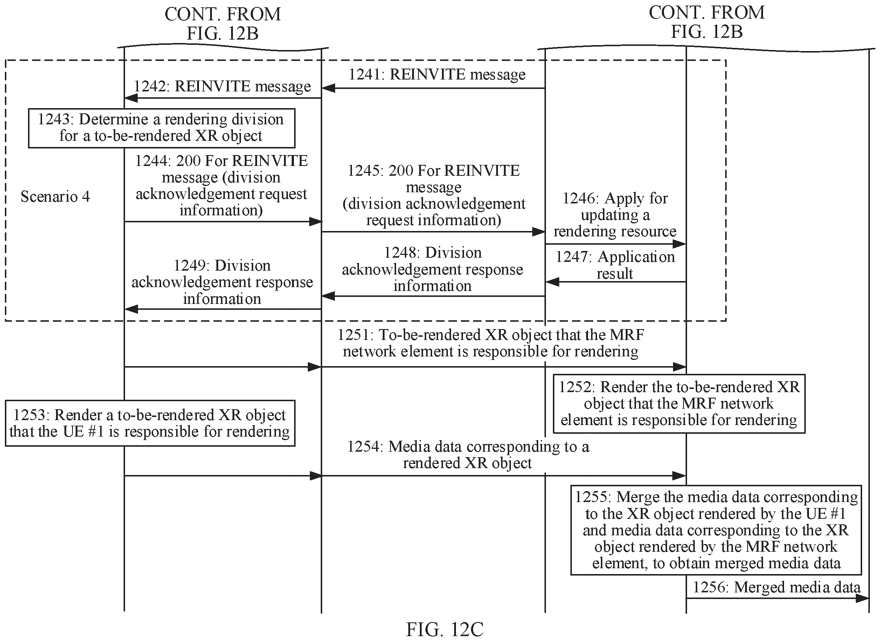

FIG. 12A to FIG. 12C are a schematic flowchart of an XR object rendering method 1200 according to an embodiment of this application. The method 1200 may be used to implement the solution of the foregoing method 900. The method 1200 may be used in a scenario in which rendering negotiation is performed based on IMS SIP signaling, and rendering negotiation may be completed, for example, in a call establishment process. In the method 1200, the first network device is an AS, the second network device is an MRF network element, the MRF network element may include, for example, an MRFC and an MRFP, and an IMS includes one or more network elements. For example, refer to the architecture shown in FIG. 2. "IMS core" is used for unified representation below. In an example, the method 1200 shown in FIG. 12A to FIG. 12C may be used in the architecture in FIG. 2. The method 1200 may include the following steps.

Before step 1201, UE #1 sends a SIP REGISTER message to the IMS in a process of registering with an IMS core, and after successfully authenticating the UE #1 for registration, the IMS core sends SIP REGISTER to the AS network element.

1201: The AS sends service indication information to the IMS core.

A method for determining the service indication information by the AS is similar to that in step 1001, and details are not described again.

1202: The IMS core sends the service indication information to the UE #1.

1203: The AS sends a processing capability of the MRF network element to the IMS core.

1204: The IMS core sends the processing capability of the MRF network element to the UE #1.

It may be understood that the service indication information and the processing capability of the MRF network element may be sent in one message, or may be sent in two messages. This is not limited in this application. If the service indication information and the processing capability of the MRF network element are sent in two messages, a sequence of steps 1201 and 1203 and a sequence of steps 1202 and 1204 are not limited in this application.

1205: The UE #1 determines that the MRF network element can render an XR object.

For example, the UE #1 stores the processing capability of the network device and/or the service indication information, and may leam, based on the service indication information, whether the MRF network element can render an XR object, that is, whether the MRF network element supports XR object rendering. It may be learned, based on the processing capability of the MRF network element, whether the MRF network element has a sufficient capability to assist the UE #1 in completing XR object rendering. Step 1201 to step 1205 are optional steps. In other words, the AS network element may not need to provide the service indication information for the UE #1, and the UE #1 may consider by default that the UE #1 subscribes to the network rendering function. Alternatively, the processing capability of the MRF network element may not need to be provided for the UE #1, and the UE #1 may consider by default that the MRF network element has a sufficient capability to assist the UE #1 in completing XR object rendering.

The following describes a rendering negotiation process with reference to four scenarios.

Scenario 1: The UE #1 initiates XR call establishment.

1211: The UE #1 determines a rendering division for a to-be-rendered XR object in an XR call of the UE #1. To be specific, a portion of to-be-rendered XR objects in the XR call are to be rendered by the MRF network element, and the other portion of to-be-rendered XR objects in the XR call are to be rendered by the UE #1.

The UE #1 determines, based on first processing requirement information of the XR call, that rendering of an XR object in the XR call cannot be completed by using a processing capability of the UE #1. Therefore, the UE #1 determines that split rendering needs to be performed in this XR call.

In a possible case, the UE #1 subscribes to the network rendering function by default, and considers by default that the MRF network element has a sufficient capability to assist the UE #1 in completing XR object rendering. Then, the UE #1 determines the rendering division for the to-be-rendered XR object in the XR call.

In another possible case, the UE #1 determines, based on the service indication information in 1202, that the UE #1 subscribes to the network rendering function, that is, the MRF network element supports XR object rendering; and considers by default that the MRF network element has a sufficient capability to assist the UE #1 in completing XR object rendering. Then, the UE #1 determines the rendering division for the to-be-rendered XR object in the XR call. If the UE #1 determines that the MRF network element does not support XR object rendering, for example, the UE #1 may perform rendering processing. This embodiment of this application mainly describes a case in which the MRF network element supports XR object rendering.

In another possible case, the UE #1 subscribes to the network rendering function by default, and the UE #1 determines, based on the processing capability of the MRF network element in 1204, that the MRF network element has a sufficient capability to assist the UE #1 in completing XR object rendering. Then, the UE #1 determines the rendering division for the to-be-rendered XR object in the XR call.

In another possible case, the UE #1 determines, based on the service indication information in 1202, that the MRF network element supports XR object rendering, and determines, based on the processing capability of the MRF network element in 1204, that the MRF network element has a sufficient capability to assist the UE #1 in completing XR object rendering (that is, available computing power required by the MRF network element for completing rendering a to-be-rendered XR object does not exceed the processing capability of the MRF network element). Then, the UE #1 determines the rendering division for the to-be-rendered XR object in the XR call. 1212: The UE #1 sends an INVITE message to the IMS core, where the INVITE message includes division acknowledgement request information, and the division acknowledgement request information is used to request the AS network element to accept the rendering division.

The division acknowledgement request information includes second processing requirement information of the XR call. This is specifically similar to step 1112, and is not described again.

1213: The IMS core sends an INVITE message to the AS.

Optionally, if the INVITE message in step 1212 includes the division acknowledgement request information, the INVITE message in step 1213 also includes the division acknowledgement request information.

1214: The AS applies to the MRF network element for a rendering resource.

When determining, based on the division acknowledgement request information, that the MRF network element needs to render an XR object, the AS network element may apply to the MRF network element for a resource, that is, request the MRF network element to render a to-be-rendered XR object that the MRF network element is responsible for rendering. In a possible implementation, the AS network element sends an INVITE message to the MRF network element, where the INVITE message is used to apply to the MRF network element for a rendering resource related to XR object rendering.

For example, that the AS network element applies to the MRF for a rendering resource includes: The AS network element requests the MRF network element to create or allocate an endpoint resource. Correspondingly, the MRF network element creates or allocates a corresponding resource endpoint (also referred to as a media endpoint), and returns information about the corresponding resource endpoint (corresponding to the address information of the network-side rendering device in the summary) to the AS network element. For example, after receiving the INVITE message, the MRF network element creates or allocates two resource endpoints, which are respectively a first resource endpoint and a second resource endpoint. An attribute of the first resource endpoint includes a local connection address of the first resource endpoint, and an attribute of the second resource endpoint includes a local connection address of the second resource endpoint. The local connection address of the first resource endpoint and the local connection address of the second resource endpoint are respectively used to enable the UE #1 to establish a communication connection with the MRF network element through an IMS core (an IMS core accessed by the UE #1) and enable the UE #2 to establish a communication connection with the MRF network element through an IMS core (an IMS core accessed by the UE #2).

For example, that the AS network element applies to the MRF for a rendering resource may alternatively include: The AS network element requests the MRF network element to reserve or allocate a computing power resource. Correspondingly, the MRF network element reserves or allocates a corresponding computing power resource, for example, memory, a CPU slot, or a GPU resource. Optionally, the AS network element sends the information about the to-be-rendered XR object or an XR computing power requirement to the MRF network element, where the XR computing power requirement indicates computing power to be consumed by the to-be-rendered XR object that is to be rendered by the MRF network element. In this way, the MRF network element can reserve or allocate the corresponding computing power resource based on the information about the to-be-rendered XR object or the XR computing power requirement.

1215: The MRF network element sends an application result to the AS.

In a possible implementation, the resource application result returned by the MRF network element to the AS network element includes at least one of the following: result indication information and information about a resource endpoint. The result indication information may be used to notify the AS network element whether the MRF network element is to render the to-be-rendered XR object that the MRF network element is responsible for rendering. Further, optionally, if the resource application result is used to notify the AS network element that the MRF network element is to render the to-be-rendered XR object that the MRF network element is responsible for rendering, the AS network element may send transmission indication information to the UE #1, to indicate the UE #1 to send, to the MRF network element, the to-be-rendered XR object that the MRF network element is responsible for rendering. For example, the information about the resource endpoint includes the local connection address of the first resource endpoint and the local connection address of the second resource endpoint.

In a possible case, if the information about the resource endpoint returned by the MRF network element to the AS network element includes the local connection address of the first resource endpoint, the AS network element may send the local connection address of the first resource endpoint to the IMS core (for example, a P-CSCF network element in the IMS core), so that the IMS core (for example, an IMS-AGW controlled by the P-CSCF) communicates with the MRF network element by using the local connection address of the first resource endpoint. For example, the UE #1 sends, to the MRF network element through the IMS-AGW, the to-be-rendered XR object that the MRF network element is responsible for rendering. For example, the UE #1 has a connection to the IMS-AGW, for example, a third connection (the connection may also be understood as a channel). The IMS core may establish a fourth connection between the IMS-AGW and the MRF network element by using the local connection address of the first resource endpoint sent by the AS network element, and establish a correspondence between the third connection and the fourth connection. The correspondence may enable the IMS-AGW to: after the IMS-AGW receives the to-be-rendered XR object that is sent by the UE #1 and that the MRF network element is responsible for rendering, determine the fourth connection, and forward, to the MRF network element through the fourth connection, the to-be-rendered XR object that the MRF network element is responsible for rendering. In addition, if the information about the resource endpoint returned by the MRF network element to the AS network element includes the local connection address of the second resource endpoint, the AS network element may further send the local connection address of the second resource endpoint to the IMS core (for example, a P-CSCF in the IMS core accessed by the UE #2), so that the UE #2 communicates with the MRF network element through the IMS core. For example, the UE #2 obtains merged media data from the MRF network element through the IMS core. For example, the AS network element may send the local connection address of the second resource endpoint to the P-CSCF in the IMS core, so that the UE #2 is connected to the MRF network element through an IMS-AGW controlled by the P-CSCF. In this way, the UE #2 can obtain the merged media data from the MRF network element through the IMS-AGW.

It may be understood that the application result returned by the MRF network element to the AS network element indicates that the MRF network element is to render the to-be-rendered XR object that the MRF network element is responsible for rendering, that is, the AS network element successfully applies for the rendering resource from the MRF network element. Further, the AS network element accepts the rendering division.

1216: The AS sends division acknowledgement response information and the information about the resource endpoint to the IMS core, where the division acknowledgement response information indicates that the AS network element accepts the rendering division.

1217: The IMS core sends the division acknowledgement response information to the UE #1.

Scenario 2: The UE #1 receives XR call establishment.

1221: The AS sends an INVITE message to the IMS core.

1222: The IMS core sends an INVITE message to the UE #1.

1223: The UE #1 determines a rendering division for a to-be-rendered XR object in an XR call of the UE #1.

Except for the scenario, this step is similar to step 1211, and details are not described again.

1224: The UE #1 sends a 200 For INVITE message to the IMS core, where the 200 For INVITE message includes division acknowledgement request information.

The division acknowledgement request information includes second processing requirement information of the XR call. This is specifically similar to step 1112, and is not described again.

The 200 For INVITE message in step 1224 may also be replaced with a 18X For INVITE message, and a specific type of the message is not limited.

1225: The IMS core sends a 200 For INVITE message to the AS, where the 200 For INVITE message includes the division acknowledgement request information.

The 200 For INVITE message in step 1225 may also be replaced with a 18X For INVITE message, and a specific type of the message is not limited.

1226: The AS applies to the MRF network element for a rendering resource.

1227: The MRF network element sends an application result to the AS.

1228: The AS sends division acknowledgement response information and information about a resource endpoint to the IMS core.

For example, the application result received by the AS network element indicates that the MRF network element is to render the to-be-rendered XR object that the MRF network element is responsible for rendering, that is, the AS network element successfully applies for the rendering resource from the MRF network element. Further, the AS network element accepts the rendering division, and sends the division acknowledgement response information and the information about the resource endpoint to the IMS core.

1229: The IMS core sends the division acknowledgement response information to the UE #1.

Step 1226 to step 1229 are similar to step 1214 to step 1217, and details are not described herein again.

Scenario 3: The UE #1 initiates XR call update.

1231: The UE #1 determines a rendering division for a to-be-rendered XR object in an XR call of the UE #1. When a processing requirement of the XR call is updated in an XR call process, the UE #1 re-determines a rendering division. Besides, this is similar to step 1211, and details are not described again.

1232: The UE #1 sends a REINVITE message to the IMS core, where the REINVITE message includes division acknowledgement request information, to request the AS to accept the updated rendering division.

1233: The IMS core sends a REINVITE message to the AS, where the REINVITE message includes the division acknowledgement request information, to request the AS to accept the updated rendering division.

The division acknowledgement request information in step 1232 and step 1233 includes updated second processing requirement information of the XR call. For specific content of the updated second processing requirement information of the XR call, refer to the related description in step 1112. Details are not described again.

1234: The AS applies to the MRF network element for updating a rendering resource.

When determining, based on the division acknowledgement request information, that the MRF network element needs to update rendering, the AS network element may apply to the MRF network element for updating a resource. In a possible implementation, the AS network element sends a REINVITE message to the MRF network element, and the REINVITE message is used to apply for resource modification. It may be understood that, in this step, the MRF network element may re-create an endpoint resource, or may reuse the endpoint resource created or allocated in step 1214. The MRF network element may reuse the computing power resource reserved or allocated in step 1214, or may reallocate a computing power resource. The reallocated computing power resource may be different from the computing power resource reserved or allocated in step 1214.

1235: The MRF network element sends an application result to the AS.

In a possible implementation, the resource application result returned by the MRF network element to the AS network element includes at least one of the following: result indication information and information about a resource endpoint. The result indication information may be used to notify the AS network element whether the MRF network element is to render the to-be-rendered XR object that the MRF network element is responsible for rendering. If the MRF network element re-creates an endpoint resource, the information about the resource endpoint includes information about the re-created resource endpoint.

1236: The AS sends division acknowledgement response information to the IMS core.

For example, the application result received by the AS network element indicates that the MRF network element is to render the to-be-rendered XR object that the MRF network element is responsible for rendering, that is, the AS network element successfully applies for the rendering resource from the MRF network element. Further, the AS network element accepts the rendering division, and sends the division acknowledgement response information to the IMS core. Optionally, if the MRF network element re-creates an endpoint resource, the AS further needs to send information about a new resource endpoint to the IMS core.

1237: The IMS core sends the division acknowledgement response information to the UE #1.

Scenario 4: The UE #1 receives XR call update.

1241: The AS sends a REINVITE message to the IMS core.

1242: The IMS core sends a REINVITE message to the UE #1.

1243: The UE #1 determines a rendering division for a to-be-rendered XR object in an XR call of the UE #1.

When a processing requirement of the XR call is updated, a rendering task needs to be redivided. In this case, the UE #1 needs to re-determine a rendering division. Besides, this is similar to 1211, and details are not described again.

1244: The UE #1 sends a 200 For REINVITE message to the IMS core, where the 200 For REINVITE message includes division acknowledgement request information, to request the AS to accept the updated rendering division.

1245: The IMS core sends a 200 For REINVITE message to the AS, where the 200 For REINVITE message includes the division acknowledgement request information, to request the AS to accept the updated rendering division.

Step 1244 and step 1245 are similar to step 1224 and step 1225, and details are not described again.

1246: The AS applies to the MRF network element for updating a rendering resource.

When determining, based on the division acknowledgement request information, that the MRF network element needs to update rendering, the AS network element may apply to the MRF network element for updating a resource. In a possible implementation, the AS network element sends a REINVITE message to the MRF network element, and the REINVITE message is used to apply for resource modification. For details, refer to the description in step 1214. Details are not described herein again. It may be understood that, in this step, the MRF network element may re-create an endpoint resource, or may reuse the endpoint resource created or allocated in step 1226. The MRF network element may reuse the computing power resource reserved or allocated in step 1226, or may reallocate a computing power resource. The reallocated computing power resource may be different from the computing power resource reserved or allocated in step 1226.

1247: The MRF network element sends an application result to the AS.

In a possible implementation, the resource application result returned by the MRF network element to the AS network element includes at least one of the following: result indication information and information about a resource endpoint. The result indication information may be used to notify the AS network element whether the MRF network element is to render the to-be-rendered XR object that the MRF network element is responsible for rendering. If the MRF network element re-creates an endpoint resource, the information about the resource endpoint includes information about the re-created endpoint resource.

1248: The AS sends division acknowledgement response information to the IMS core.

For example, the application result received by the AS network element indicates that the MRF network element is to render the to-be-rendered XR object that the MRF network element is responsible for rendering, that is, the AS network element successfully applies for the rendering resource from the MRF network element. Further, the AS network element accepts the rendering division, and sends the division acknowledgement response information to the IMS core. Optionally, if the MRF network element re-creates an endpoint resource, the AS further needs to send information about a new resource endpoint to the IMS core.

1249: The IMS core sends the division acknowledgement response information to the UE #1.

The foregoing provides example descriptions with reference to four scenarios. Regardless of the foregoing scenario, after the UE #1 receives the division acknowledgement response information, the following steps may be included.

1251: The UE #1 sends, to the MRF network element, a to-be-rendered XR object that the MRF network element is responsible for rendering.

In a possible implementation, the UE #1 sends, to the MRF network element based on the rendering division for the to-be-rendered XR object in the XR call, the to-be-rendered XR object that the MRF network element is responsible for rendering.

For example, the UE #1 sends, to the IMS-AGW through the third connection based on the rendering division for the to-be-rendered XR object in the XR call, the to-be-rendered XR object that the MRF network element is responsible for rendering. The IMS-AGW forwards, to the MRF network element through the fourth connection based on the correspondence between the third connection and the fourth connection, the to-be-rendered XR object that the MRF network element is responsible for rendering.

1252: The MRF network element renders the to-be-rendered XR object that the MRF network element is responsible for rendering.

1253: The UE #1 renders a to-be-rendered XR object that the UE #1 is responsible for rendering.

1254: The UE #1 sends media data corresponding to a rendered XR object to the MRF network element.

1255: The MRF network element merges the media data corresponding to the XR object rendered by the UE #1 and media data corresponding to the XR object rendered by the MRF network element, to obtain merged media data.

1256: The MRF network element sends the merged media data to the UE #2.

Step 1251 to step 1256 are similar to step 722 to step 727, and details are not described herein again.

Based on the foregoing technical solution, the AS may notify the terminal device of the processing capability of the MRF network element and the service indication information. When determining that required XR object rendering computing power exceeds available rendering computing power of the terminal device, and determining that the MRF network element supports XR object rendering, the terminal device determines the rendering division, and may include the division acknowledgement request information in a call request, to request to perform rendering negotiation. The AS may determine, based on the division acknowledgement request information, that the MRF network element is to assist the terminal device in completing XR object rendering, and notify the terminal device, and the AS applies to the MRF network element for a media rendering resource. The terminal device may send data to be rendered by the MRF network element to the MRF network element based on a rendering negotiation result. Finally, the MRF network element or another device may merge the media data corresponding to the XR object rendered by the MRF network element and the media data corresponding to the XR object rendered by the terminal device, and send the merged media data to the UE #2 in the current session. In addition, if a media rendering task may need to be redivided due to some cases in a session process, for example, a change in the processing requirement of the XR call, the terminal device or the AS may initiate a session update request, and re-perform rendering negotiation based on an updated processing requirement of the XR call.

It may be understood that, in the solution shown in FIG. 12A to FIG. 12C, an example in which the MRF network element merges the media data corresponding to the XR object rendered by the UE #1 and the media data corresponding to the XR object rendered by the MRF network element is used for description. This is not limited. For example, the UE #2 may alternatively perform merging processing. For example, the UE #1 sends the media data corresponding to the rendered XR object to the UE #2, and the MRF network element sends the media data corresponding to the rendered XR object to the UE #2. The UE #2 performs merging processing. For another example, another device may alternatively perform merging processing, and details are not described again.

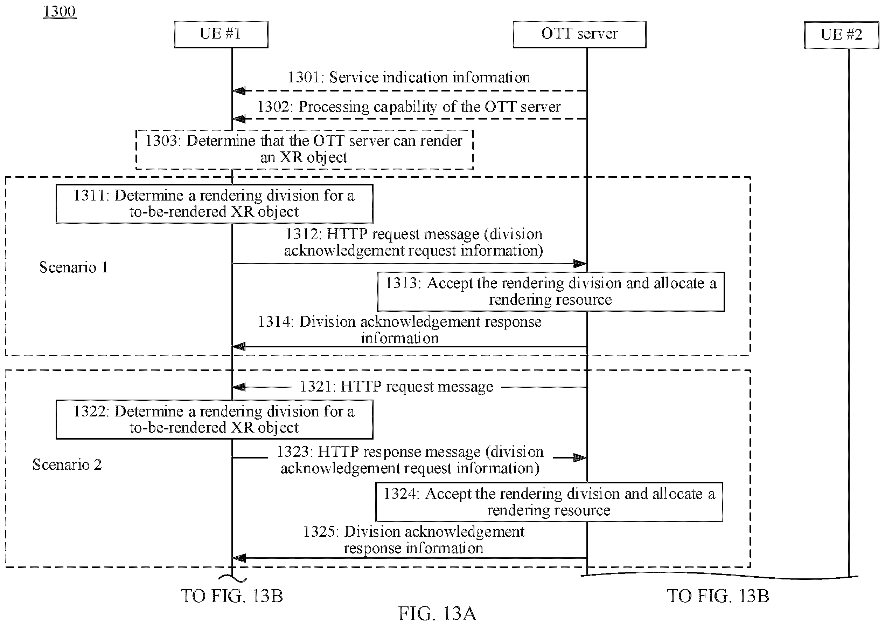

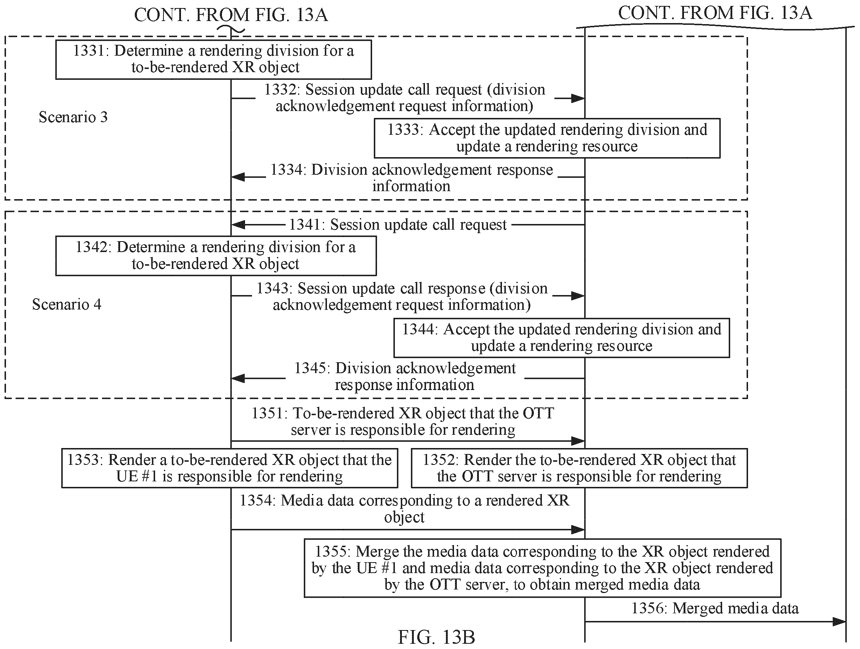

FIG. 13A and FIG. 13B are a schematic flowchart of an XR object rendering method 1300 according to an embodiment of this application. The method 1300 may be used to implement the solution of the foregoing method 900. The method 1300 may be used in a scenario in which rendering negotiation is completed based on an HTTP/HTTPS message, and rendering negotiation may be completed, for example, in a call establishment process. In the method 1300, it is assumed that the first network device and the second network device are an OTT server. In an example, the method 1300 shown in FIG. 13A and FIG. 13B may be used in the architecture in FIG. 3. The method 1300 may include the following steps.

Optionally, before 1301, UE #1 sends an HTTP request message to the OTT server for registration.

1301: The OTT server sends service indication information to the UE #1.

A method for determining the service indication information by the OTT server is similar to the method for determining the service indication information by the network device in step 1001, and details are not described again.

In a possible implementation, the OTT server sends an HTTP response message to the UE #1, and the HTTP response message includes the service indication information.

1302: The OTT server sends a processing capability of the OTT server to the UE #1.

In a possible implementation, the OTT server sends an HTTP response message to the UE #1, and the HTTP response message includes the processing capability of the OTT server.

It may be understood that the service indication information and the processing capability of the OTT server may be sent in one message, or may be sent in two messages. This is not limited in this application. If the service indication information and the processing capability of the OTT server are sent in two messages, a sequence of steps 1301 and 1302 is not limited in this application.

1303: The UE #1 determines that the OTT server can render an XR object.

For example, the UE #1 stores the processing capability of the network device and/or the service indication information, and may learn, based on the service indication information, whether the OTT server can render an XR object, that is, whether the OTT server supports XR object rendering. It may be learned, based on the processing capability of the OTT server, whether the OTT server has a sufficient capability to assist the UE #1 in completing XR object rendering. Step 1301 to step 1303 are optional steps. In other words, the OTT server may not need to provide the service indication information for the UE #1, and the UE #1 may consider by default that the UE #1 subscribes to the network rendering function. Alternatively, the OTT server may not need to provide the processing capability of the OTT server for the UE #1, and the UE #1 may consider by default that the OTT server has a sufficient capability to assist the UE #1 in completing XR object rendering.

The following describes a rendering negotiation process with reference to four scenarios.

Scenario 1: The UE #1 initiates rendering negotiation.

1311: The UE #1 determines a rendering division for a to-be-rendered XR object in an XR call. To be specific, a portion of to-be-rendered XR objects in the XR call are to be rendered by the OTT server, and the other portion of to-be-rendered XR objects in the XR call are to be rendered by the UE #1.

The UE #1 determines, based on first processing requirement information of the XR call, that rendering of an XR object in the XR call cannot be completed by using a processing capability of the UE #1. Therefore, the UE #1 determines that split rendering needs to be performed in this XR call.

In a possible case, the UE #1 subscribes to the network rendering function by default, and considers by default that the OTT server can assist in completing XR object rendering. Then, the UE #1 determines the rendering division for the to-be-rendered XR object in the XR call.

In another possible case, the UE #1 determines, based on the service indication information in 1301, that the UE #1 subscribes to the network rendering function, that is, the OTT server supports XR object rendering; and considers by default that the OTT server has a sufficient capability to assist the UE #1 in completing XR object rendering. Then, the UE #1 determines the rendering division for the to-be-rendered XR object in the XR call. If the UE #1 determines that the OTT server does not support XR object rendering, for example, the UE #1 may perform rendering processing. This embodiment of this application mainly describes a case in which the OTT server supports XR object rendering.

In another possible case, the UE #1 subscribes to the network rendering function by default, and the UE #1 determines, based on the processing capability of the OTT server in 1302, that the OTT server has a sufficient capability to assist the UE #1 in completing XR object rendering. Then, the UE #1 determines the rendering division for the to-be-rendered XR object in the XR call.

In another possible case, the UE #1 determines, based on the service indication information in 1301, that the OTT server supports XR object rendering, and determines, based on the processing capability of the OTT server in 1302, that the OTT server has a sufficient capability to assist the UE #1 in completing XR object rendering (that is, available computing power required by the OTT server for completing rendering a to-be-rendered XR object does not exceed the processing capability of the OTT server). Then, the UE #1 determines the rendering division for the to-be-rendered XR object in the XR call, that is, determines XR objects that need to be rendered by the UE #1 and the OTT server respectively.

1312: The UE #1 sends an HTTP request message to the OTT server, where the HTTP request message includes division acknowledgement request information, and the division acknowledgement request information is used to request the OTT server to accept the rendering division.

The division acknowledgement request information includes second processing requirement information of the XR call. Optionally, the second processing requirement information of the XR call includes a parameter C1, a parameter C2, a parameter D, and a parameter E. Details are similar to the division acknowledgement request information in step 1112, and details are not described again.

In an example, a format of the second processing requirement information of the XR call may be a json format as follows:

```
          Content-Type: application/json
          {
          "XR-Session-Attribute": {
          "network _rendering_content": "0,1,2,3", //indicating a to-be-rendered XR object that
          needs to be rendered by the OTT server in the XR call
          "rendering_type":"0/1" , //indicating that some/all to-be-rendered XR objects in the XR
 call need to be rendered by the OTT server
          "video_resolution": "1920,1080", //indicating video resolution of the XR call
          "video_frame_rate": "30"}//indicating a video frame rate of the XR call
          }
 
```

In another example, a format of the second processing requirement information of the XR call may be an XML format as follows:

```
          Content-Type: application/xml
          <XR-Session-Attribute>
          < network _rendering_content Value="0,1,2,3"/> <!--indicating a to-be-rendered XR
 object that needs to be rendered by the OTT server in the XR call-->
          <rendering_type Value="0/1"/><!--indicating that some/all to-be-rendered XR objects
          in the XR call need to be rendered by the OTT server-->
          < video _resolution Value="1920,1080"/> <!--indicating video resolution of the XR
 call-->
          <video_frame_rate Value="30"/> <!--indicating a video frame rate of the XR call-->
          </XR-Session-Attribute>
```

In any one of the foregoing examples, "network_rendering_content" represents the parameter C1, that is, the to-be-rendered XR object that needs to be rendered by the OTT server. "rendering_type" represents the parameter C2, that is, whether the XR-M network element needs to render some to-be-rendered XR objects or the XR-M network element needs to render all to-be-rendered XR objects. "video_resolution" represents the parameter D, that is, a video resolution. "video_frame_rate" represents the parameter E, that is, a video frame rate.

1313: The OTT server accepts the rendering division and allocates a rendering resource.

A method for allocating the rendering resource by the OTT server based on the division acknowledgement request information is similar to that in step 1013, and details are not described again.

1314: The OTT server sends division acknowledgement response information to the UE #1, where the division acknowledgement response information indicates that the OTT server accepts the rendering division.

Scenario 2: The UE #1 receives rendering negotiation.

1321: The OTT server sends an HTTP request message to the UE #1.

1322: The UE #1 determines a rendering division for a to-be-rendered XR object in an XR call of the UE #1. This is similar to step 1311, and details are not described again.

1323: The UE #1 sends an HTTP response message to the OTT server, where the HTTP response message includes division acknowledgement request information.

Step 1323 is similar to step 1312, and details are not described again.

1324: The OTT server accepts the rendering division and allocates a rendering resource.

A method for allocating the rendering resource by the OTT server based on the division acknowledgement is similar to that in step 1013, and details are not described again.

1325: The OTT server sends division acknowledgement response information to the UE #1.

Scenario 3: The UE #1 initiates media rendering renegotiation.

1331: The UE #1 determines a rendering division for a to-be-rendered XR object in an XR call of the UE #1.

The UE #1 determines, based on an updated processing requirement of the XR call, a processing capability of the UE #1, and a processing capability of the OTT server (optional), the rendering division for the to-be-rendered XR object in the XR call of the UE #1. This step is similar to step 1311, and details are not described again.

1332: The UE #1 sends a session update call request to the OTT server, where the session update call request includes division acknowledgement request information, and the division acknowledgement request information is used to request the OTT server to accept the updated rendering division.

In a possible implementation, the UE #1 sends an HTTP message to the OTT server, and the HTTP message includes the session update call request, or the HTTP message is used to request a session update call.

Step 1332 is similar to step 1312, and details are not described again.

1333: The OTT server accepts the updated rendering division and updates a rendering resource.

For example, the OTT server re-determines, based on the division acknowledgement request information included in the session update call request, a to-be-rendered XR object that needs to be rendered by the OTT server, and updates the rendering resource based on the to-be-rendered XR object that needs to be rendered by the OTT server. It may be understood that in this step, the OTT server may reuse the computing power resource reserved or allocated in step 1313, or may reallocate a computing power resource. The reallocated computing power resource may be different from the computing power resource reserved or allocated in step 1313.

1334: The OTT server sends division acknowledgement response information to the UE #1, where the division acknowledgement response information indicates that the OTT server accepts the updated rendering division.

Scenario 4: The UE #1 receives media rendering renegotiation.

1341: The OTT server sends a session update call request to the UE #1.

1342: The UE #1 determines a rendering division for a to-be-rendered XR object in an XR call of the UE #1.

In this embodiment of this application, it is assumed that a processing requirement of the XR call changes, and consequently, a rendering task needs to be redivided. The UE #1 re-determines, based on an updated processing requirement of the XR call, a processing capability of the UE #1, and a processing capability of the OTT server (optional), the rendering division for the to-be-rendered XR object in the XR call. This step is similar to step 1311, and details are not described again.

1343: The UE #1 sends a session update call response to the OTT server, where the session update call response includes division acknowledgement request information, and the division acknowledgement request information is used to request the OTT server to accept the updated rendering division.

Step 1343 is similar to step 1312, and details are not described again.

1344: The OTT server accepts the updated rendering division and updates a rendering resource.

For example, the OTT server re-determines, based on the division acknowledgement request information included in the session update call response, a to-be-rendered XR object that needs to be rendered by the OTT server, and updates the rendering resource based on the to-be-rendered XR object that needs to be rendered by the OTT server. It may be understood that in this step, the OTT server may reuse the computing power resource reserved or allocated in step 1324, or may reallocate a computing power resource. The reallocated computing power resource may be different from the computing power resource reserved or allocated in step 1324.

1345: The OTT server sends division acknowledgement response information to the UE #1, where the division acknowledgement response information indicates that the OTT server accepts the updated rendering division.

The foregoing provides example descriptions with reference to four scenarios. Regardless of the foregoing scenario, after the UE #1 receives the division acknowledgement response information, the following steps may be included.

1351: The UE #1 sends, to the OTT server, a to-be-rendered XR object that the OTT server is responsible for rendering.

For example, the UE #1 sends, to the OTT server based on the rendering division for the to-be-rendered XR object in the XR call, the to-be-rendered XR object that the OTT server is responsible for rendering.

1352: The OTT server renders the to-be-rendered XR object that the OTT server is responsible for rendering.

1353: The UE #1 renders a to-be-rendered XR object that the UE #1 is responsible for rendering.

1354: The UE #1 sends media data corresponding to a rendered XR object to the OTT server.

After completing rendering, the UE #1 sends, to the OTT server, the media data corresponding to the rendered XR object.

1355: The OTT server merges the media data corresponding to the XR object rendered by the UE #1 and media data corresponding to the XR object rendered by the OTT server, to obtain merged media data.

1356: The OTT server sends the merged media data to the UE #2.

Step 1351 to step 1356 are similar to step 522 to step 527, and details are not described herein again.

It may be understood that the foregoing method 1300 is mainly described by using the OTT server as an example. As described above, the OTT server may include a signaling server (or referred to as an OTT signaling server), a media processing server (or referred to as an OTT media server or an OTT media processing server), and a routing server. Different servers may perform different functions. In an example, the first network device is a signaling server, and the second network device is a media processing server. For details, refer to the description of the method 1100 or 1200. Details are not described herein again.

Based on the foregoing technical solution, when the terminal device registers with the OTT server, the OTT server may notify the terminal device of the processing capability of the OTT server and the service indication information. When determining that required XR object rendering computing power exceeds available rendering computing power of the terminal device, and determining that the OTT server supports XR object rendering, the terminal device determines the rendering division, and may include the division acknowledgement request information in a call request, to request to perform rendering negotiation. The OTT server may determine, based on the division acknowledgement request information, that the OTT server is to assist the terminal device in completing XR object rendering, and notify the terminal device, and the OTT server reserves a media rendering resource. The terminal device may send data to be rendered by the OTT server to the OTT server based on a rendering negotiation result. Finally, the OTT server or another device may merge the media data corresponding to the XR object rendered by the OTT server and the media data corresponding to the XR object rendered by the terminal device, and send the merged media data to the UE #2 in the current session. In addition, if a media rendering task may need to be redivided due to some cases in a session process, for example, a change in the processing requirement of the XR call, the terminal device or the OTT server may initiate a session update request, and re-perform rendering negotiation based on an updated processing requirement of the XR call.

It may be understood that, in the solution shown in FIG. 13A and FIG. 13B, an example in which the OTT server merges the media data corresponding to the XR object rendered by the UE #1 and the media data corresponding to the XR object rendered by the OTT server is used for description. This is not limited. For example, the UE #2 may alternatively perform merging processing. For example, the UE #1 sends the media data corresponding to the rendered XR object to the UE #2, and the OTT server sends the media data corresponding to the rendered XR object to the UE #2. The UE #2 performs merging processing. For another example, another device may alternatively perform merging processing, and details are not described again.

It may be understood that the examples in FIG. 5A and FIG. 5B to FIG. 8A and FIG. 8B/FIG. 10A and FIG. 10B to FIG. 13A and FIG. 13B in embodiments of this application are merely intended to help a person skilled in the art understand embodiments of this application, but are not intended to limit embodiments of this application to specific scenarios in the examples. It is clear that a person skilled in the art can make various equivalent modifications or changes according to the examples in FIG. 5A and FIG. 5B to FIG. 8A and FIG. 8B/FIG. 10A and FIG. 10B to FIG. 13A and FIG. 13B, and such modifications or changes also fall within the scope of embodiments of this application.

It may be further understood that the steps in FIG. 5A and FIG. 5B to FIG. 8A and FIG. 8B/FIG. 10A and FIG. 10B to FIG. 13A and FIG. 13B are merely examples for description, and are not strictly limited. In addition, sequence numbers of the foregoing processes do not mean a sequence of execution. The sequence of execution of the processes should be determined according to functions and internal logic of the processes, and should not constitute any limitation on an implementation process of embodiments of this application. For example, in the procedures shown in FIG. 5A and FIG. 5B to FIG. 8A and FIG. 8B, a sequence of rendering the to-be-rendered XR object by the network device and rendering the to-be-rendered XR object by the terminal device is not limited. Step 523 and step 524 are used as an example. Step 523 and step 524 may be performed simultaneously; or step 523 may be performed before step 524; or step 524 may be performed before step 523.

It may be further understood that in some of the foregoing embodiments, a network element in an existing network architecture is mainly used as an example for description. It should be understood that a specific form of the network element is not limited in embodiments of this application. For example, all network elements that can implement a same function in the future are applicable to embodiments of this application.

It may be further understood that, in some of the foregoing embodiments, the XR call is mentioned a plurality of times, and the XR call may be, for example, an AR call (AR communication).

It may be further understood that, in some of the foregoing embodiments, the rendered XR object and the XR object rendered are sometimes used alternately, and have a same meaning. Similarly, the to-be-rendered XR object and the XR object to be rendered are sometimes used alternately, and have a same meaning.

It may be further understood that, in some of the foregoing embodiments, sending of the processing requirement of the XR call is mentioned a plurality of times, and may include sending information about the processing requirement of the XR call (that is, directly sending information about the processing requirement of the XR call), or may include sending information for determining the processing requirement of the XR call (that is, sending some information, where the information may be used to determine the processing requirement of the XR call).

It may be further understood that, in some of the foregoing embodiments, sending media data may be replaced with sending a video stream.

It may be further understood that, in some of the foregoing embodiments, sending processing capability and sending processing capability information are sometimes used alternately, and both means sending information about a processing capability. Sending processing capability information (or sending a processing capability) may include sending the processing capability information (that is, directly sending the processing capability information), or may include sending information for determining the processing capability (that is, sending some information, where the information may be used to determine the processing capability information).

It may be further understood that some message names in embodiments of this application do not limit the protection scope of embodiments of this application. For example, both the REINVITE message and the 200 For REINVITE message are examples for description, and the 200 For REINVITE message may be understood as a response message for the REINVITE message. For another example, the HTTP request message and the HTTP response message are named for differentiation, and both are HTTP messages. It may be understood that, an example in which A sends a message to B is used, and any message that can be used between A and B is applicable to embodiments of this application.

It may be further understood that, in some of the foregoing embodiments, sending a message is mentioned a plurality of times. For example, A sends a message to B. That A sends a message to B may include that A directly sends the message to B, or may include that A sends the message to B through another device or network element. This is not limited.

It may be further understood that some optional features in embodiments of this application may be independent of other features in some scenarios, or may be combined with other features in some scenarios. This is not limited.

It may be further understood that, in the foregoing method embodiments, the method and the operation implemented by the device may also be implemented by a component (for example, a chip or a circuit) of the device. This is not limited.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the method embodiments are also applicable to the following apparatus embodiments.

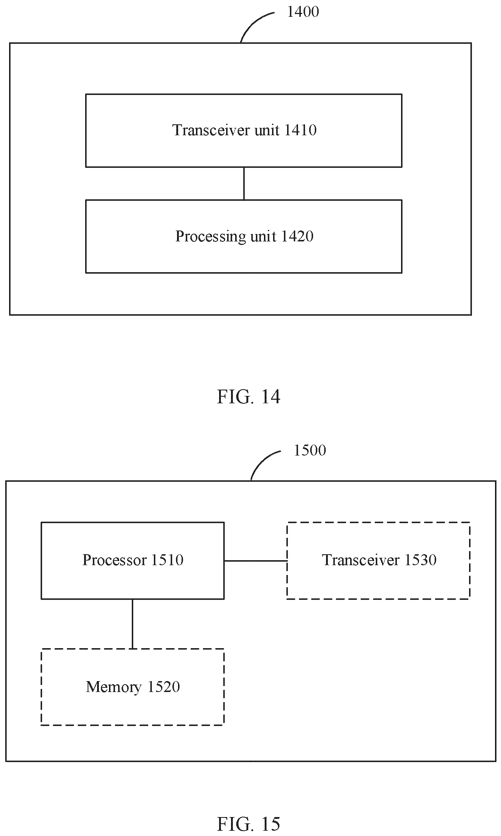

FIG. 14 is a schematic diagram of a communication apparatus 1400 according to an embodiment of this application. The apparatus 1400 includes a transceiver unit 1410 and a processing unit 1420. The transceiver unit 1410 may be configured to implement a corresponding communication function. The transceiver unit 1410 may also be referred to as a communication interface or a communication unit. The processing unit 1420 may be configured to perform a processing operation, for example, determine a rendering manner.

Optionally, the apparatus 1400 further includes a storage unit. The storage unit may be configured to store instructions and/or data. The processing unit 1420 may read the instructions and/or the data in the storage unit, so that the apparatus implements actions of the network device or terminal devices in the foregoing method embodiments.

In a first design, the apparatus 1400 may be the terminal device (for example, the terminal device in FIG. 4/9, or the UE in FIG. 5A and FIG. 5B to FIG. 8A and FIG. 8B/FIG. 10A and FIG. 10B to FIG. 13A and FIG. 13B) in the foregoing embodiments, or may be a component (for example, a chip) of the terminal device. The apparatus 1400 may implement the steps or procedures performed by the terminal device in the foregoing method embodiments. The transceiver unit 1410 may be configured to perform receiving and sending related operations (for example, operations of sending and/or receiving data or a message) of the terminal device in the foregoing method embodiments. For example, the transceiver unit 1410 may be configured to perform an operation of receiving the division indication information from the first network device in step 410 and an operation of sending the second portion of to-be-rendered XR objects to the second network device in step 420, and may be further configured to perform operations of sending and/or receiving data or a message by the UE in FIG. 5A and FIG. 5B to FIG. 8A and FIG. 8B. The processing unit 1420 may be configured to perform a processing related operation of the terminal device in the foregoing method embodiments, or an operation other than sending and receiving (for example, an operation other than sending and/or receiving data or a message). For example, the processing unit 1420 may be configured to perform an operation of rendering the to-be-rendered XR object that is to be rendered by the terminal device in the XR call in step 420 in FIG. 4. For another example, the processing unit 1420 may be configured to perform processing operations of the UE in FIG. 5A and FIG. 5B to FIG. 8A and FIG. 8B. For example, the processing unit 1420 may be configured to perform an operation of determining the rendering division in step 910 and an operation of rendering the to-be-rendered XR object that is to be rendered by the terminal device in the XR call in step 920 in FIG. 9. For another example, the processing unit 1420 may be configured to perform processing operations of the UE in FIG. 10A and FIG. 10B to FIG. 13A and FIG. 13B. The transceiver unit 1410 may be configured to perform an operation of sending the to-be-rendered object that is to be rendered by the second network device to the second network device in step 920, and may be further configured to perform operations of sending and/or receiving data or a message by the UE in FIG. 10A and FIG. 10B to FIG. 13A and FIG. 13B.

In a possible implementation, the processing unit 1420 is configured to determine or accept a rendering division, where the rendering division means that a portion of to-be-rendered XR objects in an XR call of the terminal device are to be rendered by the second network device, and the other portion of to-be-rendered XR objects in the XR call of the terminal device are to be rendered by the terminal device; the processing unit 1420 is further configured to render the to-be-rendered XR object that is to be rendered by the terminal device in the XR call, to obtain a rendered XR object; and the transceiver unit 1410 is configured to send, to the second network device, the to-be-rendered XR object that is to be rendered by the second network device in the XR call.

Optionally, the transceiver unit 1410 is configured to receive division indication information from the first network device, where the division indication information indicates that a portion of to-be-rendered XR objects in the XR call of the terminal device are to be rendered by a network-side rendering device, and/or the other portion of to-be-rendered XR objects in the XR call of the terminal device are to be rendered by the terminal device.

Optionally, the transceiver unit 1410 is further configured to send processing capability information of the terminal device to the first network device.

Optionally, the transceiver unit 1410 is specifically configured to send a registration message or a session call message to a third network device, to trigger the third network device to send the processing capability information of the terminal device to the first network device, where the registration message or the session call message includes the processing capability information of the terminal device.

Optionally, the processing capability information of the terminal device includes available rendering computing power of the terminal device; or the processing capability information of the terminal device includes available rendering computing power of the terminal device and a rendering division manner supported by the terminal device.

Optionally, the rendering division manner supported by the terminal device includes at least one of the following: division by layer and division by type.

Optionally, the available rendering computing power of the terminal device is determined by the terminal device based on a configuration of a computing resource of the terminal device, or the available rendering computing power of the terminal device is determined by the terminal device based on a remaining computing resource or an available computing resource of the terminal device.

Optionally, the transceiver unit 1410 is further configured to send processing requirement information of the XR call to the first network device.

Optionally, the processing requirement information of the XR call includes at least one of the following: information about a to-be-rendered XR object in the XR call, video resolution of the XR call, and a video frame rate of the XR call.

Optionally, the processing unit 1420 is configured to determine the rendering division based on at least one of the following: processing capability information of the terminal device, processing capability information of the second network device, and processing requirement information of the XR call.

Optionally, the transceiver unit 1410 is further configured to receive the processing capability information of the second network device from the first network device.

Optionally, the processing capability information of the second network device includes available rendering computing power of the second network device; or the processing capability information of the second network device includes available rendering computing power of the second network device and a rendering division manner supported by the second network device.

Optionally, the available rendering computing power of the second network device is determined based on a configuration of a computing resource of the second network device, or the available rendering computing power of the second network device is determined based on a remaining computing resource or an available computing resource of the second network device.

Optionally, the rendering division manner includes at least one of the following: division by layer and division by type.

Optionally, the transceiver unit 1410 is further configured to send division acknowledgement request information to the third network device, where the division acknowledgement request information is used to request to accept the rendering division, and the division acknowledgement request information includes information used to determine the to-be-rendered XR object that is to be rendered by the second network device in the to-be-rendered XR objects in the XR call.

Optionally, the transceiver unit 1410 is further configured to receive division acknowledgement response information from the first network device, where the division acknowledgement response information indicates that the rendering division is accepted. Optionally, the transceiver unit 1410 is further configured to obtain network-side service indication information, where the network-side service indication information indicates that the second network device can provide an XR object rendering service (that is, a capability of rendering the to-be-rendered XR object in the XR call).

Optionally, the transceiver unit 1410 is further configured to send the rendered XR object to the second network device.

Optionally, the division indication information includes the to-be-rendered XR object that is to be rendered by the terminal device in the XR call, and the processing unit 1420 is further configured to determine, based on the to-be-rendered XR objects in the XR call and the to-be-rendered XR object that is to be rendered by the terminal device in the XR call, the to-be-rendered XR object that is to be rendered by the second network device in the XR call.

Optionally, the division indication information includes the to-be-rendered XR object that is to be rendered by the second network device in the XR call, and the processing unit 1420 is further configured to determine, based on the to-be-rendered XR objects in the XR call and the to-be-rendered XR object that is to be rendered by the second network device in the XR call, the to-be-rendered XR object that is to be rendered by the terminal device in the XR call.

Optionally, the first network device is an XR control plane network element, and the second network device is an XR media plane network element; or the first network device is an application server, and the second network device is a media resource function network element (such as an MRF network element); or the first network device is an internet service signaling server, and the second network device is an internet service media server.

In a second design, the apparatus 1400 may be the first network device (for example, the first network device in the content in FIG. 4, the network device in FIG. 5A and FIG. 5B/FIG. 10A and FIG. 10B, the XR-C network element in FIG. 6A and FIG. 6B/FIG. 11A and FIG. 11B, the AS in FIG. 7A to FIG. 7C/FIG. 12A to FIG. 12C, or the OTT server in FIG. 8A and FIG. 8B/FIG. 13A and FIG. 13B) in the foregoing embodiments, or may be a component (for example, a chip) of the first network device. The apparatus 1400 may implement the steps or procedures performed by the first network device in the foregoing method embodiments. The transceiver unit 1410 may be configured to perform receiving and sending related operations (for example, operations of sending and/or receiving data or a message) of the first network device in the foregoing method embodiments. For example, the transceiver unit 1410 may be configured to perform an operation of sending the division indication information to the terminal device in step 410, may be further configured to perform operations of sending and/or receiving data or a message by the network device in FIG. 5A and FIG. 5B/FIG. 10A and FIG. 10B, may be further configured to perform operations of sending and/or receiving data or a message by the XR-C network element in FIG. 6A and FIG. 6B/FIG. 11A and FIG. 11B, may be further configured to perform operations of sending and/or receiving data or a message by the AS in FIG. 7A to FIG. 7C/FIG. 12A to FIG. 12C, and may be further configured to perform operations of sending and/or receiving data or a message by the OTT server in FIG. 8A and FIG. 8B/FIG. 13A and FIG. 13B. The processing unit 1420 may be configured to perform an operation related to data and/or information processing of the first network device in the foregoing method embodiments, or an operation other than sending and receiving (for example, an operation other than sending and/or receiving data or a message). For example, the processing unit 1420 may be configured to perform an operation related to data and/or information processing of the first network device in the content in FIG. 4, may be further configured to perform an operation related to data and/or information processing of the network device in FIG. 5A and FIG. 5B/FIG. 10A and FIG. 10B, may be further configured to perform an operation related to data and/or information processing of the XR-C network element in FIG. 6A and FIG. 6B/FIG. 11A and FIG. 11B, may be further configured to perform an operation related to data and/or information processing of the AS in FIG. 7A to FIG. 7C/FIG. 12A to FIG. 12C, and may be further configured to perform an operation related to data and/or information processing of the OTT server in FIG. 8A and FIG. 8B/FIG. 13A and FIG. 13B.

In a possible implementation, the processing unit 1420 is configured to determine or accept a rendering division, where the rendering division means that a portion of to-be-rendered objects in an XR call of a terminal device are to be rendered by a network-side rendering device, and the other portion of to-be-rendered XR objects in the XR call of the terminal device are to be rendered by the terminal device; and the transceiver unit 1410 is configured to trigger the terminal device to render the XR object that is to be rendered by the terminal device in the XR call, and a second network device to render the to-be-rendered XR object that is to be rendered by the second network device in the XR call.

Optionally, the transceiver unit 1410 is configured to send division indication information to the terminal device, where the division indication information indicates that a portion of to-be-rendered XR objects in the XR call of the terminal device are to be rendered by the second network device, and/or the other portion of to-be-rendered XR objects in the XR call of the terminal device are to be rendered by the terminal device.

Optionally, the processing unit 1420 is configured to: in response to determining that a processing capability of the terminal device cannot meet a processing requirement of the XR call, determine that the terminal device and the second network device respectively render portions of to-be-rendered XR objects in the XR call.

Optionally, the processing unit 1420 is specifically configured to determine the rendering division based on at least one of the following: processing capability information of the terminal device, processing capability information of the second network device, and processing requirement information of the XR call.

Optionally, the transceiver unit 1410 is further configured to receive the processing requirement information of the XR call from the terminal device.

Optionally, the processing requirement information of the XR call includes at least one of the following: information about a to-be-rendered XR object in the XR call, video resolution of the XR call, and a video frame rate of the XR call.

Optionally, the transceiver unit 1410 is further configured to receive the processing capability information of the terminal device from the terminal device.

Optionally, the processing capability information of the terminal device includes available rendering computing power of the terminal device; or the processing capability information of the terminal device includes available rendering computing power of the terminal device and a rendering division manner supported by the terminal device.

Optionally, the available rendering computing power of the terminal device is determined based on a configuration of a computing resource of the terminal device, or the available rendering computing power of the terminal device is determined based on a remaining computing resource or an available computing resource of the terminal device.

Optionally, the transceiver unit 1410 is further configured to receive the processing capability information of the second network device from the second network device.

Optionally, the transceiver unit 1410 is further configured to receive division acknowledgement request information from the terminal device, where the division acknowledgement request information is used to request to accept the rendering division, and the division acknowledgement request information includes information used to determine the to-be-rendered XR object that is to be rendered by the second network device in the to-be-rendered XR objects in the XR call; and the processing unit 1420 is specifically configured to accept the rendering division based on the division acknowledgement request information.

Optionally, the transceiver unit 1410 is further configured to send division acknowledgement response information to the terminal device, where the division acknowledgement response information indicates that the rendering division is accepted.

Optionally, the transceiver unit 1410 is further configured to send the processing capability information of the second network device to the terminal device.

Optionally, the processing capability information of the second network device includes available rendering computing power of the second network device; or the processing capability information of the second network device includes available rendering computing power of the second network device and a rendering division manner supported by the second network device.

Optionally, the available rendering computing power of the second network device is determined based on a configuration of a computing resource of the second network device, or the available rendering computing power of the second network device is determined based on a remaining computing resource or an available computing resource of the second network device.

Optionally, the rendering division manner includes at least one of the following: division by layer and division by type.

Optionally, the transceiver unit 1410 is further configured to send network-side service indication information to the terminal device, where the network-side service indication information indicates that the second network device can provide an XR object rendering service.

Optionally, the transceiver unit 1410 is further configured to: send a request message to the second network device, where the request message is used to request at least one of the following: address information of the second network device and rendering resource information of the second network device, the address information of the second network device is used to enable a terminal device related to the XR call to connect to the second network device through a network-side access device, and the rendering resource information is information about a resource used by the second network device to render the to-be-rendered XR object that is to be rendered by the second network device; and receive, from the second network device, a response to the request message.

Optionally, the request message includes computing power required for the XR object to be rendered by the second network device.

Optionally, the first network device is an XR control plane network element, and the second network device is an XR media plane network element; or the first network device is an application server, and the second network device is a media resource function network element; or the first network device is an internet service signaling server, and the second network device is an internet service media server.

In another possible implementation, the transceiver unit 1410 is configured to send a request message to a second network device, where the request message is used to request the second network device to render a to-be-rendered XR object that is to be rendered by the second network device in an XR call of a terminal device, and the request message includes computing power required for the to-be-rendered XR object that is to be rendered by the second network device. The transceiver unit 1410 is further configured to receive, from the second network device, a response to the request message, where the response to the request message is used to notify the first network device whether the second network device is to render the to-be-rendered XR object that is to be rendered by the second network device in the XR call.

Optionally, the transceiver unit 1410 is further configured to receive the processing capability information of the second network device from the second network device.

Optionally, the processing unit 1420 is configured to determine, based on the processing capability information of the second network device, the to-be-rendered XR object that is to be rendered by the second network device in the XR call.

Optionally, the processing capability information of the second network device includes available rendering computing power of the second network device; or the processing capability information of the second network device includes available rendering computing power of the second network device and a rendering division manner supported by the second network device.

Optionally, the available rendering computing power of the second network device is determined based on a configuration of a computing resource of the second network device, or the available rendering computing power of the second network device is determined based on a remaining computing resource or an available computing resource of the second network device.

Optionally, the first network device is an XR control plane network element, and the second network device is an XR media plane network element; or the first network device is an application server, and the second network device is a media resource function network element; or the first network device is an internet service signaling server, and the second network device is an internet service media server.

In a third design, the apparatus 1400 may be the second network device (for example, the second network device or the network-side rendering device in FIG. 4/9, the network device in FIG. 5A and FIG. 5B/FIG. 10A and FIG. 10B, the XR-M network element in FIG. 6A and FIG. 6B/FIG. 11A and FIG. 11B, the MRF network element in FIG. 7A to FIG. 7C/FIG. 12A to FIG. 12C, or the OTT server in FIG. 8A and FIG. 8B/FIG. 13A and FIG. 13B) in the foregoing embodiments, or may be a component (for example, a chip) of the second network device. The apparatus 1400 may implement the steps or procedures performed by the second network device in the foregoing method embodiments. The transceiver unit 1410 may be configured to perform receiving and sending related operations (for example, operations of sending and/or receiving data or a message) of the second network device in the foregoing method embodiments. For example, the transceiver unit 1410 may be configured to perform an operation of receiving the second portion of to-be-rendered XR objects in step 420 in FIG. 4 or step 920 in FIG. 9, may be further configured to perform operations of sending and/or receiving data or a message by the network device in FIG. 5A and FIG. 5B/FIG. 10A and FIG. 10B, may be further configured to perform operations of sending and/or receiving data or a message by the XR-M network element in FIG. 6A and FIG. 6B/FIG. 11A and FIG. 11B, may be further configured to perform operations of sending and/or receiving data or a message by the MRF network element in FIG. 7A to FIG. 7C/FIG. 12A to FIG. 12C, and may be further configured to perform operations of sending and/or receiving data or a message by the OTT server in FIG. 8A and FIG. 8B/FIG. 13A and FIG. 13B. The processing unit 1420 may be configured to perform an operation related to data and/or information processing of the second network device in the foregoing method embodiments, or an operation other than sending and receiving (for example, an operation other than sending and/or receiving data or a message). For example, the processing unit 1420 may be configured to perform an operation related to data and/or information processing of the second network device or the network-side rendering device in FIG. 4/9, may be further configured to perform an operation related to data and/or information processing of the network device in FIG. 5A and FIG. 5B/FIG. 10A and FIG. 10B, may be further configured to perform an operation related to data and/or information processing of the XR-M network element in FIG. 6A and FIG. 6B/FIG. 11A and FIG. 11B, may be further configured to perform an operation related to data and/or information processing of the MRF network element in FIG. 7A to FIG. 7C/FIG. 12A to FIG. 12C, and may be further configured to perform an operation related to data and/or information processing of the OTT server in FIG. 8A and FIG. 8B/FIG. 13A and FIG. 13B.

In a possible implementation, the transceiver unit 1410 is configured to receive a request message from a first network device, where the request message is used to request the second network device to render a to-be-rendered XR object that is to be rendered by the second network device in an XR call of a terminal device, and the request message includes computing power required for the to-be-rendered XR object that is to be rendered by the second network device in the XR call of the terminal device; and the transceiver unit 1410 is further configured to send a response to the request message to the first network device, where the response to the request message is used to notify the first network device whether the second network device is to render the to-be-rendered XR object that is to be rendered by the second network device in the XR call.

Optionally, the processing unit 1420 is configured to determine, based on the computing power required for the XR object to be rendered by the second network device, a resource required by the second network device to render the to-be-rendered XR object that is to be rendered by the second network device in the XR call.

Optionally, the transceiver unit 1410 is further configured to send processing capability information of the second network device to the first network device.

Optionally, the processing capability information of the second network device includes available rendering computing power of the second network device; or the processing capability information of the second network device includes available rendering computing power of the second network device and a rendering division manner supported by the second network device.

Optionally, the available rendering computing power of the second network device is determined based on a configuration of a computing resource of the second network device, or the available rendering computing power of the second network device is determined based on a remaining computing resource or an available computing resource of the second network device.

Optionally, the first network device is an XR control plane network element, and the second network device is an XR media plane network element; or the first network device is an application server, and the second network device is a media resource function network element; or the first network device is an internet service signaling server, and the second network device is an internet service media server.

It may be understood that a specific process in which the units perform the foregoing corresponding steps is described in detail in the foregoing method embodiments. For brevity, details are not described herein.

It may be understood that the apparatus 1400 herein is embodied in a form of a function unit. The term "unit" herein may refer to an application-specific integrated circuit (application-specific integrated circuit, ASIC), an electronic circuit, a memory and a processor (such as a shared processor, a dedicated processor, or a group of processors) configured to execute one or more software or firmware programs, a combined logic circuit, and/or another suitable component that supports the described function. In an optional example, a person skilled in the art may understand that the apparatus 1400 may be specifically the terminal device (for example, the terminal device in FIG. 4/9, or the UE in FIG. 5A and FIG. 5B to FIG. 8A and FIG. 8B/FIG. 10A and FIG. 10B to FIG. 13A and FIG. 13B) in the foregoing embodiments, and may be configured to perform procedures and/or steps corresponding to the terminal device in the foregoing method embodiments, for example, steps 410 and 420 in FIG. 4, steps performed by the UE in FIG. 5A and FIG. 5B to FIG. 8A and FIG. 8B, steps 910 and 920 in FIG. 9, and steps performed by the UE in FIG. 10A and FIG. 10B to FIG. 13A and FIG. 13B. Alternatively, the apparatus 1400 may be specifically the first network device (the first network device in the content in FIG. 4, the network device in FIG. 5A and FIG. 5B/FIG. 10A and FIG. 10B, the XR-C network element in FIG. 6A and FIG. 6B/FIG. 11A and FIG. 11B, the AS in FIG. 7A to FIG. 7C/FIG. 12A to FIG. 12C, or the OTT server in FIG. 8A and FIG. 8B/FIG. 13A and FIG. 13B) in the foregoing embodiments, and may be configured to perform procedures and/or steps corresponding to the first network device in the foregoing method embodiments, for example, step 410, steps performed by the network device in FIG. 5A and FIG. 5B/FIG. 10A and FIG. 10B, steps performed by the XR-C network element in FIG. 6A and FIG. 6B/FIG. 11A and FIG. 11B, steps performed by the AS in FIG. 7A to FIG. 7C/FIG. 12A to FIG. 12C, and steps performed by the OTT server in FIG. 8A and FIG. 8B/FIG. 13A and FIG. 13B. Alternatively, the apparatus 1400 may be specifically the second network device (for example, the second network device or the network-side rendering device in FIG. 4/9, the network device in FIG. 5A and FIG. 5B/FIG. 10A and FIG. 10B, the XR-M network element in FIG. 6A and FIG. 6B/FIG. 11A and FIG. 11B, the MRF network element in FIG. 7A to FIG. 7C/FIG. 12A to FIG. 12C, or the OTT server in FIG. 8A and FIG. 8B/FIG. 13A and FIG. 13B) in the foregoing embodiments, and may be configured to perform procedures and/or steps corresponding to the second network device in the foregoing method embodiments, for example, step 420 in FIG. 4, step 920 in FIG. 9, steps performed by the network device in FIG. 5A and FIG. 5B/FIG. 10A and FIG. 10B, steps performed by the XR-M network element in FIG. 6A and FIG. 6B/FIG. 11A and FIG. 11B, steps performed by the MRF network element in FIG. 7A to FIG. 7C/FIG. 12A to FIG. 12C, and steps performed by the OTT server in FIG. 8A and FIG. 8B/FIG. 13A and FIG. 13B. To avoid repetition, details are not described herein.

The apparatus 1400 in the foregoing solutions has a function of implementing corresponding steps performed by the terminal device (for example, the terminal device in FIG. 4/9, or the UE in FIG. 5A and FIG. 5B to FIG. 8A and FIG. 8B/FIG. 10A and FIG. 10B to FIG. 13A and FIG. 13B) in the foregoing method. Alternatively, the apparatus 1400 in the foregoing solutions has a function of implementing corresponding steps performed by the first network device (the first network device in the content in FIG. 4, the network device in FIG. 5A and FIG. 5B/FIG. 10A and FIG. 10B, the XR-C network element in FIG. 6A and FIG. 6B/FIG. 11A and FIG. 11B, the AS in FIG. 7A to FIG. 7C/FIG. 12A to FIG. 12C, or the OTT server in FIG. 8A and FIG. 8B/FIG. 13A and FIG. 13B) in the foregoing method. Alternatively, the apparatus 1400 in the foregoing solutions has a function of implementing corresponding steps performed by the second network device (for example, the second network device or the network-side rendering device in FIG. 4/9, the network device in FIG. 5A and FIG. 5B/FIG. 10A and FIG. 10B, the XR-M network element in FIG. 6A and FIG. 6B/FIG. 11A and FIG. 11B, the MRF network element in FIG. 7A to FIG. 7C/FIG. 12A to FIG. 12C, or the OTT server in FIG. 8A and FIG. 8B/FIG. 13A and FIG. 13B) in the foregoing method. The function may be implemented by using hardware, or may be implemented by using hardware executing corresponding software. The hardware or software includes one or more modules corresponding to the foregoing function. For example, the transceiver unit may be replaced with a transceiver (for example, a sending unit in the transceiver unit may be replaced with a transmitter, and a receiving unit in the transceiver unit may be replaced with a receiver), and another unit such as the processing unit may be replaced with a processor, to separately perform sending and receiving operations and related processing operations in the method embodiments.

In addition, the transceiver unit 1410 may alternatively be a transceiver circuit (for example, the transceiver circuit may include a receiver circuit and a transmitter circuit), and the processing unit may be a processing circuit.

It may be understood that the apparatus in FIG. 14 may be the device in the foregoing embodiments, or may be a chip or a chip system, for example, a system on a chip (system on a chip, SoC). The transceiver unit may be an input/output circuit or a communication interface. The processing unit is a processor, a microprocessor, or an integrated circuit integrated on the chip. This is not limited herein.

FIG. 15 is a schematic diagram of another communication apparatus 1500 according to an embodiment of this application. The apparatus 1500 includes a processor 1510. The processor 1510 is configured to execute a computer program or instructions stored in the memory 1520, or read data stored in the memory 1520, to perform the methods in the foregoing method embodiments. Optionally, there are one or more processors 1510.

Optionally, as shown in FIG. 15, the apparatus 1500 further includes the memory 1520. The memory 1520 is configured to store the computer program or instructions and/or data. The memory 1520 may be integrated with the processor 1510, or may be disposed separately. Optionally, there are one or more memories 1520.

Optionally, as shown in FIG. 15, the apparatus 1500 further includes a transceiver 1530. The transceiver 1530 is configured to receive a signal and/or send a signal. For example, the processor 1510 is configured to control the transceiver 1530 to receive a signal and/or send a signal.

In a solution, the apparatus 1500 is configured to implement operations performed by the terminal device (the terminal device in FIG. 4/9, or the UE in FIG. 5A and FIG. 5B to FIG. 8A and FIG. 8B/FIG. 10A and FIG. 10B to FIG. 13A and FIG. 13B) in the foregoing method embodiments.

In another solution, the apparatus 1500 is configured to implement operations performed by the first network device (the first network device in the content in FIG. 4, the network device in FIG. 5A and FIG. 5B/FIG. 10A and FIG. 10B, the XR-C network element in FIG. 6A and FIG. 6B/FIG. 11A and FIG. 11B, the AS in FIG. 7A to FIG. 7C/FIG. 12A to FIG. 12C, or the OTT server in FIG. 8A and FIG. 8B/FIG. 13A and FIG. 13B) in the foregoing method embodiments.

In another solution, the apparatus 1500 is configured to implement operations performed by the second network device (for example, the second network device or the network-side rendering device in FIG. 4/9, the network device in FIG. 5A and FIG. 5B/FIG. 10A and FIG. 10B, the XR-M network element in FIG. 6A and FIG. 6B/FIG. 11A and FIG. 11B, the MRF network element in FIG. 7A to FIG. 7C/FIG. 12A to FIG. 12C, or the OTT server in FIG. 8A and FIG. 8B/FIG. 13A and FIG. 13B) in the foregoing method embodiments.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should be further noted that the memory described in this specification aims to include but is not limited to these memories and any memory of another proper type.

An embodiment of this application further provides a computer-readable storage medium. The computer-readable storage medium stores computer instructions used to implement the method performed by the terminal device (for example, the terminal device in FIG. 4/9, or the UE in FIG. 5A and FIG. 5B to FIG. 8A and FIG. 8B/FIG. 10A and FIG. 10B to FIG. 13A and FIG. 13B) in the foregoing method embodiments.

An embodiment of this application further provides a computer-readable storage medium. The computer-readable storage medium stores computer instructions used to implement the method performed by the first network device (for example, the first network device in the content in FIG. 4, the network device in FIG. 5A and FIG. 5B/FIG. 10A and FIG. 10B, the XR-C network element in FIG. 6A and FIG. 6B/FIG. 11A and FIG. 11B, the AS in FIG. 7A to FIG. 7C/FIG. 12A to FIG. 12C, or the OTT server in FIG. 8A and FIG. 8B/FIG. 13A and FIG. 13B) in the foregoing method embodiments.

An embodiment of this application further provides a computer-readable storage medium. The computer-readable storage medium stores computer instructions used to implement the method performed by the second network device (for example, the second network device or the network-side rendering device in FIG. 4/9, the network device in FIG. 5A and FIG. 5B/FIG. 10A and FIG. 10B, the XR-M network element in FIG. 6A and FIG. 6B/FIG. 11A and FIG. 11B, the MRF network element in FIG. 7A to FIG. 7C/FIG. 12A to FIG. 12C, or the OTT server in FIG. 8A and FIG. 8B/FIG. 13A and FIG. 13B) in the foregoing method embodiments.

An embodiment of this application further provides a computer program product, including instructions. When the instructions are executed by a computer, the method performed by the terminal device (for example, the terminal device in FIG. 4/9, or the UE in FIG. 5A and FIG. 5B to FIG. 8A and FIG. 8B/FIG. 10A and FIG. 10B to FIG. 13A and FIG. 13B) in the foregoing method embodiments is implemented.

An embodiment of this application further provides a computer program product, including instructions. When the instructions are executed by a computer, the method performed by the first network device (for example, the first network device in the content in FIG. 4, the network device in FIG. 5A and FIG. 5B/FIG. 10A and FIG. 10B, the XR-C network element in FIG. 6A and FIG. 6B/FIG. 11A and FIG. 11B, the AS in FIG. 7A to FIG. 7C/FIG. 12A to FIG. 12C, or the OTT server in FIG. 8A and FIG. 8B/FIG. 13A and FIG. 13B) in the foregoing method embodiments is implemented.

An embodiment of this application further provides a computer program product, including instructions. When the instructions are executed by a computer, the method performed by the second network device (for example, the second network device or the network-side rendering device in FIG. 4/9, the network device in FIG. 5A and FIG. 5B/FIG. 10A and FIG. 10B, the XR-M network element in FIG. 6A and FIG. 6B/FIG. 11A and FIG. 11B, the MRF network element in FIG. 7A to FIG. 7C/FIG. 12A to FIG. 12C, or the OTT server in FIG. 8A and FIG. 8B/FIG. 13A and FIG. 13B) in the foregoing method embodiments is implemented.

An embodiment of this application further provides a communication system, including at least one of the foregoing terminal device (for example, the terminal device in FIG. 4/9, or the UE in FIG. 5A and FIG. 5B to FIG. 8A and FIG. 8B/FIG. 10A and FIG. 10B to FIG. 13A and FIG. 13B), the foregoing first network device (for example, the first network device in the content in FIG. 4, the network device in FIG. 5A and FIG. 5B/FIG. 10A and FIG. 10B, the XR-C network element in FIG. 6A and FIG. 6B/FIG. 11A and FIG. 11B, the AS in FIG. 7A to FIG. 7C/FIG. 12A to FIG. 12C, or the OTT server in FIG. 8A and FIG. 8B/FIG. 13A and FIG. 13B), and the foregoing second network device (for example, the second network device or the network-side rendering device in FIG. 4/9, the network device in FIG. 5A and FIG. 5B/FIG. 10A and FIG. 10B, the XR-M network element in FIG. 6A and FIG. 6B/FIG. 11A and FIG. 11B, the MRF network element in FIG. 7A to FIG. 7C/FIG. 12A to FIG. 12C, or the OTT server in FIG. 8A and FIG. 8B/FIG. 13A and FIG. 13B).

For explanations and beneficial effect of related content of any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semi-conductor medium (for example, a solid-state disk (solid state disk, SSD)), or the like. For example, the usable medium includes but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. An extended reality XR object rendering method, comprising:
determining or accepting, by a terminal device, a rendering division, wherein the rendering division means that a portion of to-be-rendered XR objects in an XR call of the terminal device are to be rendered by a network-side rendering device, and the other portion of to-be-rendered XR objects in the XR call of the terminal device are to be rendered by the terminal device; and
rendering, by the terminal device, the to-be-rendered XR object that is to be rendered by the terminal device in the XR call, and sending, to the network-side rendering device, information about the to-be-rendered XR object that is to be rendered by the network-side rendering device in the XR call.

2. The method according to claim 1, wherein the accepting, by a terminal device, a rendering division comprises:
receiving, by the terminal device, division indication information from a network-side control device, wherein the division indication information indicates that a portion of to-be-rendered XR objects in the XR call of the terminal device are to be rendered by the network-side rendering device, and/or the other portion of to-be-rendered XR objects in the XR call of the terminal device are to be rendered by the terminal device.

3. The method according to claim 2, wherein the method further comprises:
sending, by the terminal device, processing capability information of the terminal device to the network-side control device, wherein the processing capability information of the terminal device is used to determine the division indication information.

4. The method according to claim 3, wherein the sending, by the terminal device, processing capability information of the terminal device to the network-side control device comprises:
sending, by the terminal device, a registration message or a session call message to a network-side access device, to trigger the network-side access device to send the processing capability information of the terminal device to the network-side control device, wherein the registration message or the session call message comprises the processing capability information of the terminal device.

5. The method according to any one of claims 2 to 4, wherein the method further comprises:
sending, by the terminal device, processing requirement information of the XR call to the network-side control device.

6. The method according to claim 5, wherein the processing requirement information of the XR call comprises at least one of the following: information about a to-be-rendered XR object in the XR call, video resolution of the XR call, and a video frame rate of the XR call.

7. The method according to any one of claims 2 to 6, wherein
the division indication information comprises information about the to-be-rendered XR object that is to be rendered by the terminal device in the XR call, and the method further comprises: determining, by the terminal device based on the to-be-rendered XR objects in the XR call and the information about the to-be-rendered XR object that is to be rendered by the terminal device in the XR call, the to-be-rendered XR object that is to be rendered by the network-side rendering device in the XR call; or
the division indication information comprises the information about the to-be-rendered XR object that is to be rendered by the network-side rendering device in the XR call, and the method further comprises: determining, by the terminal device based on the to-be-rendered XR objects in the XR call and the information about the to-be-rendered XR object that is to be rendered by the network-side rendering device in the XR call, the to-be-rendered XR object that is to be rendered by the terminal device in the XR call; or
the division indication information comprises information about the to-be-rendered XR object that is to be rendered by the terminal device in the XR call and the information about the to-be-rendered XR object that is to be rendered by the network-side rendering device in the XR call.

8. The method according to claim 1, wherein the determining, by a terminal device, a rendering division comprises:
determining, by the terminal device, the rendering division based on at least one of the following:
processing capability information of the terminal device, processing capability information of the network-side rendering device, and processing requirement information of the XR call.

9. The method according to claim 8, wherein the method further comprises:
receiving, by the terminal device, the processing capability information of the network-side rendering device from a network-side control device.

10. The method according to any one of claims 3 to 9, wherein
the processing capability information of the terminal device comprises available rendering computing power of the terminal device; or
the processing capability information of the terminal device comprises available rendering computing power of the terminal device and a rendering division manner supported by the terminal device.

11. The method according to any one of claims 8 to 10, wherein
the processing capability information of the network-side rendering device comprises available rendering computing power of the network-side rendering device; or
the processing capability information of the network-side rendering device comprises available rendering computing power of the network-side rendering device and a rendering division manner supported by the network-side rendering device.

12. The method according to claim 10 or 11, wherein the rendering division manner comprises at least one of the following: division by layer and division by type.

13. The method according to any one of claims 8 to 12, wherein the method further comprises:
sending, by the terminal device, division acknowledgement request information to the network-side control device, wherein the division acknowledgement request information is used to request to accept the rendering division, and the division acknowledgement request information comprises information used to determine the to-be-rendered XR object that is to be rendered by the network-side rendering device in the to-be-rendered XR objects in the XR call.

14. The method according to claim 13, wherein the method further comprises:
receiving, by the terminal device, division acknowledgement response information from the network-side control device, wherein the division acknowledgement response information indicates that the rendering division is accepted.

15. The method according to any one of claims 1 to 14, wherein the method further comprises:
obtaining, by the terminal device, network-side service indication information, wherein the network-side service indication information indicates that the network-side rendering device is capable of providing an XR object rendering service.

16. The method according to any one of claims 1 to 15, wherein the method further comprises:
sending, by the terminal device, a rendered XR object to the network-side rendering device, wherein the rendered XR object is obtained by the terminal device by rendering the to-be-rendered XR object that is to be rendered by the terminal device in the XR call.

17. The method according to any one of claims 1 to 16, wherein
the network-side control device is an XR control plane network element, and the network-side rendering device is an XR media plane network element; or
the network-side control device is an application server, and the network-side rendering device is a media resource function network element; or
the network-side control device is an internet service signaling server, and the network-side rendering device is an internet service media server.

18. An extended reality XR object rendering method, comprising:
determining or accepting, by a network-side control device, a rendering division, wherein the rendering division means that a portion of to-be-rendered objects in an XR call of a terminal device are to be rendered by a network-side rendering device, and the other portion of to-be-rendered XR objects in the XR call of the terminal device are to be rendered by the terminal device; and
triggering, by the network-side control device, the terminal device to render the XR object that is to be rendered by the terminal device in the XR call, and the network-side rendering device to render the to-be-rendered XR object that is to be rendered by the network-side rendering device in the XR call.

19. The method according to claim 18, wherein the determining, by a network-side control device, a rendering division comprises:
determining, by the network-side control device, the rendering division based on at least one of the following:
processing capability information of the terminal device, processing capability information of the network-side rendering device, and processing requirement information of the XR call.

20. The method according to claim 19, wherein the method further comprises:
receiving, by the network-side control device, the processing requirement information of the XR call from the terminal device.

21. The method according to claim 19 or 20, wherein the processing requirement information of the XR call comprises at least one of the following: information about a to-be-rendered XR object in the XR call, video resolution of the XR call, and a video frame rate of the XR call.

22. The method according to claim 19, wherein the triggering, by the network-side control device, the terminal device to render the XR object that is to be rendered by the terminal device in the XR call, and the network-side rendering device to render the to-be-rendered XR object that is to be rendered by the network-side rendering device in the XR call comprises:
sending, by the network-side control device, division indication information to the terminal device, wherein the division indication information indicates that a portion of to-be-rendered XR objects in the XR call of the terminal device are to be rendered by the network-side rendering device, and/or the other portion of to-be-rendered XR objects in the XR call of the terminal device are to be rendered by the terminal device.

23. The method according to any one of claims 18 to 22, wherein the method further comprises:
receiving, by the network-side control device, the processing capability information of the terminal device from the terminal device.

24. The method according to any one of claims 19 to 23, wherein
the processing capability information of the terminal device comprises available rendering computing power of the terminal device; or
the processing capability information of the terminal device comprises available rendering computing power of the terminal device and a rendering division manner supported by the terminal device.

25. The method according to any one of claims 18 to 24, wherein the method further comprises:
receiving, by the network-side control device, the processing capability information of the network-side rendering device from the network-side rendering device.

26. The method according to any one of claims 22 to 25, wherein the division indication information comprises at least one of the following: information about the to-be-rendered XR object that is to be rendered by the terminal device in the XR call and information about the to-be-rendered XR object that is to be rendered by the network-side rendering device in the XR call.

27. The method according to claim 18, wherein the accepting, by a network-side control device, a rendering division comprises:
receiving, by the network-side control device, division acknowledgement request information from the terminal device, wherein the division acknowledgement request information is used to request to accept the rendering division, and the division acknowledgement request information comprises information used to determine the to-be-rendered XR object that is to be rendered by the network-side rendering device in the to-be-rendered XR objects in the XR call; and
accepting, by the network-side control device, the rendering division based on the division acknowledgement request information.

28. The method according to claim 27, wherein the triggering, by the network-side control device, the terminal device to render the XR object that is to be rendered by the terminal device in the XR call, and the network-side rendering device to render the to-be-rendered XR object that is to be rendered by the network-side rendering device in the XR call comprises:
sending, by the network-side control device, division acknowledgement response information to the terminal device, wherein the division acknowledgement response information indicates that the rendering division is accepted.

29. The method according to claim 27 or 28, wherein the method further comprises:
sending, by the network-side control device, processing capability information of the network-side rendering device to the terminal device.

30. The method according to any one of claims 19 to 26 and 29, wherein
the processing capability information of the network-side rendering device comprises available rendering computing power of the network-side rendering device; or
the processing capability information of the network-side rendering device comprises available rendering computing power of the network-side rendering device and a rendering division manner supported by the network-side rendering device.

31. The method according to claim 24 or 30, wherein the rendering division manner comprises at least one of the following: division by layer and division by type.

32. The method according to any one of claims 18 to 31, wherein the method further comprises:
sending, by the network-side control device, network-side service indication information to the terminal device, wherein the network-side service indication information indicates that the network-side rendering device is capable of providing an XR object rendering service.

33. The method according to any one of claims 18 to 32, wherein the method further comprises:
sending, by the network-side control device, a request message to the network-side rendering device, wherein the request message is used to request at least one of the following: address information of the network-side rendering device and rendering resource information of the network-side rendering device, wherein the address information of the network-side rendering device is used to enable the terminal device related to the XR call to connect to the network-side rendering device through a network-side access device, and the rendering resource information is information about a resource used by the network-side rendering device to render the to-be-rendered XR object that is to be rendered by the network-side rendering device; and
receiving, by the network-side control device from the network-side rendering device, a response to the request message.

34. The method according to claim 33, wherein the request message comprises computing power required for the XR object to be rendered by the network-side rendering device.

35. The method according to any one of claims 18 to 34, wherein
the network-side control device is an XR control plane network element, and the network-side rendering device is an XR media plane network element; or
the network-side control device is an application server, and the network-side rendering device is a media resource function network element; or
the network-side control device is an internet service signaling server, and the network-side rendering device is an internet service media server.

36. An extended reality XR object rendering method, comprising:
sending, by a network-side control device, a request message to a network-side rendering device, wherein the request message is used to request the network-side rendering device to render a to-be-rendered XR object that is to be rendered by the network-side rendering device in an XR call of a terminal device, and the request message comprises computing power required for the to-be-rendered XR object that is to be rendered by the network-side rendering device; and
receiving, by the network-side control device from the network-side rendering device, a response to the request message, wherein the response to the request message is used to notify the network-side control device whether the network-side rendering device is to render the to-be-rendered XR object that is to be rendered by the network-side rendering device in the XR call.

37. The method according to claim 36, wherein before the sending, by a network-side control device, a request message to a network-side rendering device, the method further comprises:
receiving, by the network-side control device, processing capability information of the network-side rendering device from the network-side rendering device.

38. The method according to claim 37, wherein the method further comprises:
determining, by the network-side control device based on the processing capability information of the network-side rendering device, the to-be-rendered XR object that is to be rendered by the network-side rendering device in the XR call.

39. The method according to claim 37 or 38, wherein
the processing capability information of the network-side rendering device comprises available rendering computing power of the network-side rendering device; or
the processing capability information of the network-side rendering device comprises available rendering computing power of the network-side rendering device and a rendering division manner supported by the network-side rendering device.

40. The method according to any one of claims 36 to 39, wherein
the network-side control device is an XR control plane network element, and the network-side rendering device is an XR media plane network element; or
the network-side control device is an application server, and the network-side rendering device is a media resource function network element; or
the network-side control device is an internet service signaling server, and the network-side rendering device is an internet service media server.

41. An extended reality XR object rendering method, comprising:
receiving, by a network-side rendering device, a request message from a network-side control device, wherein the request message is used to request the network-side rendering device to render a to-be-rendered XR object that is to be rendered by the network-side rendering device in an XR call of a terminal device, and the request message comprises computing power required for the to-be-rendered XR object that is to be rendered by the network-side rendering device; and
sending, by the network-side rendering device, a response to the request message to the network-side control device, wherein the response to the request message is used to notify the network-side control device whether the network-side rendering device is to render the to-be-rendered XR object that is to be rendered by the network-side rendering device in the XR call.

42. The method according to claim 41, wherein the method further comprises:
determining, by the network-side rendering device based on the computing power required for the XR object to be rendered by the network-side rendering device, a resource required by the network-side rendering device to render the to-be-rendered XR object that is to be rendered by the network-side rendering device in the XR call.

43. The method according to claim 41 or 42, wherein before the receiving, by a network-side rendering device, a request message from a network-side control device, the method further comprises:
sending, by the network-side rendering device, processing capability information of the network-side rendering device to the network-side control device.

44. The method according to claim 43, wherein
the processing capability information of the network-side rendering device comprises available rendering computing power of the network-side rendering device; or
the processing capability information of the network-side rendering device comprises available rendering computing power of the network-side rendering device and a rendering division manner supported by the network-side rendering device.

45. The method according to any one of claims 41 to 44, wherein
the network-side control device is an XR control plane network element, and the network-side rendering device is an XR media plane network element; or
the network-side control device is an application server, and the network-side rendering device is a media resource function network element; or
the network-side control device is an internet service signaling server, and the network-side rendering device is an internet service media server.

46. An extended reality XR object rendering method, comprising:
determining or accepting, by a network-side control device, a rendering division, wherein the rendering division means that a portion of to-be-rendered objects in an XR call of a terminal device are to be rendered by a network-side rendering device, and the other portion of to-be-rendered XR objects in the XR call of the terminal device are to be rendered by the terminal device;
determining or accepting, by the terminal device, the rendering division;
triggering, by the network-side control device, the terminal device to render the XR object that is to be rendered by the terminal device in the XR call, and the network-side rendering device to render the to-be-rendered XR object that is to be rendered by the network-side rendering device in the XR call; and
rendering, by the terminal device, the to-be-rendered XR object that is to be rendered by the terminal device in the XR call, and sending, to the network-side rendering device, information about the to-be-rendered XR object that is to be rendered by the network-side rendering device in the XR call.

47. The method according to claim 46, wherein the determining, by a network-side control device, a rendering division, and accepting, by the terminal device, the rendering division comprises:
determining, by the network-side control device, the rendering division based on at least one of the following:
processing capability information of the terminal device, processing capability information of the network-side rendering device, and processing requirement information of the XR call;
sending, by the network-side control device, division indication information to the terminal device, wherein the division indication information indicates that a portion of to-be-rendered XR objects in the XR call of the terminal device are to be rendered by the network-side rendering device, and/or the other portion of to-be-rendered XR objects in the XR call of the terminal device are to be rendered by the terminal device; and
receiving, by the terminal device, the division indication information from the network-side control device.

48. The method according to claim 47, wherein the method further comprises:
sending, by the terminal device, the processing capability information of the terminal device to the network-side control device, wherein the processing capability information of the terminal device is used to determine the division indication information; and
receiving, by the network-side control device, the processing capability information of the terminal device from the terminal device.

49. The method according to claim 47 or 48, wherein
the processing capability information of the terminal device comprises available rendering computing power of the terminal device; or
the processing capability information of the terminal device comprises available rendering computing power of the terminal device and a rendering division manner supported by the terminal device.

50. The method according to claim 48 or 49, wherein the sending, by the terminal device, the processing capability information of the terminal device to the network-side control device comprises:
sending, by the terminal device, a registration message or a session call message to a network-side access device, to trigger the network-side access device to send the processing capability information of the terminal device to the network-side control device, wherein the registration message or the session call message comprises the processing capability information of the terminal device.

51. The method according to any one of claims 47 to 50, wherein the method further comprises:
receiving, by the network-side control device, the processing capability information of the network-side rendering device from the network-side rendering device.

52. The method according to any one of claims 47 to 51, wherein the method further comprises:
sending, by the terminal device, the processing requirement information of the XR call to the network-side control device; and
receiving, by the network-side control device, the processing requirement information of the XR call from the terminal device.

53. The method according to claim 52, wherein the processing requirement information of the XR call comprises at least one of the following: information about a to-be-rendered XR object in the XR call, video resolution of the XR call, and a video frame rate of the XR call.

54. The method according to any one of claims 47 to 53, wherein
the division indication information comprises information about the to-be-rendered XR object that is to be rendered by the terminal device in the XR call, and the method further comprises: determining, by the terminal device based on the to-be-rendered XR objects in the XR call and the information about the to-be-rendered XR object that is to be rendered by the terminal device in the XR call, the to-be-rendered XR object that is to be rendered by the network-side rendering device in the XR call; or
the division indication information comprises the information about the to-be-rendered XR object that is to be rendered by the network-side rendering device in the XR call, and the method further comprises: determining, by the terminal device based on the to-be-rendered XR objects in the XR call and the information about the to-be-rendered XR object that is to be rendered by the network-side rendering device in the XR call, the to-be-rendered XR object that is to be rendered by the terminal device in the XR call; or
the division indication information comprises information about the to-be-rendered XR object that is to be rendered by the terminal device in the XR call and the information about the to-be-rendered XR object that is to be rendered by the network-side rendering device in the XR call.

55. The method according to claim 46, wherein the determining, by a terminal device, a rendering division, and accepting, by a network-side control device, the rendering division comprises:
determining, by the terminal device, the rendering division based on at least one of the following:
processing capability information of the terminal device, processing capability information of the network-side rendering device, and processing requirement information of the XR call.

56. The method according to claim 55, wherein the method further comprises:
sending, by the network-side control device, the processing capability information of the network-side rendering device to the terminal device; and
receiving, by the terminal device, the processing capability information of the network-side rendering device from the network-side control device.

57. The method according to claim 55 or 56, wherein
the processing capability information of the terminal device comprises available rendering computing power of the terminal device; or
the processing capability information of the terminal device comprises available rendering computing power of the terminal device and a rendering division manner supported by the terminal device.

58. The method according to any one of claims 55 to 57, wherein
the processing capability information of the network-side rendering device comprises available rendering computing power of the network-side rendering device; or
the processing capability information of the network-side rendering device comprises available rendering computing power of the network-side rendering device and a rendering division manner supported by the network-side rendering device.

59. The method according to claim 57 or 58, wherein the rendering division manner comprises at least one of the following: division by layer and division by type.

60. The method according to any one of claims 55 to 59, wherein the method further comprises:
sending, by the terminal device, division acknowledgement request information to the network-side control device, wherein the division acknowledgement request information is used to request to accept the rendering division, and the division acknowledgement request information comprises information used to determine the to-be-rendered XR object that is to be rendered by the network-side rendering device in the to-be-rendered XR objects in the XR call; and
receiving, by the network-side control device, the division acknowledgement request information from the terminal device.

61. The method according to claim 60, wherein the method further comprises:
sending, by the network-side control device, division acknowledgement response information to the terminal device, wherein the division acknowledgement response information indicates that the rendering division is accepted; and
receiving, by the terminal device, the division acknowledgement response information from the network-side control device.

62. The method according to any one of claims 46 to 61, wherein the method further comprises:
sending, by the network-side control device, network-side service indication information to the terminal device, wherein the network-side service indication information indicates that the network-side rendering device is capable of providing an XR object rendering service; and
obtaining, by the terminal device, the network-side service indication information.

63. The method according to any one of claims 46 to 62, wherein the method further comprises:
sending, by the terminal device, a rendered XR object to the network-side rendering device, wherein the rendered XR object is obtained by the terminal device by rendering the to-be-rendered XR object that is to be rendered by the terminal device in the XR call.

64. The method according to any one of claims 46 to 63, wherein the method further comprises:
sending, by the network-side control device, a request message to the network-side rendering device, wherein the request message is used to request at least one of the following: address information of the network-side rendering device and rendering resource information of the network-side rendering device, wherein the address information of the network-side rendering device is used to enable the terminal device related to the XR call to connect to the network-side rendering device through a network-side access device, and the rendering resource information is information about a resource used by the network-side rendering device to render the to-be-rendered XR object that is to be rendered by the network-side rendering device; and
receiving, by the network-side control device from the network-side rendering device, a response to the request message.

65. The method according to claim 64, wherein the request message comprises computing power required for the XR object to be rendered by the network-side rendering device.

66. The method according to any one of claims 45 to 65, wherein
the network-side control device is an XR control plane network element, and the network-side rendering device is an XR media plane network element; or
the network-side control device is an application server, and the network-side rendering device is a media resource function network element; or
the network-side control device is an internet service signaling server, and the network-side rendering device is an internet service media server.

67. An extended reality XR object rendering method, comprising:
sending, by a network-side control device, a request message to a network-side rendering device, wherein the request message is used to request the network-side rendering device to render a to-be-rendered XR object that is to be rendered by the network-side rendering device in an XR call of a terminal device, and the request message comprises computing power required for the to-be-rendered XR object that is to be rendered by the network-side rendering device;
receiving, by the network-side rendering device, the request message from the network-side control device;
sending, by the network-side rendering device, a response to the request message to the network-side control device, wherein the response to the request message is used to notify the network-side control device whether the network-side rendering device is to render the to-be-rendered XR object that is to be rendered by the network-side rendering device in the XR call; and
receiving, by the network-side control device from the network-side rendering device, the response to the request message.

68. The method according to claim 67, wherein the method further comprises:
determining, by the network-side rendering device based on the computing power required for the XR object to be rendered by the network-side rendering device, a resource required by the network-side rendering device to render the to-be-rendered XR object that is to be rendered by the network-side rendering device in the XR call.

69. The method according to claim 67 or 68, wherein before the sending, by a network-side control device, a request message to a network-side rendering device, the method further comprises:
sending, by the network-side rendering device, processing capability information of the network-side rendering device to the network-side control device; and
receiving, by the network-side control device, the processing capability information of the network-side rendering device from the network-side rendering device.

70. The method according to claim 68 or 69, wherein the method further comprises:
determining, by the network-side control device based on the processing capability information of the network-side rendering device, the to-be-rendered XR object that is to be rendered by the network-side rendering device in the XR call.

71. The method according to any one of claims 68 to 70, wherein
the processing capability information of the network-side rendering device comprises available rendering computing power of the network-side rendering device; or
the processing capability information of the network-side rendering device comprises available rendering computing power of the network-side rendering device and a rendering division manner supported by the network-side rendering device.

72. The method according to any one of claims 67 to 71, wherein
the network-side control device is an XR control plane network element, and the network-side rendering device is an XR media plane network element; or
the network-side control device is an application server, and the network-side rendering device is a media resource function network element; or
the network-side control device is an internet service signaling server, and the network-side rendering device is an internet service media server.

73. A communication apparatus, comprising a unit or module for performing the method according to any one of claims 1 to 17, or comprising a unit or module for performing the method according to any one of claims 18 to 35, or comprising a unit or module for performing the method according to any one of claims 36 to 40, or comprising a unit or module for performing the method according to any one of claims 41 to 45.

74. A communication apparatus, comprising at least one processor, wherein the at least one processor is configured to execute a computer program stored in a memory, so that the apparatus performs any one of the following:
the method according to any one of claims 1 to 17, the method according to any one of claims 18 to 35, the method according to any one of claims 36 to 40, or the method according to any one of claims 41 to 45.

75. A communication system, comprising a terminal device and a network device, wherein
the terminal device is configured to perform the method according to any one of claims 1 to 17, and the network device is configured to perform the method according to any one of claims 18 to 35.

76. A communication system, comprising a network-side control device and a network-side rendering device, wherein
the network-side control device is configured to perform the method according to any one of claims 36 to 40, and the network-side rendering device is configured to perform the method according to any one of claims 41 to 45.

77. A computer-readable storage medium, comprising a computer program, wherein
when the computer program is run on a computer, the computer is enabled to perform the method according to any one of claims 1 to 17; or
when the computer program is run on a computer, the computer is enabled to perform the method according to any one of claims 18 to 35; or
when the computer program is run on a computer, the computer is enabled to perform the method according to any one of claims 36 to 40; or
when the computer program is run on a computer, the computer is enabled to perform the method according to any one of claims 41 to 45.

78. A computer program product, wherein the computer program product comprises computer program code, wherein
when the computer program code is run on a computer, the computer is enabled to implement the method according to any one of claims 1 to 17; or
when the computer program code is run on a computer, the computer is enabled to implement the method according to any one of claims 18 to 35; or
when the computer program code is run on a computer, the computer is enabled to implement the method according to any one of claims 36 to 40; or
when the computer program code is run on a computer, the computer is enabled to implement the method according to any one of claims 41 to 45.

79. A communication apparatus, wherein the communication apparatus is configured to perform the method according to any one of claims 1 to 45.
